(19)

Europäisches Patentamt
European Patent Office
Office européen des brevets

(11) **EP 2 754 596 A1**

(12) **EUROPEAN PATENT APPLICATION**
published in accordance with Art. 153(4) EPC

(43) Date of publication:
**16.07.2014 Bulletin 2014/29**

(21) Application number: **12829817.1**

(22) Date of filing: **05.09.2012**

(51) Int Cl.:
*B60W 10/10* $^{(2012.01)}$　　*B60K 6/48* $^{(2007.10)}$
*B60K 6/547* $^{(2007.10)}$　*B60L 11/14* $^{(2006.01)}$
*B60W 10/08* $^{(2006.01)}$　*B60W 20/00* $^{(2006.01)}$
*F02D 29/02* $^{(2006.01)}$

(86) International application number:
**PCT/JP2012/072577**

(87) International publication number:
**WO 2013/035729 (14.03.2013 Gazette 2013/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2011 JP 2011193016**
　　　　　　**05.09.2011 JP 2011193021**
　　　　　　**05.09.2011 JP 2011193022**
　　　　　　**05.09.2011 JP 2011193024**

(71) Applicant: **Honda Motor Co., Ltd.**
**Minato-ku**
**Tokyo 107-8556 (JP)**

(72) Inventors:
• **KAWATA, Kohei**
**Wako-shi**
**Saitama 351-0193 (JP)**

• **HONMA, Yuki**
**Wako-shi**
**Saitama 351-0193 (JP)**
• **KURODA, Shigetaka**
**Wako-shi**
**Saitama 351-0193 (JP)**
• **YAMADA, Tetsuya**
**Wako-shi**
**Saitama 351-0193 (JP)**
• **YOKOO, Kentaro**
**Wako-shi**
**Saitama 351-0193 (JP)**

(74) Representative: **Beder, Jens**
**Mitscherlich PartmbB**
**Patent- und Rechtsanwälte**
**Sonnenstraße 33**
**80331 München (DE)**

(54) **HYBRID VEHICLE CONTROL DEVICE AND CONTROL METHOD**

(57)　To provide a control system and a control method for a hybrid vehicle, which make it possible to cause the hybrid vehicle to efficiently travel to thereby make it possible to improve fuel economy. A control system 1 for a hybrid vehicle V includes an ECU 2. The ECU 2 calculates four total efficiencies TE_eng, TE_ch, TE_asst, and TE_ev, using energy ENE_eng2 transmitted from an internal combustion engine 3 to drive wheels DW during operation of the engine 3, energy ENE_mot2 transmitted from an electric motor 4 to the drive wheels DW during operation of the electric motor 4, energy ENE_mot2 charged when motive power of the engine 3 is converted to electric energy by a power generating operation of the electric motor 4 during the operation of the engine 3, and energy assumed to be supplied to whole motive power sources 3 and 4 (ENE_eng1, ENE_eng1 + ENE_mot1, ENE_mot1) (step 2), and selects a travel mode which makes it possible to obtain the highest value of the four total efficiencies TE_eng, TE_ch, TE_asst, and TE_ev according to required torque TRQ and vehicle speed VP (step 3).

F I G. 3

```
      TRAVEL CONTROL
            │
            │           ┌─ S1
      CALCULATE TRQ
            │
            │           ┌─ S2
      CALCULATE OVERALL
      EFFICIENCY
            │
            │           ┌─ S3
      DETERMINE SPEED POSITION &
      TRAVEL MODE
            │
            │           ┌─ S4
      EXECUTE OPERATION CONTROL
            │
          E N D
```

**Description**

[Field of the Invention]

The present invention relates to a control system and a control method for a hybrid vehicle equipped with an internal combustion engine and an electric motor as motive power sources, and a stepped transmission mechanism, for controlling operations of the engine, the electric motor, and the transmission mechanism.

[Background Art]

Conventionally, as a control system for a hybrid vehicle, one disclosed in PTL 1 is known. This hybrid vehicle includes an internal combustion engine and an electric motor as motive power sources. Torque of the engine and the electric motor is transmitted to drive wheels via a stepped transmission mechanism. In this control system, during traveling of the hybrid vehicle, when a required driving force required for the drive wheels is increased by an accelerator pedal operation by a driver, control shown in FIG. 6 in PTL 1 is executed so as to improve fuel economy. In this case, when the required driving force cannot be attained by only an increase in the torque of the electric motor, one of prime mover cooperative controls A to D and the downshift control of the transmission are executed depending on to which of four regions A to D illustrated in FIG. 5 of PTL 1, the operating region of the engine corresponds (steps 110 to 170).

Further, conventionally, as a control system for a hybrid vehicle, one disclosed in PTL 2 is known. Travel modes of this hybrid vehicle include an ENG travel mode which uses an internal combustion engine alone as a motive power source, an EV travel mode which uses an electric motor alone as a motive power source, and an assist travel mode which uses both of the engine and the electric motor as motive power sources. Further, the hybrid vehicle is equipped with a first transmission mechanism having a first speed position, a third speed position, and a fifth speed position, and a second transmission mechanism having a second speed position, a fourth speed position, and a sixth speed position. The motive power of the engine (hereinafter referred to as the "engine motive power") is transmitted to the drive wheels in a state in which the speed thereof is changed in one of the first to sixth speed positions of the first or second transmission mechanism, and the motive power of the electric motor (hereinafter referred to as the "motor motive power") is transmitted to the drive wheels in a state in which the speed thereof is changed in one of the second, fourth, and sixth speed positions of the second transmission mechanism.

In this control system, when the vehicle speed of the hybrid vehicle is not higher than a predetermined value, the charge travel mode which uses regeneration by the electric motor and a battery in combination is selected, and the second speed position or the first speed position is selected as a speed position for the engine motive power, while the second speed position is selected as a speed position for the motor motive power. In a case where the selected speed position of the engine motive power is the second speed position, the engine motive power is transmitted to the electric motor via the second transmission mechanisms, whereas in case where the speed position of the engine motive power is the first speed position, the engine motive power is transmitted to the electric motor via the first transmission mechanism and the second transmission mechanism.

Further, a minimum fuel consumption torque which minimizes a fuel consumption ratio of the engine is set as a target torque of the engine based on the rotational speed of the engine determined by the selected speed position of the engine motive power and the rotational speed of the drive wheels. Then, the engine is operated such that the calculated target torque can be obtained, and electric power is generated by the electric motor using a surplus amount of the target torque with respect to a required torque, whereby the generated electric power is charged into the battery.

[Citation List]

[Patent Literature]

[PTL 1] Japanese Laid-Open Patent Publication No. 2010-100251
[PTL 2] Japanese Laid-Open Patent Publication No. 2009-173196

[Summary of Invention]

[Technical Problem]

According to the control system for a hybrid vehicle, disclosed in PTL 1, the operating region of the engine is determined by searching a map in FIG. 5 mentioned above, and this map is created by taking the fuel consumption ratio of the engine into account, so that it is possible to suppress the fuel consumption ratio of the engine by performing the various kinds of control described above. However, there arises a first problem that since the efficiency of the electric motor is not taken into account, if the control is executed under the condition of low efficiency of the electric motor even when the fuel consumption ratio of the engine is low, this can result in an increase in fuel consumed by the engine during traveling of the hybrid vehicle, causing degraded fuel economy.

Further, in general, the transmission mechanism having a plurality of speed positions has a characteristic that motive power transmission efficiency thereof is different depending on each speed position. In this regard, in the above-described control system described in PTL 2, the speed position of the transmission mechanism is selected only according to the vehicle speed, and hence there is a fear that it is impossible to obtain excellent fuel economy of the hybrid vehicle. Further, electric power supplied from the battery to the electric motor is electric power obtained by generating electric power by the electric motor using engine motive power. Therefore, in selecting the speed position, to take into account the driving efficiency of the electric motor during the assist travel mode and the power generation efficiency of the electric motor during the charge travel mode leads to obtaining excellent fuel economy of the hybrid vehicle. Here, the driving efficiency of the electric motor is a ratio between output torque and supplied electric energy, and the power generation efficiency of the electric motor is a ratio between generated electric energy and input torque. In this regard, there arises a second problem that in the conventional control system, since the speed position of the transmission mechanism is selected only according to the vehicle speed during the charge travel mode and the assist travel mode, there is a fear that it is impossible to obtain excellent fuel economy of the hybrid vehicle.

Furthermore, as described above, in the control system described in PTL 2, when the vehicle speed is not higher than the predetermined speed, the target torque of the engine is set to the minimum fuel consumption torque, and a surplus amount of the target torque with respect to the required torque is given as a divided portion to regeneration by the electric motor. This surplus torque is regenerated as electric energy by being used for power generation by the electric motor and charging of the battery. Then, in the EV travel mode or the assist travel mode, the surplus torque is used as the driving force of the hybrid vehicle by being discharged from the battery and being converted to mechanical energy. Therefore, if the efficiency on these processes (hereinafter referred to as the "electric motor-side efficiency") is low, the fuel consumption amount of the whole hybrid vehicle increases, which degrades fuel economy. Further, similarly to the fact that there is a minimum fuel consumption torque for the engine at which the fuel consumption ratio of the engine is minimized, there is a maximum efficiency torque for the electric motor at which the electric motor-side efficiency is maximized. Therefore, if the torque given as a divided portion to the electric motor largely deviates from the maximum efficiency torque, it is impossible to obtain a high electric motor-side efficiency.

Therefore, there arises a third problem that as in the case of the control system described in PTL 2, only by setting the target torque of the engine to the minimum fuel consumption torque and giving the surplus amount of the target torque with respect to the required torque as a divided portion to the electric motor, although the fuel consumption ratio of the engine becomes minimum, the electric motor-side efficiency is lowered, so that the efficiency of the whole hybrid vehicle does not necessarily become maximum, causing a fear that it is impossible to obtain best fuel economy of the hybrid vehicle. This problem is likely to appear when the ratio of the surplus amount of the torque with respect to the target torque of the engine is high.

Further, as described above, the motive power transmission path from the engine to the electric motor is different between a case where the speed position of the engine motive power is the first speed position and a case where the speed position of the engine motive power is the second speed position. The motive power transmission path is longer and the number of elements forming the motive power transmission path is larger in the case where the speed position is the second speed position. Therefore, normally, the efficiency of transmission of motive power from the engine to the electric motor is lower in the case of the second speed position. As described above, the efficiency of transmission of motive power from the engine to the electric motor is different according to a combination of the speed position of the engine motive power and the speed position of the motor motive power (speed-changing pattern), and accordingly, the fuel consumption ratio of the whole hybrid vehicle also changes. In this regard, there arises a fourth problem that in the control system described in PTL 2, when the vehicle speed is not higher than the predetermined value, the second position is automatically selected as the speed position of the motor motive power, and hence the fuel consumption ratio of the whole hybrid vehicle is not necessarily minimized, so that there is a fear that it is impossible to obtain best fuel economy of the hybrid vehicle.

The present invention has been made to provide a solution to the above-described first problem, and a first object thereof is to provide a control system and a control method for a hybrid vehicle, which make it possible to cause the hybrid vehicle to efficiently travel to thereby make it possible to improve fuel economy.

Further, the present invention has been made to provide a solution to the above-described second problem, and a second object thereof is to provide a control system for a hybrid vehicle, which is capable of properly selecting a speed position to thereby make it possible to improve the fuel economy of the hybrid vehicle.

Furthermore, the present invention has been made to provide a solution to the above-described third problem, and a third object of the invention is to provide a control system and a control method for a hybrid vehicle, which make it possible to improve the fuel economy of the hybrid vehicle by properly allocating driving force to be output, to an internal combustion engine and an electric motor, in an assist travel mode and a charge travel mode in which the engine and the electric motor are simultaneously operated.

Further, the present invention has been made to provide a solution to the above-described fourth problem, and a fourth object thereof is to provide a control system for a hybrid vehicle, which makes it possible to improve the fuel economy of the hybrid vehicle by properly selecting a speed-changing pattern which is a combination of a speed position for the motive power of the engine and a speed position for the motive power of the electric motor.

[Solution to Problem]

To attain the above first object, the invention according to claim 1 is a control system 1 for a hybrid vehicle V, V' including an internal combustion engine 3 and an electric motor 4 capable of generating electric power, as motive power sources, a storage battery (battery 52) capable of supplying and receiving electric power to and from the electric motor 4, and a transmission mechanism 11, 31, 71 capable of transmitting motive power of the engine 3 and the electric motor 4 to drive wheels DW while changing a speed of the motive power, the control system 1 comprising engine driving energy-calculating means (ECU 2) for calculating engine driving energy ENE_eng2 which is energy transmitted from the engine 3 to the drive wheels DW, using engine efficiency Eeng and driving efficiency Etm_d of the transmission mechanism, electric motor driving energy-calculating means (ECU 2) for calculating electric motor driving energy (driving/charging energy ENE_mot2) which is energy transmitted from the electric motor 4 to the drive wheels DW, using a past charge amount (past average charge amount ENE_chave) on which charging efficiency of the storage battery (battery 52) up to the current time point is reflected, charging/discharging efficiency Ebat_cd of the storage battery (battery 52), driving efficiency Emot_d of the electric motor 4, and driving efficiency Etm_d of the transmission mechanism, charging energy-calculating means (ECU 2) for calculating charging energy (driving/charging energy ENE_mot2) which is electric energy charged when charging of the storage battery (battery 52) is executed by converting the motive power of the engine 3 to electric power by the electric motor 4, using the engine efficiency Eeng, charging efficiency Etm_c of the transmission mechanism, charging efficiency Emot_c of the electric motor 4, and predicted efficiency Ehat, which is an efficiency to be exhibited when it is predicted that electric power in the storage battery (battery 52) is to be used, total efficiency parameter-calculating means (ECU 2, step 2) for calculating a plurality of total efficiency parameters (engine travel total efficiency TE_eng, charge travel total efficiency TE_ch, assist travel total efficiency TE_asst, EV travel total efficiency TE_ev), which are associated with a plurality of travel modes of the hybrid vehicle V, respectively, each indicative of total efficiency of the whole hybrid vehicle V using the engine driving energy ENE_eng2, the electric motor driving energy (driving/charging energy ENE_mot2), and the charging energy (driving/charging energy ENE_mot2), and travel mode-selecting means (ECU 2, steps 2, 3) for selecting a travel mode in which a traveling state parameter (required torque TRQ, vehicle speed VP) indicative of a traveling state of the hybrid vehicle V is high, from the plurality of travel modes.

According to this control system for the hybrid vehicle, the plurality of total efficiency parameters indicative of total efficiency of the whole hybrid vehicle, which are associated with a plurality of travel modes of the hybrid vehicle, respectively, are calculated using the engine driving energy, the electric motor driving energy, and the charging energy, and a travel mode in which a traveling state parameter indicative of a traveling state of the hybrid vehicle is high is selected from the plurality of travel modes. In this case, the engine driving energy is calculated using the engine efficiency and the driving efficiency of the transmission mechanism, and hence it is calculated as one accurately representing energy transmitted from the engine to the drive wheels during operation of the engine. Further, since the electric motor driving energy is calculated using a past charge amount which is a charge amount on which charging efficiency of the storage battery up to the current time is reflected, the charging/discharging efficiency of the storage battery, the driving efficiency of the electric motor, and the driving efficiency of the transmission mechanism, the electric motor driving energy is calculated as a value on which not only the state of energy transmitted from the electric motor to the drive wheels during operation of the electric motor but also a state of energy generated by fuel consumed for charging the storage battery up to the current time is accurately reflected.

Further, since the charging energy is calculated using the engine efficiency, the charging efficiency of the transmission mechanism, the charging efficiency of the electric motor, and the predicted efficiency, which is to be exhibited when it is predicted that electric power in the storage battery is to be used, the charging energy is calculated as a value which accurately represents electric energy charged when charging of the storage battery is performed by converting the motive power of the engine to electric power by the electric motor during operation of the engine. Therefore, by using such engine driving energy, electric motor driving energy, and charging energy described above, it is possible to calculate the plurality of total efficiency parameters as the those which accurately represent the total efficiency of the whole hybrid vehicle. Further, by selecting a travel mode in which the traveling state parameter indicative of the traveling state of the hybrid vehicle is high from the plurality of traveling modes, it is possible to cause the hybrid vehicle to travel in the travel mode which makes it possible to obtain the highest efficiency, whereby it is possible to improve fuel economy (note that the "total efficiency parameter" in the present specification is not limited to the total efficiency of the whole hybrid vehicle, but includes a value obtained by converting the total efficiency to a fuel consumption ratio, a value obtained by converting the total efficiency to a fuel consumption amount, and so on).

The invention according to claim 2 is the control system 1 according to claim 1, wherein the transmission mechanism has a plurality of speed positions, wherein the plurality of total efficiency parameters (engine travel total efficiency TE_eng, charge travel total efficiency TE_ch, assist travel total efficiency TE_asst, EV travel total efficiency TE_ev) are calculated for each of the speed positions of the transmission mechanism 11, 31, 71, wherein the plurality of travel modes include an engine travel mode in which the hybrid vehicle V is caused to travel by only the motive power of the engine 3, an EV travel mode in which the hybrid vehicle V is caused to travel by only the motive power of the electric motor 4, an assist travel mode in which the hybrid vehicle V is caused to travel by the motive power of the engine 3 and the motive power of the electric motor 4, and a charge travel mode in which driving of the drive wheels DW and charging of the storage battery (battery 52) by the electric motor 4 are simultaneously executed by the motive power of the engine 3, and wherein the travel mode-selecting means selects one of the engine travel mode, the EV travel mode, the assist travel mode, and the charge travel mode, as the travel mode, according to the traveling state parameter (required torque TRQ, vehicle speed VP) such that the highest value of a plurality of total efficiencies represented respectively by the plurality of total efficiency parameters (engine travel total efficiency TE_eng, charge travel total efficiency TE_ch, assist travel total efficiency TE_asst, EV travel total efficiency TE_ev) calculated for each of the speed positions, can be obtained (steps 2 and 3).

According to this control system, since one of the engine travel mode, the EV travel mode, the assist travel mode, and the charge travel mode is selected as the travel mode according to the traveling state parameter such that the highest value of the plurality of total efficiencies represented by the plurality of total efficiency parameters calculated for each of the speed positions, respectively, can be obtained, even in a hybrid vehicle equipped with the transmission mechanism having a plurality of speed positions, it is possible to cause the hybrid vehicle to travel in the most efficient state in a case where one of the engine travel mode, the EV travel mode, the assist travel mode, and the charge travel mode is executed, and thereby further improve fuel economy.

The invention according to claim 3 is the control system 1 according to claim 1, wherein the past charge amount (past average charge amount ENE_chave) is an averaged value of charge amounts calculated up to the current time point using a value (driving/charging energy ENE_mot2) obtained by converting an amount of fuel used for charging the storage battery (battery 52) to an amount of electric power, the engine efficiency Eeng, the charging efficiency Etm_c of the transmission mechanism, and the charging efficiency Emot_c of the electric motor 4.

According to this control system, since the past charge amount is an averaged value of charge amounts up to the current time, calculated using a value obtained by converting an amount of fuel used for charging the storage battery to an amount of electric power, the engine efficiency, the charging efficiency of the transmission mechanism, and the charging efficiency of the electric motor, it is possible to calculate the past charge amount as a value on which the charging efficiency of the storage battery up to the current time is accurately reflected. This makes it possible to further improve accuracy of calculation of the total efficiency parameters, and thereby improve fuel economy.

The invention according to claim 4 is the control system 1 according to claim 1, wherein the predicted efficiency Ehat is calculated using the charging/ discharging efficiency Ebat_cd of the storage battery (battery 52), the driving efficiency Emot_d of the electric motor 4, and the driving efficiency Etm_d of the transmission mechanism.

According to this control system, since the predicted efficiency is calculated using the charging/discharging efficiency of the storage battery, the driving efficiency of the electric motor, and the driving efficiency of the transmission mechanism, it is possible to calculate the predicted efficiency as a value accurately predicting efficiency to be exhibited when electric power charged into the storage battery is used as the motive power in the future. This makes it possible to further improve accuracy of calculation of the total efficiency parameters, and thereby further improve fuel economy.

To attain the above first object, the invention according to claim 5 is a control system 1 for a hybrid vehicle V, V' including an internal combustion engine 3 and an electric motor 4 capable of generating electric power, as motive power sources, a storage battery (battery 52) capable of supplying and receiving electric power to and from the electric motor 4, and a transmission mechanism 11, 31, 71 capable of transmitting motive power of the engine 3 and the electric motor 4 to drive wheels DW while changing a speed of the motive power using a plurality of speed positions, the control system 1 comprising past charge amount memory means (ECU 2) for memorizing an averaged value of values each obtained by converting an amount of fuel used, when charging of the storage battery by the electric motor 4 was executed by the motive power of the engine 3, for the charging of the storage battery, to an amount of electric power, as a past charge amount (past average charge amount ENE_chave), total efficiency parameter-calculating means (ECU 2, step 2) for calculating a plurality of total efficiency parameters (engine travel total efficiency TE_eng, charge travel total efficiency TE_ch, assist travel total efficiency TE_asst, EV travel total efficiency TE_ev) each indicative of total efficiency of the whole hybrid vehicle V for each of the speed positions, and calculating a total efficiency parameter of a travel mode (assist travel total efficiency TE_asst, EV travel total efficiency TE_ev) in which the drive wheels DW are driven by the motive power of the electric motor 4, using the stored past charge amount (past average charge amount ENE_chave), and travel mode-selecting means (ECU 2, steps 2 and 3) for selecting a travel mode in a speed position indicating the highest value of a plurality of total efficiencies represented respectively by the plurality of total efficiency parameters calculated for each of the speed positions, according to a traveling state parameter (required torque TRQ, vehicle speed VP) indicative of a traveling state of the hybrid vehicle V.

According to this control system, an averaged value of values obtained by converting an amount of fuel used for charging the storage battery when charging of the storage battery by the electric motor using motive power from the engine is executed to an amount of electric power is stored as the past charge amount, and the total efficiency parameters indicative of the total efficiency of the whole hybrid vehicle, which are associated with the plurality of travel modes of the hybrid vehicle, respectively, are calculated for each speed position. In this case, since the total efficiency parameter of a travel mode in which the drive wheels are driven by the motive power of the electric motor is calculated using the stored past charge amount, it is possible to accurately calculate the total efficiency parameter of the travel mode in which the drive wheels are driven by motive power of the electric motor. Further, since a travel mode in a speed position indicating the highest value of the plurality of total efficiencies represented by the plurality of total efficiency parameters, respectively, is selected according to the traveling state parameter indicative of the traveling state of the hybrid vehicle, it is possible to execute the travel mode in the speed position at which the total efficiency is maximum and thereby improve fuel economy.

To attain the above first object, the invention according to claim 6 is a control system 1 for a hybrid vehicle V including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to the drive wheels DW in a state in which a speed of the motive power is changed in one of a plurality of speed positions, a second transmission mechanism 31 that is capable of receiving motive power from the engine output shaft (crankshaft 3a) by a second input shaft 32, and transmitting the motive power to drive wheels DW in a state in which a speed of the motive power is changed in one of a plurality of speed positions, a first clutch C1 that is capable of engaging between the engine output shaft (crankshaft 3a) and the first transmission mechanism 11, and a second clutch C2 that is capable of engaging between the engine output shaft (crankshaft 3a) and the second transmission mechanism 31, the control system 1 comprising past charge amount memory means (ECU 2) for memorizing an averaged value of values each obtained by converting an amount of fuel used, when charging of the storage battery by the electric motor 4 was executed by the motive power of the engine 3, for the charging of the storage battery, to an amount of electric power, as a past charge amount (past average charge amount ENE_chave), total efficiency parameter-calculating means (ECU 2, step 2) for calculating a plurality of total efficiency parameters (engine travel total efficiency TE_eng, charge travel total efficiency TE_ch, assist travel total efficiency TE_asst, EV travel total efficiency TE_ev), which are associated with a plurality of travel modes of the hybrid vehicle V, respectively, each indicative of total efficiency of the whole hybrid vehicle V for each of the speed positions of the first transmission mechanism 11 and the second transmission mechanism 31, and calculating a total efficiency parameter of a travel mode in which the drive wheels are driven by the motive power of the electric motor, using the stored past charge amount, and travel mode-selecting means (ECU 2, steps 2 and 3) for selecting a travel mode in a speed position indicating the highest value of a plurality of total efficiencies represented respectively by the plurality of total efficiency parameters calculated for each of the speed positions, according to a traveling state parameter (required torque TRQ, vehicle speed VP) indicative of a traveling state of the hybrid vehicle.

According to this control system, an averaged value of values obtained by converting an amount of fuel used for charging the storage battery when charging of the storage battery by the electric motor using motive power from the engine is executed to an amount of electric power is stored as a past charge amount, and the total efficiency parameters indicative of total efficiency of the whole hybrid vehicle, which are associated with the plurality of travel modes of the hybrid vehicle, are calculated for each of the speed positions of the first transmission mechanism and the second transmission mechanism. In this case, since the total efficiency parameter of a travel mode in which the drive wheels are driven by the motive power of the electric motor is calculated using the stored past charge amount, it is possible to accurately calculate the total efficiency parameter of the travel mode in which the drive wheels are driven by the motive power of the electric motor. Further, since the travel mode in a speed position indicating the highest value of the plurality of total efficiencies represented by the plurality of total efficiency parameters, respectively, is selected according to the traveling state parameter indicative of a traveling state of the hybrid vehicle, it is possible to execute the travel mode in the speed position at which the total efficiency is maximized, and thereby improve fuel economy.

The invention according to claim 7 is the control system 1 according to any one of claims 1 to 5, further comprising charge amount-detecting means (ECU 2, current/voltage sensor 62) for detecting a charge amount (state of charge SOC) of the storage battery (battery 52) and correction means (ECU 2) for correcting, when the charge amount is not larger than a predetermined amount, operations of the engine 3, the electric motor 4, and the transmission mechanism 11, 31, 71, such that a time period over which an operation of charging the storage battery by the electric motor 4 is executed is made longer.

According to this control system, since when the charge amount is not larger than the predetermined amount, the operations of the engine, the electric motor, and the transmission mechanism are corrected, such that the time period over which the operation of charging the storage battery by the electric motor is executed is made longer, it is possible to quickly avoid shortage of the charge amount of the storage battery.

To attain the above first object, the invention according to claim 8 is a method of controlling a hybrid vehicle V, V' including an internal combustion engine 3 and an electric motor 4 capable of generating electric power, as motive power sources, a storage battery (battery 52) capable of supplying and receiving electric power to and from the electric motor 4, and a transmission mechanism 11, 31, 71 capable of transmitting motive power of the engine 3 and the electric motor 4 to drive wheels DW while changing a speed of the motive power, the method comprising calculating engine driving energy ENE_eng2 which is energy transmitted from the engine 3 to the drive wheels DW, using engine efficiency Eeng and driving efficiency Etm_d of the transmission mechanism (step 2), calculating electric motor driving energy (driving/charging energy ENE_mot2) which is energy transmitted from the electric motor 4 to the drive wheels DW, using a past charge amount (past average charge amount ENE_chave) which is a charge amount on which charging efficiency of the storage battery up to the current time point is reflected, charging/ discharging efficiency Ebat_cd of the storage battery (battery 52), driving efficiency Emot_d of the electric motor 4, and driving efficiency Etm_d of the transmission mechanism (step 2), calculating charging energy (driving/charging energy ENE_mot2) which is electric energy charged when charging of the storage battery (battery 52) is executed by converting the motive power of the engine 3 to electric power by the electric motor 4 during operation of the engine 3, using the engine efficiency Eeng, charging efficiency Etm_c of the transmission mechanism, charging efficiency Emot_c of the electric motor 4, and predicted efficiency Ehat, which is an efficiency to be exhibited when it is predicted that electric power in the storage battery (battery 52) is to be used (step 2), calculating a plurality of total efficiency parameters (engine travel total efficiency TE_eng, charge travel total efficiency TE_ch, assist travel total efficiency TE_asst, EV travel total efficiency TE_ev) each indicative of total efficiency of the hybrid vehicle V using the engine driving energy ENE_eng2, the electric motor driving energy (driving/charging energy ENE_mot2), and the charging energy (driving/charging energy ENE_mot2) (step 2), and selecting, according to a traveling state parameter (required torque TRQ, vehicle speed VP) indicative of a traveling state of the hybrid vehicle V, a travel mode which makes it possible to obtain the highest value of a plurality of total efficiencies represented respectively by the plurality of total efficiency parameters (engine travel total efficiency TE_eng, charge travel total efficiency TE_ch, assist travel total efficiency TE_asst, EV travel total efficiency TE_ev), from the plurality of travel modes (step 3).

According to this control method for the hybrid vehicle, it is possible to provide a control method which is capable of attaining the same advantageous effects as provided by the invention according to claim 1.

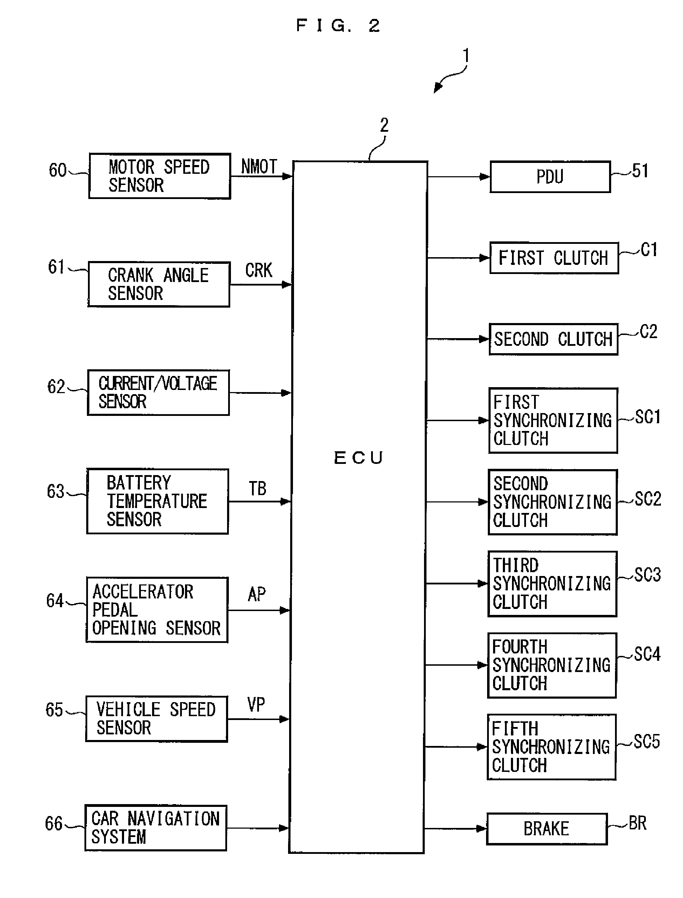

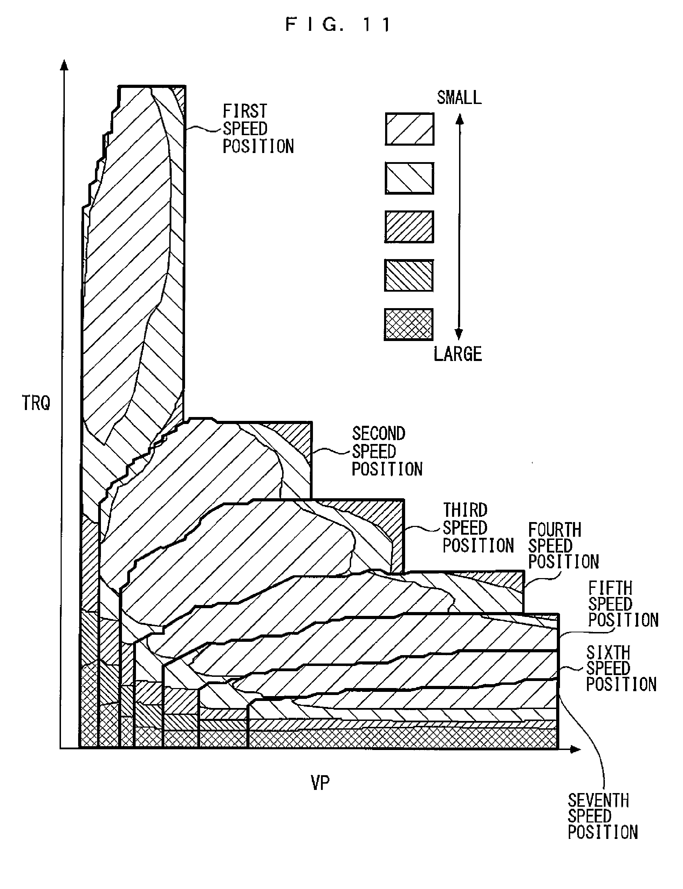

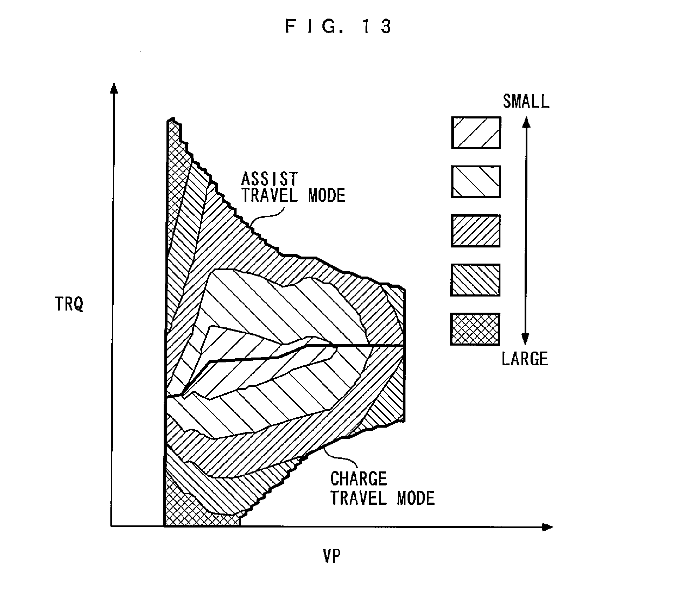

To attain the above second object, the invention according to claim 9 is a control system for a hybrid vehicle including an internal combustion engine 3, an electric motor 4 capable of generating electric power, a first transmission mechanism 11 that is capable of receiving motive power from an engine output shaft (crankshaft 3a in embodiments (the same applies hereinafter in this section)) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system 1 comprising memory means for memorizing a total fuel consumption map (FIG. 2) which defines total fuel consumption of the hybrid vehicle for each of the speed positions, first correction means for correcting the total fuel consumption map according to a difference in motive power transmission efficiency between the plurality of speed positions in at least one of the first and second transmission mechanisms, second correction means for correcting the total fuel consumption map according to at least one of power generation efficiency of the electric motor 4 to be exhibited when regeneration by the electric motor 4, using part of motive power of the engine 3, is performed, and driving efficiency of the electric motor 4 to be exhibited when assisting of the engine 3 by the electric motor 4 is performed, wherein a speed position at which the total fuel consumption is minimized is selected from the plurality of speed positions based on the corrected total fuel consumption map (FIG. 11, FIG. 13).

With this configuration, when the engine output shaft of the engine and the first input shaft of the first transmission mechanism are engaged with each other by the first clutch, and engagement between the engine output shaft and the second input shaft of the second transmission mechanism is released by the second clutch, the motive power of the engine is transmitted to the drive wheels in a state in which the speed thereof is changed in one of the speed positions of the first transmission mechanism. Further, when engagement between the engine output shaft and the first input shaft is released by the first clutch, and the engine output shaft and the second input shaft are engaged with each other by the second clutch, the motive power of the engine is transmitted to the drive wheels in a state in which the speed thereof is changed in one of the speed positions of the second transmission mechanism. Furthermore, the motive power of the electric motor is transmitted to the drive wheels in a state in which the speed thereof is changed in one of the speed positions of the first transmission mechanism.

Further, the total fuel consumption map which defines total fuel consumption of the hybrid vehicle for each speed position is memorized by the memory means, and is corrected by the first and second correction means.

Here, the total fuel consumption of the hybrid vehicle represents e.g. a ratio of a fuel amount to final traveling energy, calculated assuming that fuel as an energy source of the hybrid vehicle is finally converted to the traveling energy of the hybrid vehicle. Therefore, reduction of the total fuel consumption leads to improvement of the fuel economy of the hybrid vehicle. Further, the motive power transmission efficiencies of the first and second transmission mechanisms has influence on the total fuel consumption. Similarly, the power generation efficiency of the electric motor has influence on the total fuel consumption during regeneration by the electric motor using part of the motive power of the engine, and the driving efficiency of the electric motor has influence on the total fuel consumption during assistance of the engine by the electric motor.

In view of this, with the above-described configuration, since the total fuel consumption map is corrected by the first correction means according to a difference in motive power transmission efficiency between the plurality of speed positions of at least one of the first and second transmission mechanisms, it is possible to properly define the total fuel consumption according to the motive power transmission efficiency which is different depending on each speed position. Further, since the total fuel consumption map is corrected by the second correction means according to at least one of the power generation efficiency of the electric motor to be exhibited when regeneration by the electric motor using part of the motive power of the engine is performed, and the driving efficiency of the electric motor to be exhibited when assistance of the engine by the electric motor is performed, it is possible to properly define the total fuel consumption according to at least one of the power generation efficiency and the driving efficiency.

Further, since the speed position at which the total fuel consumption is minimized is selected from the plurality of speed positions based on the corrected total fuel consumption map, it is possible to properly select a speed position at which the total fuel consumption is minimized, according to the motive power transmission efficiency in each speed position, and the power generation efficiency and the driving efficiency of the electric motor, and thereby improve the fuel economy of the hybrid vehicle.

Further, the first and second transmission mechanisms are sometimes different in motive power transmission efficiency from each other, and in this case, it is possible to properly select a speed position using the properly defined total fuel consumption according to the motive power transmission efficiency of each speed position of the first and second transmission mechanisms, and hence it is possible to effectively obtain the above-described advantageous effects.

The invention according to claim 10 is the control system according to claim 9, wherein the electric motor 4 is driven by supplying electric power from a storage battery (battery 52), and wherein an amount by which assistance of the engine 3 by the electric motor 4 is limited is corrected according to at least one of an amount of electric power which can be supplied from the storage battery to the electric motor 4 and motive power which can be output of the electric motor 4.

With this configuration, the amount by which assistance of the engine by the electric motor is limited is corrected according to at least one of the amount of electric power which can be supplied from the storage battery to the electric motor (hereinafter referred to as the "suppliable electric power amount") and the motive power which can be output of the electric motor. As a consequence, when the suppliable electric power amount by the storage battery is small, or the motive power which can be output by the electric motor is small, it is possible to properly limit assistance of the engine by the electric motor.

The invention according to claim 11 is the control system according to claim 9, wherein the corrected total fuel consumption map is divided into regions for each speed position, and hysteresis is provided between up-shit use and down-shift use in each of the regions.

With this configuration, the corrected total fuel consumption map is divided into regions for each speed position, and hysteresis is provided between up-shit use and down-shift use in each of these regions. This makes it possible to prevent occurrence of hunting between up-shift and down-shift.

The invention according to claim 12 is the control system according to claim 9, wherein in a case where the hybrid vehicle V is traveling in a state in which the speed of the motive power of the engine 3 is changed by the second transmission mechanism 31, when selecting a speed position of the first transmission mechanism 11, a speed position at which the total fuel consumption is minimized is selected from the plurality of speed positions according to whether or not assistance or regeneration by the electric motor 4 should be performed.

With this configuration, in a case where the hybrid vehicle is traveling by transmission of the motive power of the engine by the second transmission mechanism to the drive wheels in a state in which the speed thereof is changed by the second transmission mechanism, when selecting a speed position of the first transmission mechanism, the speed position at which the total fuel consumption is minimized is selected from the plurality of speed positions according to whether or not assistance or regeneration by the electric motor should be performed. This makes it possible to select a speed position of the first transmission mechanism suitable for the assistance and regeneration by the electric motor. Therefore, for example, in a case where the speed position of the second transmission mechanism is the fourth speed position and also the third and fifth positions are set as the plurality of speed positions of the first transmission mechanism, the fifth speed position can be selected if the assistance by the electric motor is to be performed, and the third speed position can be selected if the regeneration is to be performed.

The invention according to claim 13 is the control system according to claim 9, wherein the travel modes of the hybrid vehicle include at least one of a paddle shift mode and a sport mode, and wherein when at least one of the paddle shift mode and the sport mode is selected as the travel mode, assistance of the engine 3 by the electric motor 4 is performed.

With this configuration, when the paddle shift mode and/or the sport mode are/is selected as the travel mode of the hybrid vehicle, i.e. when it is estimated that the driver is driving the hybrid vehicle with preference to a driving feeling or a feeling of acceleration, assistance of the engine by the motor is performed. This makes it possible to transmit torque larger than that corresponding to the selected travel mode to the drive wheels.

To attain the above second object, the invention according to claim 14 is a control system for a hybrid vehicle including an internal combustion engine 3, an electric motor 4 capable of generating electric power, a first transmission mechanism 11 that is capable of receiving motive power from an engine output shaft (crankshaft 3a in the embodiments (the same applies hereinafter in this section)) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31,
wherein speed positions/a speed position of the first and/or second transmission mechanism(s) 11, 31 are/is selected by searching a predetermined map (FIG. 13) in which total conversion efficiency of the hybrid vehicle V from fuel to traveling energy is defined for each of the speed positions, with respect to the traveling state of the hybrid vehicle according to loss in the engine 3, loss in the electric motor 4, loss in each speed position of the first and second transmission mechanisms 11, 31, according to a traveling state of the hybrid vehicle (vehicle speed VP, required torque TRQ).

With this configuration, when the engine output shaft of the engine and the first input shaft of the first transmission mechanism are engaged with each other by the first clutch, and the engagement between the engine output shaft and the second input shaft of the second transmission mechanism is released by the second clutch, the motive power of the engine is transmitted to the drive wheels in a state in which the speed of the motive power is changed in one of the plurality of speed positions of the first transmission mechanism. Further, when the engagement between the engine output shaft and the first input shaft is released by the first clutch, and the engine output shaft and the second input shaft are engaged with each other by the second clutch, the motive power of the engine is transmitted to the drive wheels in a state in which the speed of the motive power is changed in one of the plurality of speed positions of the second transmission mechanism. Further, the motive power of the electric motor is transmitted to the drive wheels in a state in which the speed of the motive power is changed in one of the plurality of speed positions of the first transmission mechanism.

Further, in the predetermined map, the total conversion efficiency of conversion of fuel to traveling energy in the hybrid vehicle is defined for each speed position with respect to the traveling state of the hybrid vehicle. Here, the total conversion efficiency is a ratio of energy corresponding to supplied fuel to final traveling energy assuming that fuel as an energy source of the hybrid vehicle is finally converted to the traveling energy of the hybrid vehicle, and in other words, corresponds to a reciprocal of the above-described total fuel consumption (ratio of the fuel amount to the final traveling energy). Therefore, improvement of the total conversion efficiency leads to improvement of fuel economy of the hybrid vehicle. Further, loss in the engine, loss in the electric motor, and loss in each speed position of the first and second transmission mechanisms have influence on the total conversion efficiency.

In this regard, with this configuration, since in the predetermined map, loss in the engine, loss in the electric motor, and loss in each speed position of the first and second transmission mechanisms are used as the parameters for defining the total conversion efficiency, it is possible to properly define the total conversion efficiency. Further, since speed positions/a speed position of the first and/or second transmission mechanism(s) are/is selected by searching the predetermined map according to the traveling state of the hybrid vehicle, it is possible to properly select a speed position at which the total conversion efficiency is maximized from the plurality of speed positions, and thereby improve the fuel economy of the hybrid vehicle.

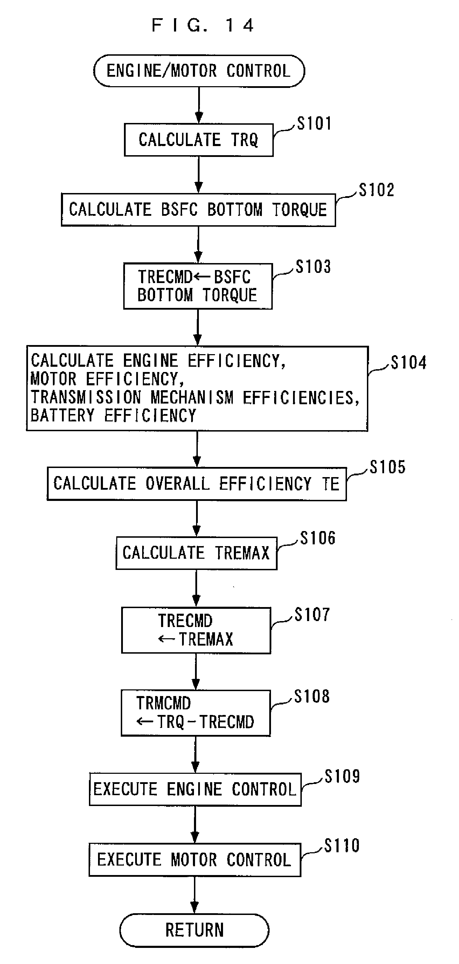

To attain the above third object, the invention according to claim 15 is a control system for a hybrid vehicle including an internal combustion engine 3, an electric motor 4 capable of generating electric power, a storage battery (battery 52 in the embodiments (the same applies hereinafter in this section)) capable of supplying and receiving electric power to and from the electric motor 4, a first transmission mechanism 11 that is capable of receiving motive power from an engine output shaft (crankshaft 3a) of the engine 3 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system comprising target driving force-setting means (ECU 2, step 103 in FIG. 14) for setting a target driving force (target torque TRECMD) of the engine 3 to an optimum point (BSFC bottom torque) at which fuel consumption of the engine 3 is minimized, based on a speed of the hybrid vehicle V (vehicle speed VP) and the speed position, target driving force-shifting means (ECU 2, steps 106 to 107) for shifting the target driving force of the engine 3 from the optimum point according to efficiency of the electric motor 4, engine control means (ECU 2, step 109) for controlling an operation of the engine 3 such that the shifted target driving force of the engine 3 can be obtained, and electric motor control means (ECU 2, step 110) for controlling an operation of the electric motor 4 to supplement/absorb a difference between a required driving force (required torque TRQ) required for the drive wheels DW and the shifted target driving force of the engine 3, by powering/regeneration by the electric motor 4.

With this configuration, when the engine output shaft of the engine and the first input shaft of the first transmission mechanism are engaged with each other by the first clutch, and the engagement between the engine output shaft and the second input shaft of the second transmission mechanism is released by the second clutch, the motive power of the engine is transmitted to the drive wheels in a state in which the speed of the motive power is changed in one of the plurality of speed positions of the first transmission mechanism. Further, when the engagement between the engine output shaft and the first input shaft is released by the first clutch, and the engine output shaft and the second input shaft are engaged with each other by the second clutch, the motive power of the engine is transmitted to the drive wheels in a state in which the speed of the motive power is changed in one of the plurality of speed positions of the second transmission mechanism. The motive power of the electric motor is transmitted to the drive wheels in a state in which the speed of the motive power is changed in one of the plurality of speed positions of the first transmission mechanism.

Further, the target driving force of the engine is set to an optimum point at which fuel consumption of the engine is minimized, based on the speed of the hybrid vehicle and the speed position. Furthermore, the target driving force of the engine is shifted from the optimum point according to efficiency of the electric motor. Then, the operation of the engine is controlled such that the shifted target driving force of the engine can be obtained, and the operation of the electric motor is controlled to supplement/absorb the difference between the required driving force and the shifted target driving force of the engine by powering/regeneration by the electric motor. Therefore, by properly allocating the driving force to be output to the engine and the electric motor, it is possible to improve the fuel economy of the hybrid vehicle while reducing fuel consumption of the engine.

The invention according to claim 16 is the control system according to claim 15, wherein when motive power of the engine 3 is being changed by the second transmission mechanism 31, one of the speed positions of the first transmission mechanism 11 which makes it possible to obtain a highest electric motor-side efficiency is selected as the speed position for the motive power of the electric motor 4.

In the hybrid vehicle of the invention according to claim 15, in a case where the speed of the motive power of the engine is being changed by the second transmission mechanism, a speed position which is different from the speed position for the motive power of the engine can be selected as a speed position of the first transmission mechanism for the motive power of the electric motor. The electric motor-side efficiency includes the discharging efficiency of the storage battery, the driving efficiency of the electric motor, and the motive power transmission efficiency of the first transmission mechanism, in a case where powering is performed by the electric motor, and includes the motive power transmission efficiency of the first transmission mechanism, the power generation efficiency of the electric motor, and the charging efficiency of the storage battery, in a case where regeneration is performed by the electric motor. Further, if the speed position of the first transmission mechanism for the motive power of the electric motor is different, the rotational speed of the electric motor accordingly changes, and hence the efficiency of the electric motor also changes. According to the present invention, when the speed of the motive power of the engine is changed by the second transmission mechanism, a speed position which makes it possible to obtain a highest electric motor-side efficiency is selected out of the speed positions of the first transmission mechanism as the speed position for the motive power of the electric motor. Therefore, it is possible to more efficiently perform powering or regeneration by the electric motor in a state in which the electric motor-side efficiency is highest.

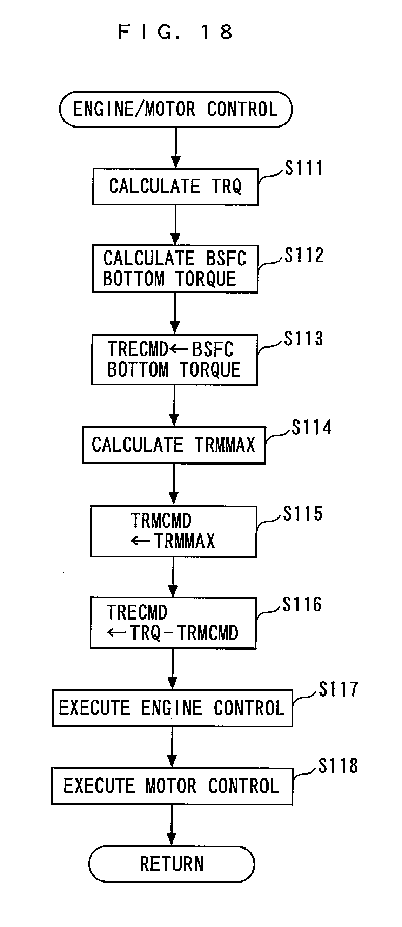

To attain the above third object, the invention according to claim 17 is a method of controlling a hybrid vehicle including an internal combustion engine 3, an electric motor 4 capable of generating electric power, a storage battery (battery 52 in the embodiments (the same applies hereinafter in this section)) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the method comprising setting a target driving force (target torque TRECMD) of the engine 3 to an optimum point (BSFC bottom torque) at which fuel consumption of the engine 3 is minimized, based on a speed of the hybrid vehicle V (vehicle speed VP) and a speed position for the engine 3 (step 113 in FIG. 18), setting a target driving force (target torque TRMCMD) of the electric motor 4 to an optimum point (maximum efficiency motor torque TRMMAX) at which efficiency of the electric motor 4 is maximized, based on the speed of the hybrid vehicle V and the speed position of the electric motor 4 (steps 114 to 115), shifting the target driving force of the engine 3 from the optimum point, based on a required driving force (required torque TRQ) required for the drive wheels DW and the set target driving force of the electric motor 4 (step 116), controlling an operation of the engine 3 such that the shifted target driving force of the engine 3 can be obtained (step 117), and controlling an operation of the electric motor 4 to supplement/absorb the target driving force of the electric motor 4 by powering/regeneration (step 118).

According to the present invention, it is possible to properly allocate the target driving forces of the engine and the electric motor while causing not only fuel consumption of the engine but also the efficiency of the electric motor to be reflected thereon, and thereby improve the fuel economy of the hybrid vehicle while reducing fuel consumption of the engine and loss in the electric motor.

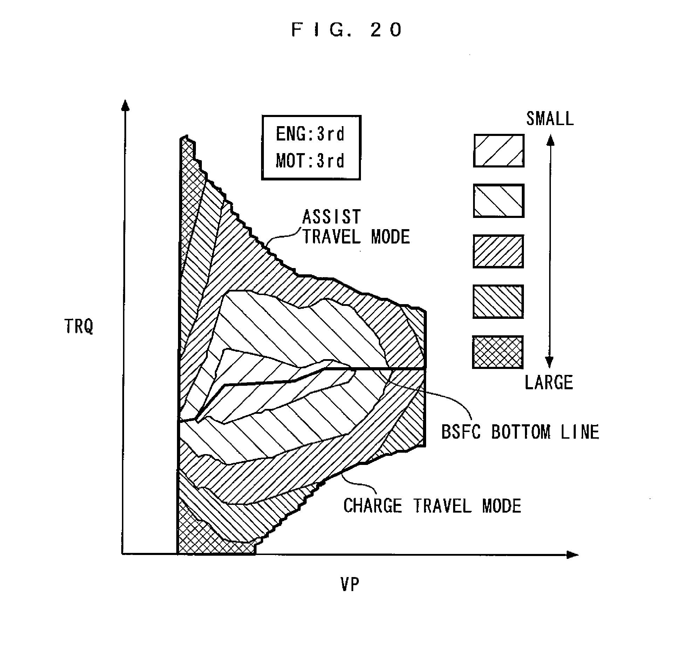

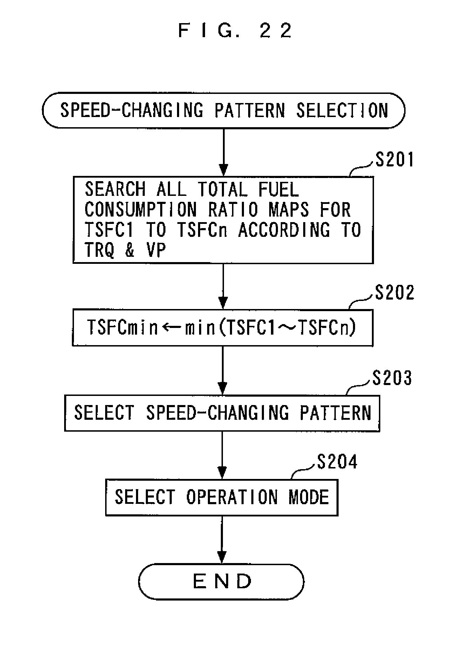

To attain the above fourth object, the invention according to claim 18 is a control system for a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a in the embodiments (the same applies hereinafter in this section)) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system comprising memory means (ECU 2, FIG. 20, FIG, 21) for memorizing a total fuel consumption map in which total fuel consumption (total fuel consumption ratio TSFC) of the hybrid vehicle V is defined for each speed-changing pattern which is a combination of a speed position for motive power of the engine 3 and a speed position for motive power of the electric motor 4, with respect to a speed of the hybrid vehicle V (vehicle speed VP) and a required driving force (required torque TRQ) required for the drive wheels DW, and speed-changing pattern-selecting means (ECU 2, step 203 in FIG. 22) for selecting, based on the total fuel consumption map, a speed-changing pattern which minimizes the total fuel consumption from the plurality of speed-changing patterns, according to the speed of the hybrid vehicle V and the required driving force.

According to this control system for the hybrid vehicle, when the engine output shaft of the engine and the first input shaft of the first transmission mechanism are engaged with each other by the first clutch, and the engagement between the engine output shaft and the second input shaft of the second transmission mechanism is released by the second clutch, the motive power of the engine is transmitted to the drive wheels in a state in which the speed of the motive power is changed in one of the plurality of speed positions of the first transmission mechanism. Further, when the engagement between the engine output shaft and the first input shaft is released by the first clutch, and the engine output shaft and the second input shaft are engaged with each other by the second clutch, the motive power of the engine is transmitted to the drive wheels in a state in which the speed of the motive power is changed in one of the plurality of speed positions of the second transmission mechanism. Further, the motive power of the electric motor is transmitted to the drive wheels in a state in which the speed of the motive power is changed in one of the plurality of speed positions of the second transmission mechanism.

Further, the memory means memorizes a total fuel consumption map. This total fuel consumption map defines total fuel consumption of the hybrid vehicle with respect to the speed of the hybrid vehicle and the required driving force demanded for the drive wheels for each speed position of the motive power of the engine. Further, the total fuel consumption represents a ratio of a fuel amount to final traveling energy assuming that fuel as an energy source of the hybrid vehicle is finally converted to the traveling energy of the hybrid vehicle. Therefore, the total fuel consumption reflects not only the fuel consumption of the engine but also the efficiencies of the electric motor and the storage battery to be exhibited when charge travel is performed, and as the value of the total fuel consumption is smaller, it indicates that the fuel economy of the hybrid vehicle is lower.

In the present invention, a speed-changing pattern which minimizes the total fuel consumption is selected from the plurality of speed-changing patterns, based on the total fuel consumption map according to the speed of the hybrid vehicle and the required driving force. Therefore, by driving the hybrid vehicle using the selected speed-changing pattern, it is possible to obtain the minimum total fuel consumption while causing a difference in the motive power transmission path, efficiencies of the electric motor and the storage battery in performing charge travel and assist travel, etc. to be reflected thereon and thereby improve the fuel economy of the hybrid vehicle.

The invention according to claim 19 is the control system according to claim 18, wherein the total fuel consumption is calculated using efficiency to be exhibited when the storage battery is charged by regeneration performed by the electric motor 4 using part of the motive power of the engine 3, and predicted efficiency to be exhibited when electric power charged in the storage battery is converted to the motive power of the electric motor 4.

With this configuration, the total fuel consumption is calculated using the efficiency to be exhibited when the storage battery is charged by regeneration by the electric motor, and predicted efficiency to be exhibited when electric power charged into the storage battery is converted to the motive power of the electric motor in the future. Therefore, it is possible to accurately calculate the total fuel consumption of the hybrid vehicle while reflecting these efficiencies.

The invention according to claim 20 is the control system according to claim 18, wherein in a state in which the first clutch C1 is disengaged, and the second clutch C2 is engaged, the motive power of the second input shaft 32 is transmitted to the first input shaft 13 via the second transmission mechanism 31 and the first transmission mechanism 11, and

wherein in a state in which the storage battery is being charged by regeneration performed by the electric motor 4 using part of the motive power of the engine 3, when the required driving force is not larger than a predetermined value TRQL, the speed-changing pattern-selecting means selects a speed-changing pattern in which a speed position for the motive power of the engine 3 is a speed position of the first transmission mechanism 11, from the plurality of speed-changing patterns.

With this configuration, when the speed of the motive power is changed by the second transmission mechanism, the motive power of the second input shaft is transmitted to the first input shaft via the second transmission mechanism and the first transmission mechanism. That is, the motive power of the engine output shaft is transmitted to the electric motor via both of the first and second transmission mechanisms. On the other hand, the motive power received by the first transmission mechanism from the engine output shaft is transmitted to the electric motor without via the second transmission mechanism. Therefore, loss of the motive power caused when regeneration is performed by the electric motor is smaller when the speed of the motive power of the engine is changed by a speed position of the first transmission mechanism by an amount corresponding to loss caused by transmission through the second transmission mechanism.

Further, regeneration by the electric motor is performed using the difference between the driving force of the engine and the required driving force. Therefore, as the required driving force is smaller, the driving force used for regeneration becomes larger, and loss of the motive power on the motive power transmission path from the engine to the electric motor also becomes larger.

In the present invention, in a state in which the storage battery is being charged by regeneration performed by the electric motor, when the required driving force is not larger than the predetermined value and the driving force used for regeneration is large, a speed-changing pattern in which the speed position for the motive power of the engine is a speed position of the first transmission mechanism is selected, and hence it is possible to reduce loss of the motive power, and reduce the influence of the loss, which makes it possible to improve the charging efficiency of the storage battery.

To attain the above fourth object, the invention according to claim 21 is a method of controlling a hybrid vehicle V including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a in the embodiments (the same applies hereinafter in this section)) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the method comprising memorizing a total fuel consumption map in which total fuel consumption (total fuel consumption ratio TSFC) of the hybrid vehicle V is defined for each speed-changing pattern which is a combination of a speed position for motive power of the engine 3 and a speed position for motive power of the electric motor 4, with respect to a speed of the hybrid vehicle V (vehicle speed VP) and a required driving force (required torque TRQ) required for the drive wheels DW, and selecting, based on the total fuel consumption map, a speed-changing pattern which minimizes the total fuel consumption from the plurality of speed-changing patterns, according to the speed of the hybrid vehicle V and the required driving force, wherein the total fuel consumption memorized in the total fuel consumption map is calculated using efficiency to be exhibited when the storage battery (battery 52) is charged by regeneration performed by the electric motor 4 using part of the motive power of the engine 3, and efficiency to be exhibited when electric power charged in the storage battery is converted to the motive power of the electric motor 4, wherein in a state in which the first clutch C1 is disengaged and also the second clutch C2 is engaged, motive power of the second input shaft 32 is transmitted to the first input shaft 13 via the second transmission mechanism 31 and the first transmission mechanism 11, and wherein in a state in which the storage battery is being charged by regeneration performed by the electric motor 4, when an output of the engine 3 is not larger than a predetermined value, a speed-changing pattern in which the speed position for the motive power of the engine is a speed position of the first transmission mechanism is selected from the plurality of speed-changing patterns.

With this configuration, it is possible to obtain the same advantageous effects as provided by the invention according to any of claims 18 to 20. That is, it is possible to obtain the advantageous effects that make it possible to properly select the speed-changing pattern according to the efficiencies of the electric motor and the storage battery and the required driving force, minimize the total fuel consumption, and improve the fuel economy of the hybrid vehicle.

The invention according to claim 22 is the control system 1 according to any one of claims 1 to 7, 9, 15, 18, and 19, further comprising storage battery temperature-detecting means (battery temperature sensor 63) for detecting a storage battery temperature as a temperature of the storage battery (battery 52), electric motor temperature-detecting means (motor temperature sensor) for detecting an electric motor temperature as a temperature of the electric motor 4, and limiting means (ECU 2) for limiting an output of the electric motor 4 being driven when at least one of a condition that the storage battery temperature (battery temperature TB) is not lower than a first predetermined temperature, and a condition that the electric motor temperature is not lower than a second predetermined temperature is satisfied.

According to this control system, since the output of the electric motor being driven is limited when at least one of the condition that the storage battery temperature is not lower than the first predetermined temperature, and the condition that the electric motor temperature is not lower than the second predetermined temperature is satisfied, it is possible to avoid occurrence of an overheated state of the storage battery and/or the electric motor, whereby it is possible to prolong the service lives/life of the storage battery and/or the electric motor.

The invention according to claim 23 is the control system according to any one of claims 1, 2, 5, 6, 9, 15, 18, and 19 wherein the hybrid vehicle V, V' is provided with a car navigation system 66 which stores data indicative of information on a road on which the hybrid vehicle V, V' is traveling and neighborhood roads, the control system further comprising prediction means (ECU 2) for predicting a traveling situation of the hybrid vehicle, based on data stored in the car navigation system 66, and wherein the speed position or the travel mode is selected further according to a predicted traveling situation of the hybrid vehicle.

With this configuration, a traveling situation of the hybrid vehicle is predicted by the prediction means based on data indicative of information on a road on which the hybrid vehicle is traveling and neighborhood roads, and the speed position or the travel mode is selected according to the predicted traveling situation of the hybrid vehicle. This makes it possible to select a speed position or a travel mode suitable for the traveling situation of the hybrid vehicle. For example, when the hybrid vehicle is predicted to travel downhill, a speed position which makes it possible to obtain a high power generation efficiency of the electric motor can be selected, whereas when the hybrid vehicle is predicted to travel uphill, a lower speed position which makes it possible to output a larger torque can be selected. Further, when the hybrid vehicle is predicted to shift to cruising travel, a speed position suitable for using only the electric motor as the motive power source can be selected.

The invention according to claim 24 is the control system according to any one of claims 10, 16, and 20, wherein when a state of charge (state of charge SOC) of the storage battery is not larger than a predetermined value, a forced regeneration mode in which regeneration by the electric motor 4 is forcibly performed is selected.

With this configuration, when the state of charge of the storage battery is not larger than the predetermined value, an operation mode in which regeneration by the electric motor is forcibly performed is selected. Therefore, when the state of charge of the storage battery is not larger than the predetermined value, that is, when the state of charge of the storage battery is relatively small, it is possible to forcibly perform regeneration by the electric motor, and hence it is possible to avoid overdischarge of the storage battery.

The invention according to claim 25 is the control system according to any one of claims 9, 18, and 21, wherein the total fuel consumption map is further corrected according to electric power consumed by the electric motor 4 in order to cancel torque ripple.

As is clear from the above-described definition of the total fuel consumption, electric power consumed by the electric motor to cancel torque ripple has influence on the total fuel consumption. With the above-described configuration, since the total fuel consumption map is further corrected according to electric power consumed by the electric motor in order to cancel torque ripple, it is possible to properly define the total fuel consumption further according to this loss of electric power.

The invention according to claim 26 is the control system according to any one of claims 9, 18, and 21, wherein the electric motor 4 has three-phase coils and is driven by electric power supplied from the storage battery (battery 52) connected via an electric circuit (PDU 51), and wherein the total fuel consumption map is corrected further according to iron loss and copper loss in the electric motor 4, loss in the electric circuit, and loss in the three-phase coils.

As is clear from the above-described definition of the total fuel consumption, iron loss and copper loss in the electric motor, loss in the electric circuit, and loss in the three-phase coil have influence on the total fuel consumption. With the above-described configuration, since the total fuel consumption map is further corrected according to iron loss and copper loss in the electric motor, loss in the electric circuit, and loss in the three-phase coil, it is possible to properly define the total fuel consumption further according to these losses.

[Brief Description of the Drawings]

[FIG. 1] A diagram schematically showing the arrangement of a hybrid vehicle to which a control system according to a first embodiment of the present invention is applied.

[FIG. 2] A block diagram showing an electrical arrangement of the control system.

[FIG. 3] A flowchart of a travel control process.

[FIG. 4] A view showing an example of maps for use in calculating an engine travel total efficiency TE_eng when in a third speed position.

[FIG. 5] A view showing an example of maps for use in calculating a charge travel total efficiency TE_ch and an assist travel total efficiency TE_asst when in the third speed position.

[FIG. 6] A view showing an example of maps for use in calculating the engine travel total efficiency TE_eng, the charge travel total efficiency TE_ch, and the assist travel total efficiency TE_asst when in the third speed position.

[FIG. 7] A view showing an example of maps for use in calculating an EV travel total efficiency TE_ev.

[FIG. 8] A flowchart of a process for calculating a past average charge amount ENE_chave.

[FIG. 9] A flowchart of a process for updating map values of the assist travel total efficiency TE_asst.

[FIG. 10] A diagram schematically showing the arrangement of a variation of the hybrid vehicle.

[FIG. 11] A view showing an example of a first total fuel consumption map used in a second embodiment.

[FIG. 12] A view showing an example of a base total fuel consumption map used in the second embodiment.

[FIG. 13] A view showing an example of a second total fuel consumption map used in the second embodiment.

[FIG. 14] A flowchart of a process for controlling an internal combustion engine and an electric motor according to a third embodiment.

[FIG. 15] A view showing an example of a fuel consumption ratio map used in the third embodiment.

[FIG. 16] A diagram useful in explaining a method of calculating a maximum efficiency engine torque according to the third embodiment.

[FIG. 17] A view showing an example of a motor-side efficiency map used in the third embodiment.

[FIG. 18] A flowchart of a process for controlling an internal combustion engine and an electric motor according to a fourth embodiment.

[FIG. 19] A view showing an example of a motor efficiency map used in the fourth embodiment.

[FIG. 20] A view showing an example of a total fuel consumption ratio map used in a fifth embodiment.

[FIG. 21] A view showing an example of a total fuel consumption ratio map used in the fifth embodiment for a speed-changing pattern which is different from that in FIG. 20.

[FIG. 22] A flowchart of a process for selecting a speed-changing pattern according to the fifth embodiment.

[Mode for Carrying Out Invention]

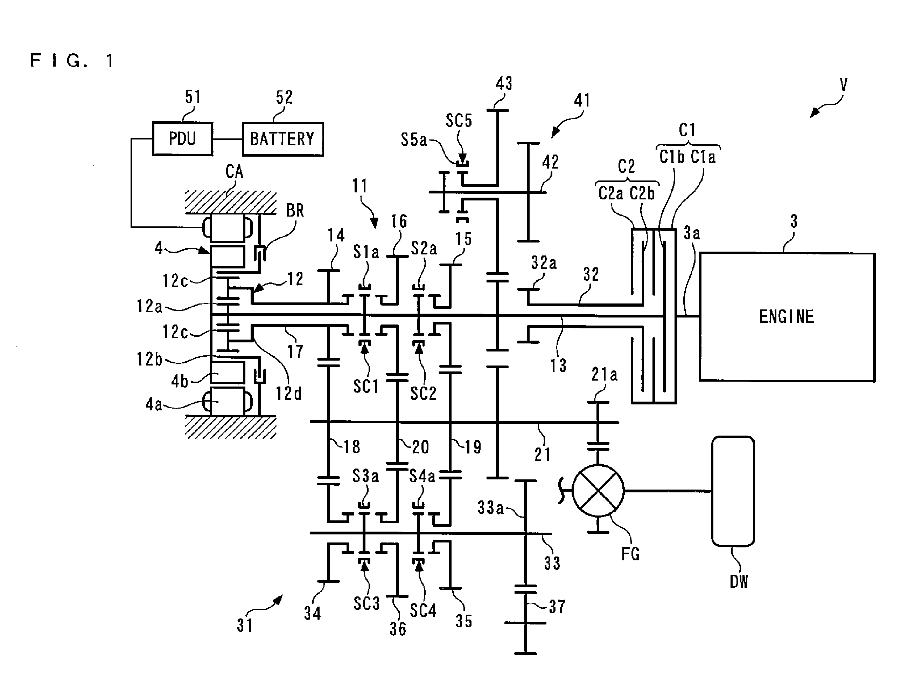

Hereafter, a control system for a hybrid vehicle according to a first embodiment of the present invention will be described with reference to drawings. The hybrid vehicle V shown in FIG. 1 is a four-wheel vehicle comprising a pair of drive wheels DW (only one of which is shown) and a pair of driven wheels (not shown), and is equipped with an internal combustion engine (hereinafter referred to as the "engine") 3 and an electric motor 4 as motive power sources. The engine 3 is a gasoline engine including a plurality of cylinders, and includes a crankshaft 3a as an engine output shaft. A fuel injection amount, fuel injection timing, ignition timing, etc. of the engine 3 are controlled by an ECU 2 of the control system 1 shown in FIG. 2. Note that as the engine, there may be employed one which is powered by light oil, natural gases, ethanol, or a mixed fuel of gasoline and another fuel.

The electric motor (hereinafter referred to as the "motor") 4 is a general one-rotor-type brushless DC motor, which is a so-called motor generator, and includes a fixed stator 4a, and a rotatable rotor 4b. The stator 4a generates a rotating magnetic field, and is formed e.g. by an iron core and three-phase coils. Further, the stator 4a is mounted on a casing CA fixed to the vehicle, and is electrically connected to a battery 52, which is capable of being charged and discharged, via a power drive unit (hereinafter referred to as the "PDU") 51. The PDU 51 is formed by an electric circuit, such as an inverter, and is electrically connected to the ECU 2 (see FIG. 2). The above-mentioned rotor 4b is composed of e.g. magnets, and is disposed in a manner opposed to the stator 4a. Note that an AC motor which is capable of generating electric power may be employed as the motor 4.

In the motor 4 constructed as above, when the ECU 2 controls the PDU 51 to thereby supply electric power from the battery 52 to the stator 4a via the PDU 51, the rotating magnetic field is generated, and accordingly the electric power is converted to motive power, by which the rotor 4b is rotated. Further,-the stator 4a is controlled as required whereby the motive power transmitted to the rotor 4b is controlled.

Further, when the rotor 4b is being rotated by input of motive power in a state in which supply of the electric power to the stator 4a is stopped, the ECU 2 controls the PDU 51 to thereby generate the rotating magnetic field. Accordingly, the motive power input to the rotor 4b is converted to electric power to perform power generation. In this case, electric power generated by the stator 4a is controlled to thereby control the motive power transmitted to the rotor 4b.

Further, the hybrid vehicle V is equipped with a driving force transmission system for transmitting the motive power from the engine 3 and the motor 4 to the drive wheels DW of the vehicle. This driving force transmission system includes a dual clutch transmission comprising a first transmission mechanism 11 and a second transmission mechanism 31.

The first transmission mechanism 11 transmits input motive power to the drive wheels DW after changing the speed thereof in one of a first speed position, a third speed position, a fifth speed position, and a seventh speed position. The first speed position to the seventh speed position have their transmission gear ratios set to higher-speed values as the number of the speed position is larger. Specifically, the first transmission mechanism 11 includes a first clutch C1, a planetary gear unit 12, a first input shaft 13, a third speed gear 14, a fifth speed gear 15, and a seventh speed gear 16, which are arranged coaxially with the crankshaft 3a of the engine 3.

The first clutch C1 is a dry multiple-disc clutch, and is formed e. g. by an outer clutch member C1a integrally mounted on the crankshaft 3a, and an inner clutch member C1b integrally mounted on one end of the first input shaft 13. The first clutch C1, which is controlled by the ECU 2, engages the first input shaft 13 with the crankshaft 3a when in an engaged state, and releases the engagement between the first input shaft 13 and the crankshaft 3a when in an disengaged state, to thereby disconnect between the two 13 and 3a. Note that a wet type clutch may be employed as the first clutch C1.

The planetary gear unit 12 is of a single planetary type, and includes a sun gear 12a, a ring gear 12b which is rotatably provided around an outer periphery of the sun gear 12a and has a larger number of gear teeth than those of the sun gear 12a, a plurality of (e.g. three) planetary gears 12c (only two of which are shown) in mesh with the gears 12a and 12b, and a rotatable carrier 12d rotatably supporting the planetary gears 12c.

The sun gear 12a is integrally mounted on the other end of the first input shaft 13. The other end of the first input shaft 13 further has the rotor 4b of the above-described motor 4 integrally mounted thereon. The first input shaft 13 is rotatably supported by bearings (not shown). With the above arrangement, the first input shaft 13, the sun gear 12a, and the rotor 4b rotate in unison with each other.

Further, the ring gear 12b is provided with a lock mechanism BR. The lock mechanism BR is of an electromagnetic type, and is turned on or off by the ECU 2. In an ON state, the lock mechanism BR holds the ring gear 12b unrotatable, whereas in an OFF state, the lock mechanism BR permits rotation of the ring gear 12b. Note that a synchronizing clutch or the like may be used as the lock mechanism BR.

The carrier 12d is integrally mounted on a hollow cylindrical rotating shaft 17. The rotating shaft 17 is relatively rotatably arranged outside the first input shaft 13, and is rotatably supported by bearings (not shown).

The third speed gear 14 is integrally mounted on the rotating shaft 17, and is rotatable in unison with the rotating shaft 17 and the carrier 12d. Further, the fifth speed gear 15 and the seventh speed gear 16 are rotatably provided on the first input shaft 13. Furthermore, the third speed gear 14, the seventh speed gear 16, and the fifth speed gear 15 are arranged side by side between the planetary gear unit 12 and the first clutch C1 in the mentioned order.

Further, the first input shaft 13 is provided with a first synchronizing clutch SC1 and a second synchronizing clutch SC2. The first synchronizing clutch SC1 includes a sleeve S1a, and a shift fork and an actuator (none of which is shown). Under the control of the ECU 2, the first synchronizing clutch SC1 causes the sleeve S1a to move in an axial direction of the first input shaft 13, to thereby selectively engage the third speed gear 14 or the seventh speed gear 16 with the first input shaft 13.

The second synchronizing clutch SC2 is constructed similarly to the first synchronizing clutch SC1, and under the control of the ECU 2, causes a sleeve S2a to move in an axial direction of the first input shaft 13 to thereby engage the fifth speed gear 15 with the first input shaft 13.

Further, a first gear 18, a second gear 19, and a third gear 20 are in mesh with the third speed gear 14, the fifth speed gear 15, and the seventh speed gear 16, respectively. These first to third gears 18 to 20 are integrally mounted on an output shaft 21. The output shaft 21 is rotatably supported by bearings (not shown), and is disposed in parallel with the first input shaft 13. Further, a gear 21a is integrally mounted on the output shaft 21. The gear 21a is in mesh with a gear of a final reduction gear box FG including a differential gear. The output shaft 21 is connected to the drive wheels DW via the gear 21a and the final reduction gear box FG.

In the first transmission mechanism 11 constructed as above, gear positions of the first speed position and the third speed position are formed by the planetary gear unit 12, the third speed gear 14, and the first gear 18, and a gear position of the fifth speed position is formed by the fifth speed gear 15 and the second gear 19. A gear position of the seventh speed position is formed by the seventh speed gear 16 and the third gear 20. Further, motive power input to the first input shaft 13 is transmitted to the drive wheels DW via the output shaft 21, the gear 21a, and the final reduction gear box FG, while having the speed thereof changed in one of the first speed position, the third speed position, the fifth speed position, and the seventh speed position.

The above-described second transmission mechanism 31 transmits input motive power to the drive wheels DW while changing the speed of the motive power in one of the second speed position, the fourth speed position, and the sixth speed position. The second speed position to the sixth speed position have their transmission gear ratios set to higher-speed values as the number of the speed position is larger. Specifically, the second transmission mechanism 31 includes a second clutch C2, a second input shaft 32, an intermediate shaft 33, a second speed gear 34, a fourth speed gear 35, and a sixth speed gear 36. The second clutch C2 and the second input shaft 32 are arranged coaxially with the crankshaft 3a.

Similarly to the first clutch C1, the second clutch C2 is a dry multiple-disc clutch, and is formed by an outer clutch member C2a integrally mounted on the crankshaft 3a, and an inner clutch member C2b integrally mounted on one end of the second input shaft 32. The second clutch C2, which is controlled by the ECU 2, engages the second input shaft 32 with the crankshaft 3a when in an engaged state and releases the engagement between the second input shaft 32 and the crankshaft 3a when in a disengaged state to thereby disconnect between the two 32 and 3a.

The second input shaft 32 is formed into a hollow cylindrical shape. The second input shaft 32 is relatively rotatably arranged outside the first input shaft 13, and is rotatably supported by bearings (not shown). Further, a gear 32a is integrally mounted on the other end of the second input shaft 32.

The intermediate shaft 33 is rotatably supported by bearings (not shown), and is disposed in parallel with the second input shaft 32 and the above-described output shaft 21. A gear 33a is integrally mounted on the intermediate shaft 33. An idler gear 37 is in mesh with the gear 33a. The idler gear 37 is in mesh with the gear 32a of the second input shaft 32. Note that in FIG. 1, the idler gear 37 is illustrated at a position away from the gear 32a, for convenience of illustration. The intermediate shaft 33 is connected to the second input shaft 32 via the gear 33a, the idler gear 37, and the gear 32a.

The second speed gear 34, the sixth speed gear 36, and the fourth speed gear 35 are rotatably arranged on the intermediate shaft 33 in the mentioned order, and are in mesh with the above-described first gear 18, third gear 20, and second gear 19, respectively. Further, a third synchronizing clutch SC3 and a fourth synchronizing clutch SC4 are provided on the intermediate shaft 33. Both the synchronizing clutches SC3 and SC4 are constructed similarly to the first synchronizing clutch SC1.

Under the control of the ECU 2, the third synchronizing clutch SC3 causes a sleeve S3a thereof to move in the axial direction of the intermediate shaft 33, to thereby selectively engage the second speed gear 34 or the sixth speed gear 36 with the intermediate shaft 33. Under the control of the ECU 2, the fourth synchronizing clutch SC4 causes a sleeve S4a thereof to move in the axial direction of the intermediate shaft 33, to thereby engage the fourth speed gear 35 with the intermediate shaft 33.

In the second transmission mechanism 31 constructed as above, a gear position of the second speed position is formed by the second speed gear 34 and the first gear 18, and a gear position of the fourth speed position is formed by the fourth speed gear 35 and the second gear 19. A gear position of the sixth speed position is formed by the sixth speed gear 36 and the third gear 20. Further, motive power input to the second input shaft 32 is transmitted to the intermediate shaft 33 via the gear 32a, the idler gear 37, and the gear 33a, and the motive power transmitted to the intermediate shaft 33 is transmitted to the drive wheels DW via the output shaft 21, the gear 21a, and the final reduction gear box FG, while having the speed thereof changed in one of the second speed position, the fourth speed position, and the sixth speed position.

As describe above, the output shaft 21 for transmitting motive power changed in speed to the drive wheels DW is shared by the first and second transmission mechanisms 11 and 31.

Further, the driving force transmission system is provided with a reverse mechanism 41. The reverse mechanism 41 comprises a reverse shaft 42, a reverse gear 43, and a fifth synchronizing clutch SC5 including a sleeve 5a. To update the hybrid vehicle V, the CPU 2 controls the reverse mechanism 41 to cause the sleeve 5a to move in the axial direction of the reverse shaft 42, to thereby engage the reverse gear 43 with the reverse shaft 42.

Further, as shown in FIG. 2, a detection signal indicative of a rotational speed of the motor 4 (hereinafter referred to as the "motor speed") NMOT is input from a motor speed sensor 60 to the ECU 2. Further, a CRK signal is input from a crank angle sensor 61 to the ECU 2. The CRK signal is a pulse signal which is delivered along with rotation of the crankshaft 3a of the engine 3, whenever the crankshaft 3a rotates through a predetermined crank angle. The ECU 2 calculates an engine speed NE based on the CRK signal. Further, detection signals indicative of current and voltage values of electric current flowing into and out of the battery 52 are input from a current/voltage sensor 62 to the ECU 2. The ECU 2 calculates a state of charge SOC (charge amount) of the battery 52 based on the detection signals.

Furthermore, a detection signal indicative of a detected temperature of the battery 52 (hereinafter referred to as the "battery temperature") TB is input from a battery temperature sensor 63 to the ECU 2. Also input to the ECU 2 are a detection signal indicative of an accelerator pedal opening AP which is a stepped-on amount of an accelerator pedal, not shown, of the vehicle, from an accelerator pedal opening sensor 64, and a detection signal indicative of a vehicle speed VP (traveling state parameter), from a vehicle speed sensor 65. Further, data indicative of information on a road on which the hybrid vehicle V is traveling and neighborhood roads is input from a car navigation system 66 to the ECU 2.

The ECU 2 is implemented by a microcomputer comprising an I/O interface, a CPU, a RAM, an EEPROM, and a ROM, and controls the operation of the hybrid vehicle V based on the detection signals from the aforementioned sensors 60 to 65, and data stored in the RAM, data stored in the EEPROM, data stored in the ROM, and so forth. Further, the data stored in the car navigation system 66 and indicative of information on a road on which the hybrid vehicle V is traveling and neighborhood roads is input to the ECU 2 as required.

In the first embodiment, the ECU 2 corresponds to engine driving energy-calculating means, electric motor driving energy-calculating means, charging energy-calculating means, motive power source energy-calculating means, total efficiency parameter-calculating means, travel mode-selecting means, travel mode-executing means, charge travel mode-executing means, past charge amount memory means, and charge amount-detecting means.

The operation modes (travel modes) of the hybrid vehicle V constructed as above include an engine travel mode, an EV travel mode, an assist travel mode, a charge travel mode, a deceleration regeneration mode, and an ENG start mode. The operation of the hybrid vehicle V in each operation mode is controlled by the ECU 2. Hereafter, a description will be given of the travel modes one by one.

[Engine travel mode]

The engine travel mode is an operation mode for using only the engine 3 as a motive power source. In the engine travel mode, the motive power of the engine 3 (hereinafter referred as the "engine motive power") is controlled by controlling the fuel injection amount, the fuel injection timing, and the ignition timing of the engine 3. Further, the engine motive power is transmitted to the drive wheels DW while having the speed thereof changed by the first or second transmission mechanism 11 or 31.

First, a description will be sequentially given of operations performed when the speed of the engine motive power is transmitted to the drive wheels DW while having the speed thereof changed by the first transmission mechanism 11 in one of the first speed position, the third speed position, the fifth speed position, and the seventh speed position. In this case, in all of the above-mentioned speed positions, the first input shaft 13 is engaged with the crankshaft 3a by controlling the first clutch C1 to the engaged state, and engagement of the intermediate shaft 33 with the crankshaft 3a is released by controlling the second clutch C2 to the disengaged state. Further, engagement of the reverse gear 43 with the reverse shaft 42 is released by controlling the fifth synchronizing clutch SC5.

In the case of the first speed position, the ring gear 12b is held unrotatable by controlling the lock mechanism BR to an ON state, and engagement of the third speed gear 14, the fifth speed gear 15, and the seventh speed gear 16 with the first input shaft 13 is released by the first and second synchronizing clutches SC1 and SC2.

With the above operations, the engine motive power is transmitted to the output shaft 21 via the first clutch C1, the first input shaft 13, the sun gear 12a, the planetary gears 12c, the carrier 12d, the rotating shaft 17, the third speed gear 14, and the first gear 18, and is further transmitted to the drive wheels DW via the gear 21a and the final reduction gear box FG. At this time, since the ring gear 12b is held unrotatable as described above, the engine motive power transmitted to the first input shaft 13 is reduced in speed at a transmission gear ratio corresponding to a tooth number ratio between the sun gear 12a and the ring gear 12b, and is thereafter transmitted to the carrier 12d. Further, the engine motive power is reduced in speed at a transmission gear ratio corresponding to a tooth number ratio between the third speed gear 14 and the first gear 18, and is thereafter transmitted to the output shaft 21. As a consequence, the engine motive power is transmitted to the drive wheels DW while having the speed thereof changed at a transmission gear ratio of the first speed position determined by the above-described two transmission gear ratios.

In the case of the third speed position, the rotation of the ring gear 12b is permitted by controlling the lock mechanism BR to the OFF state, and only the third speed gear 14 is engaged with the first input shaft 13 by controlling the first and second synchronizing clutches SC1 and SC2.

With the above operations, the engine motive power is transmitted to the output shaft 21 from the first input shaft 13 via the third speed gear 14 and the first gear 18. In this case, since the third speed gear 14 is engaged with the first input shaft 13 as described above, the sun gear 12a, the carrier 12d, and the ring gear 12b idly rotate in unison with each other. For this reason, in the case of the third speed position, differently from the case of the first speed position, the engine motive power is transmitted to the drive wheels DW without having the speed thereof reduced by the planetary gear unit 12, while having the speed thereof changed at a transmission gear ratio of the third speed position determined by the tooth number ratio between the third speed gear 14 and the first gear 18.

In the case of the fifth speed position, similarly to the case of the third speed position, the rotation of the ring gear 12b is permitted by controlling the lock mechanism BR, and only the fifth speed gear 15 is engaged with the first input shaft 13 by controlling the first and second synchronizing clutches SC1 and SC2.

With the above operations, the engine motive power is transmitted to the output shaft 21 from the first input shaft 13 via the fifth speed gear 15 and the second gear 19. In this case, similarly to the case of the third speed position, the speed reduction function of the planetary gear unit 12 is not exhibited, but the engine motive power is transmitted to the drive wheels DW while having the speed thereof changed at a transmission gear ratio of the fifth speed position determined by a tooth number ratio between the fifth speed gear 15 and the second gear 19.

In the case of the seventh speed position, similarly to the case of the fifth speed position, the rotation of the ring gear 12b is permitted by controlling the lock mechanism BR, and only the seventh speed gear 16 is engaged with the first input shaft 13 by controlling the first and second synchronizing clutches SC1 and SC2.

With the above operations, the engine motive power is transmitted to the output shaft 21 from the first input shaft 13 via the seventh speed gear 16 and the third gear 20. In this case as well, the speed reduction function of the planetary gear unit 12 is not exhibited, but the engine motive power is transmitted to the drive wheels DW while having the speed thereof changed at a transmission gear ratio of the seventh speed position determined by a tooth number ratio between the seventh speed gear 16 and the third gear 20.

Next, a description will be sequentially given of operations performed when the engine motive power is transmitted to the drive wheels DW while having the speed thereof changed in speed by the second transmission mechanism 31 in each one of the second speed position, the fourth speed position, and the sixth speed position. In this case, in all of these speed positions, engagement of the first input shaft 13 with the crankshaft 3a is released by controlling the first clutch C1 to a disengaged state, and the second input shaft 32 is engaged with the crankshaft 3a by controlling the second clutch C2 to an engaged state. Further, the engagement of the reverse gear 43 with the reverse shaft 42 is released by controlling the fifth synchronizing clutch SC5.

In the case of the second speed position, only the second speed gear 34 is engaged with the intermediate shaft 33 by controlling the third and fourth synchronizing clutches SC3 and SC4. With this operation, the engine motive power is transmitted to the output shaft 21 via the second clutch C2, the second input shaft 32, the gear 32a, the idler gear 37, the gear 33a, the intermediate shaft 33, the second speed gear 34, and the first gear 18, and is further transmitted to the drive wheels DW via the gear 21a and the final reduction gear box FG. At this time, the engine motive power is transmitted to the drive wheels DW while having the speed thereof changed at a transmission gear ratio of the second speed position determined by a tooth number ratio between the second speed gear 34 and the first gear 18.

In the case of the fourth speed position, only the fourth speed gear 35 is engaged with the intermediate shaft 33 by controlling the third and fourth synchronizing clutches SC3 and SC4. With this operation, the engine motive power is transmitted to the output shaft 21 from the intermediate shaft 33 via the fourth speed gear 35 and the second gear 19. At this time, the engine motive power is transmitted to the drive wheels DW while having the speed thereof changed at a transmission gear ratio of the fourth speed position determined by a tooth number ratio between the fourth speed gear 35 and the second gear 19.

In the case of the sixth speed position, only the sixth speed gear 36 is engaged with the intermediate shaft 33 by controlling the third and fourth synchronizing clutches SC3 and SC4. With this operation, the engine motive power is transmitted to the output shaft 21 from the intermediate shaft 33 via the sixth speed gear 36 and the third gear 20. At this time, the engine motive power is transmitted to the drive wheels DW while having the speed thereof changed at a transmission gear ratio of the sixth speed position determined by a tooth number ratio between the sixth speed gear 36 and the third gear 20.

During the engine travel mode, the speed positions of the first and second transmission mechanisms 11 and 31 are set such that high efficiency of the whole hybrid vehicle V can be obtained (i.e. excellent fuel economy of the engine 3 can be obtained), as described hereinafter.

[EV travel mode]

The EV travel mode is an operation mode in which only the motor 4 is used as a motive power source. In the EV travel mode, the motive power of the motor 4 (hereinafter referred as the "motor motive power") is controlled by controlling electric power supplied from the battery 51 to the motor 4. Further, the motor motive power is transmitted to the drive wheels DW while having the speed thereof changed by the first transmission mechanism 11 in one of the first speed position, the third speed position, the fifth speed position, and the seventh speed position. In this case, in all of these speed positions, engagement of the first and second input shafts 13 and 32 with the crankshaft 3a is released by controlling the first and second clutches C1 and C2 to the disengaged state. This disconnects the motor 4 and the drive wheels DW from the engine 3, and hence the motor motive power is prevented from being wastefully transmitted to the engine 3. Further, the engagement of the reverse gear 43 with the reverse shaft 42 is released by controlling the fifth synchronizing clutch SC5.

In the case of the first speed position, similarly to the case of the engine travel mode, the ring gear 12b is held unrotatable by controlling the lock mechanism BR to the ON state, and the engagement of the third speed gear 14, the fifth speed gear 15, and the seventh speed gear 16 with the first input shaft 13 is released by controlling the first and second synchronizing clutches SC1 and SC2.

With the above operations, the motor motive power is transmitted to the output shaft 21 via the first input shaft, the sun gear 12a, the planetary gears 12c, the carrier 12d, the rotating shaft 17, the third speed gear 14, and the first gear 18. As a consequence, similarly to the case of the engine travel mode, the motor motive power is transmitted to the drive wheels DW while having the speed thereof changed at the transmission gear ratio of the first speed position.

In the case of the third speed position, similarly to the case of the engine travel mode, the rotation of the ring gear 12b is permitted by controlling the lock mechanism BR to the OFF state, and only the third speed gear 14 is engaged with the first input shaft 13 by controlling the first and second synchronizing clutches SC1 and SC2. With these operations, the motor motive power is transmitted to the output shaft 21 from the first input shaft 13 via the third speed gear 14 and the first gear 18. As a consequence, similarly to the case of the engine travel mode, the motor motive power is transmitted to the drive wheels DW while having the speed thereof changed at the transmission gear ratio of the third speed position.

In the case of the fifth or seventh speed position, similarly to the case of the engine travel mode, the lock mechanism BR and the first and second synchronizing clutches SC1 and SC2 are controlled. With these operations, the motor motive power is transmitted to the drive wheels DW while having the speed thereof changed at the transmission gear ratio of the fifth or seventh speed position.

Note that during the EV travel mode, as described hereinafter, the speed position of the first transmission mechanism 11 is set such that high efficiency of the whole hybrid vehicle V (i.e. high driving efficiency of the motor 4) can be obtained.

[Assist travel mode]

The assist travel mode is a travel an operation mode in which the engine 3 is assisted by the motor 4. In the assist travel mode, as described hereinafter, torque of the engine 3 (hereinafter referred to as the "engine torque") is controlled such that a net fuel consumption ratio BSFC of the engine 3 is minimized (i.e. excellent fuel economy of the engine 3 can be obtained). Further, a shortage amount of the engine torque with respect to torque required by a driver for the drive wheels DW (hereinafter referred to as the "required torque") TRQ is compensated for by torque of the motor 4 (hereinafter referred to as the "motor torque"). The required torque TRQ (traveling state parameter) is calculated based on the accelerator pedal opening AP, as described hereinafter.

In this case, when the engine motive power is transmitted to the drive wheels DW by the first transmission mechanism 11 (i.e. when the engine is in an odd-number speed position), a transmission gear ratio between the motor 4 and the drive wheels DW becomes equal to the transmission gear ratio of the speed position set by the first transmission mechanism 11. On the other hand, when the engine motive power is transmitted to the drive wheels DW by the second transmission mechanism 12 (i.e. when the engine is in an even-number speed position), the transmission gear ratio of one of the first speed position, the third speed position, the fifth speed position, and the seventh speed position of the first transmission mechanism 11 can be selected as the transmission gear ratio between the motor 4 and the drive wheels DW.

Further, during the assist travel mode, for example, when the engine motive power has its speed changed in the second speed position, one of the speed positions of the first transmission mechanism 11 is selected by pre-shifting the speed position, and the motor motive power is transmitted to the output shaft 21 via the first transmission mechanism 11. In this case, the first to third driven gears 18 to 20 of the output shaft 21 are in a state in mesh with both of gears in the odd-number speed position and gears in the even-number speed position, and therefore it is possible to synthesize the engine motive power having its speed changed in the odd-number speed position and the motor motive power having its speed changed in the even-number speed position. Note that the first clutch C1 is controlled to the disengaged state, whereby the engine motive power is not transmitted to the drive wheels DW via the first transmission mechanism 11. Further, the speed position of the first transmission mechanism 11, to which the speed position is pre-shifted, can be freely selected according to the traveling state of the hybrid vehicle V.

[Charge travel mode]

The charge travel mode is an operation mode in which electric power is generated by converting part of the engine motive power to electric power by the motor 4, and the generated electric power is charged into the battery 52. In the charge travel mode, as described hereinafter, the engine torque is controlled such that high efficiency of the hybrid vehicle V can be obtained (i.e. excellent fuel economy of the engine 3 can be obtained). Further, electric power is generated by the motor 4 using a surplus amount of the engine torque with respect to the required torque TRQ, and the generated electric power is charged into the battery 52.

In this case, similarly to the assist travel mode, when the engine motive power is transmitted to the drive wheels DW by the first transmission mechanism 11 (i.e. when the engine is in the odd-number speed position), the transmission gear ratio between the motor 4 and the drive wheels DW becomes equal to the transmission gear ratio of the speed position of the first transmission mechanism 11. Further, when the engine motive power is transmitted to the drive wheels DW by the second transmission mechanism 12 (i.e. when the engine is in the even-number speed position), the transmission gear ratio of one of the first speed position, the third speed position, the fifth speed position, and the seventh speed position of the first transmission mechanism 11 can be selected as the transmission gear ratio between the motor 4 and the drive wheels DW.

Note that during the charge travel mode, in a case where the engine motive power is transmitted to the drive wheels DW by the second transmission mechanism 31, when the transmission gear ratio between the motor 4 and the drive wheels DW is controlled to a value equal to the transmission gear ratio between the engine 3 and the drive wheels DW, the first input shaft 13 is engaged with the crankshaft 3a by the first clutch C1. This causes part of the engine motive power to be transmitted to the rotor 4b of the motor 4 via the first clutch C1 and the first input shaft 13.

[Deceleration regeneration mode]

The deceleration regeneration mode is an operation mode in which generation of electric power is performed by the motor 4 using motive power from the drive wheels DW during decelerating traveling of the hybrid vehicle V, and generated electric power is charged into the battery 52. In the deceleration regeneration mode, the first and second clutches C1 and C2 are controlled similarly to the case of the EV travel mode. Further, the motive power from the drive wheels DW is transmitted to the motor 4 in a state changed in speed via the final reduction gear box FG, the gear 21a, the output shaft 21, and the first transmission mechanism 11. The motive power transmitted from the drive wheels DW to the motor 4 is converted to electric power, and generated electric power is charged into the battery 52. Along therewith, braking force corresponding to the generated electric power acts from the motor 4 on the drive wheels DW.

During the deceleration regeneration mode, the speed position of the first transmission mechanism 11 is set such that high power generation efficiency of the motor 4 can be obtained. Further, similarly to the case of the EV travel mode, the engagement of the first and second input shafts 13 and 32 with the crankshaft 3a is released by the first and second clutches C1 and C2, whereby the motor 4 and the drive wheels DW are disconnected from the engine 3, which prevents the motive power from being wastefully transmitted from the drive wheels DW to the engine 3.

Note that when it is impossible to obtain sufficient braking force from the motor 4 during the deceleration regeneration mode, it is possible to engage the first clutch C1 in order to obtain a braking force from engine brake.

[ENG start mode]

The ENG start mode is an operation mode for starting the engine 3. In the ENG start mode, in a case where the engine 3 is started during stoppage of the hybrid vehicle V, the first input shaft 13 is engaged with the crankshaft 3a by controlling the first clutch C1 to the engaged state, and engagement of the second input shaft 32 with the crankshaft 3a is released by controlling the second clutch C2 to the disengaged state. Further, all speed positions of the first transmission mechanism 11 are released (made neutral), and electric power is supplied from the battery 52 to the motor 4, whereby the motor motive power is generated.

With the above operations, the motor motive power is transmitted to the crankshaft 3a via the first input shaft 13 and the first clutch C1, whereby the crankshaft 3a is rotated. In this state, the engine 3 is started by controlling the fuel injection amount, the fuel injection timing, and the ignition timing of the engine 3, according to the above-described CRK signal. In this case, although the motor motive power transmitted to the sun gear 12a via the first input shaft 13 is transmitted to the ring gear 12b via the planetary gear 12c, since the rotation of the ring gear 12b is permitted as described above, the ring gear 12b idly rotates, and hence the motor motive power is not transmitted to the drive wheels DW via the carrier 12d and so forth.

Further, in a case where the engine 3 is started during the above-described EV travel mode, the first clutch C1 in the disengaged state is engaged to cause the first input shaft 13 to be engaged with the crankshaft 3a. This causes the motor motive power to be transmitted to the crankshaft 3a to rotate the crankshaft 3a. In this state, by controlling the fuel injection amount, the fuel injection timing, and the ignition timing of the engine 3, according to the CRK signal, the engine 3 is started. In this case, by progressively increasing the engagement force of the first clutch C1, torque transmitted from the motor 4 to the drive wheels DW is prevented from being suddenly reduced, which makes it possible to secure excellent drivability.

Note that during the EV travel mode, when the engine 3 is started e.g. in a case where the hybrid vehicle V is in a very low-speed traveling state, or in a case where temperature of the first clutch C1 is high, the engine 3 can be started also by engaging not the first clutch C1, but the second clutch C2, and selecting an even-number speed position in order to start the engine 3.

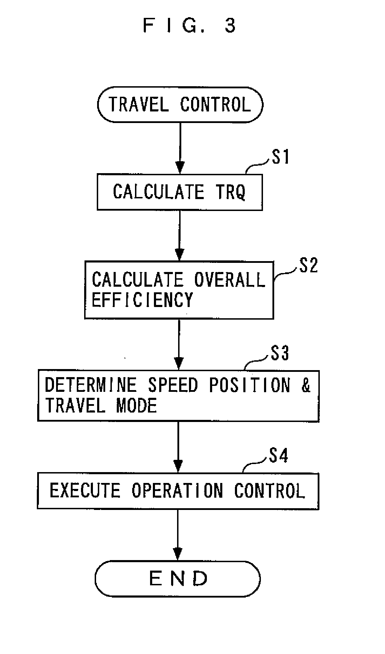

Next, a travel control process executed by the ECU 2 will be described with reference to FIG. 3. Note that it is assumed that in the following description, some of various calculated values are stored in an the EEPROM of the ECU 2, and the rest are stored in the RAM. The travel control process determines (selects) the travel mode and speed position of the hybrid vehicle V, and controls the operations of the engine 3, the motor 4, and the two transmission mechanisms 11 and 31 based on the determined travel mode and speed position. The travel control process is executed at a predetermined control period (e.g. 10 msec) during operation of the hybrid vehicle V, in a state in which the accelerator pedal is being stepped on by the driver.

As shown in the figure, first in a step 1 (shown as S1 in abbreviated form in FIG. 3; the following steps are also shown in abbreviated form), the required torque TRQ is calculated by searching a map, not shown, according to the accelerator pedal opening AP. In this case, the required torque TRQ is calculated such that it has a larger value as the accelerator pedal opening AP is larger.

Then, the process proceeds to a step 2, wherein a process for calculating total efficiency is executed. The total efficiency corresponds to an efficiency at which motive power source energy, which is assumed to have been supplied to the whole motive power source (i.e. the engine 3 and/or the motor 4) in order to generate motive power, is converted to traveling energy (i.e. energy which drives the drive wheels DW), traveling energy and electric energy charged into the battery 52. Specifically, the total efficiency is calculated by searching maps for calculating various total efficiencies, described hereinafter.

In this case, as the maps for calculating the total efficiency, there are provided maps for calculating a total efficiency in the engine travel mode (hereinafter referred to as the "engine travel total efficiency") TE_eng, maps for calculating a total efficiency in the assist travel mode (hereinafter referred to as the "assist travel total efficiency") TE_asst and a total efficiency in the charge travel mode (hereinafter referred to as the "charge travel total efficiency") TE_ch, and maps for calculating a total efficiency in the EV travel mode (hereinafter referred to as the "EV travel total efficiency") TE_ev. Note that in the first embodiment, these four total efficiencies TE_eng, TE_asst, TE_ch, and TE_ev correspond to total efficiency parameters.

First, a description will be given of the maps for calculating the engine travel total efficiency TE_eng. In this case, as the maps for calculating the engine travel total efficiency TE_eng, there are provided maps for the first to seventh speed positions for use in transmitting the engine motive power to the drive wheels DW in the first to seventh speed positions, respectively. These maps are stored in the ROM of the ECU 2. Note that in the following description, as to the maps for calculating the engine travel total efficiency TE_eng, the maps for the first to seventh speed positions are referred to as the "E1calculation map to E7 calculation map", respectively. Map values in the E1calculation map to E7 calculation map for calculating the engine travel total efficiency TE_eng are set to mapped values based on the results of actual measurements. More specifically, the map values are each set to a maximum efficiency obtained when the engine 3 generates torque satisfying the required torque TRQ.

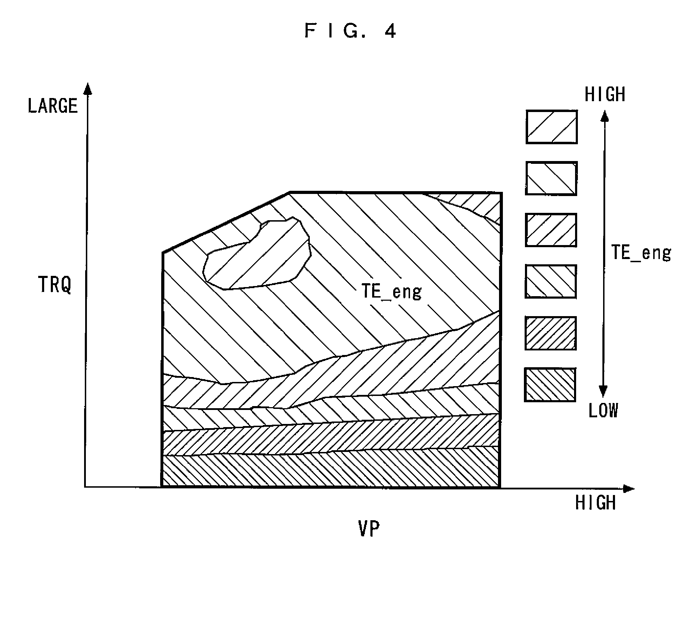

In this case, for example, the E3 calculation map for the engine travel total efficiency TE_eng is as shown in FIG. 4. In FIG. 4, the engine travel total efficiency TE_eng is set such that the total efficiency is higher in a region indicated by thinner hatching than in a region indicated by thicker hatching. This also applies to various maps, described hereinafter. The E3 calculation map for the engine travel total efficiency TE_eng is configured as above, and although the other maps for calculating the engine travel total efficiency TE_eng are not shown, they are created by the same method as the method of creating the E3 calculation map.

In the above-described step 2, the engine travel total efficiency TE_eng for one of the first to seventh speed positions is calculated by searching the above E1 calculation map to E7 calculation map for calculating the engine travel total efficiency TE_eng, according to the required torque TRQ and the vehicle speed VP. In this case, there is a map which has no map value of the engine travel total efficiency TE_eng, depending on the region of the required torque TRQ and the vehicle speed VP. In this case, the engine travel total efficiency TE_eng is not calculated.

Note that the map values of the E1 calculation map to E7 calculation map may be set in advance to values calculated by a calculation method, described hereinafter. Further, the following calculation method may be executed at a predetermined repetition period during driving of the hybrid vehicle V and the map values may be updated using the results of the calculation.

First, the engine travel total efficiency TE_eng corresponds to a ratio between the traveling energy of the hybrid vehicle V and the above-mentioned motive power source energy, and is defined by the following equation (1) when in the engine travel mode:

$$TE\_eng = \frac{ENE\_eng2}{ENE\_eng1} \qquad \cdots\cdots (1)$$

In this equation (1), ENE_eng1 represents engine fuel energy, and corresponds to a value obtained by converting energy generated by combustion of fuel in the engine 3, i.e. a fuel consumption amount, to energy. Further, ENE_eng2 represents engine driving energy, and corresponds to a value of the engine fuel energy transmitted to the drive wheels DW.

In this case, the engine driving energy ENE_eng2 is calculated by the following equation (2):

$$ENE\_eng2 = ENE\_eng1 \cdot Eeng \cdot Etm\_d \qquad \cdots\cdots (2)$$

In this equation (2), Eeng represents engine efficiency, and is calculated according to engine operating conditions, such as the engine speed NE. Further, Etm_d represents a driving efficiency of the transmission mechanisms, and is calculated according to the speed position.

When the equation (2) is substituted into the above equation (1), there is obtained the following equation (3). That is, the engine travel total efficiency TE_eng is calculated as the product of the engine efficiency Eeng and the driving efficiency Etm_d of the transmission mechanisms.

$$TE\_eng = \frac{ENE\_eng1 \cdot Eeng \cdot Etm\_d}{ENE\_eng1} = Eeng \cdot Etm\_d \qquad \cdots\cdots (3)$$

Therefore, by calculating the engine travel total efficiency TE_eng using the above equation (3) according to the vehicle speed VP, the speed position, and the required torque TRQ, it is possible to calculate map values of the E1 calculation map to E7 calculation map for during engine traveling.

Next, a description will be given of the above-mentioned maps for calculating the assist travel total efficiency TE_asst and the charge travel total efficiency TE_ch. In the following description, out of the maps for calculating the assist travel total efficiency TE_asst and the charge travel total efficiency TE_ch, for example, a map for use when the engine motive power is transmitted to the drive wheels DW in the first speed position and at the same time motive power transmission between the motor 4 and the drive wheels DW is executed in the first speed position is referred to as the "E1M1 calculation map", and a map for use when the engine motive power is transmitted to the drive wheels DW in the second speed position and at the same time motive power transmission between the motor 4 and the drive wheels DW is executed in the first speed position is referred to as the "E2M1 calculation map".

Here, during the assist travel mode or the charge travel mode, as described above, when the engine motive power is transmitted to the drive wheels DW in an odd-number speed position, the motive power transmission between the motor 4 and the drive wheels DW can be executed in the same odd-number speed position, owing to the structures of the first and second transmission mechanisms 11 and 31. On the other hand, when the engine motive power is transmitted to the drive wheels DW in an even-number speed position, the motive power transmission between the motor 4 and the drive wheels DW can be executed in any one of the four odd-number speed positions. Therefore, as the maps for calculating the assist fuel consumption amount FC_asst and the charge fuel consumption amount FC_ch, there are provided sixteen types of maps in total, specifically, the E1M1 calculation map, an E2Mi calculation map (i = 1, 3, 5, 7), an E3M3 calculation map, an E4Mi calculation map, an E5M5 calculation map, an E6Mi calculation map, and an E7M7 calculation map. These maps are stored in the EEPROM of the ECU 2.

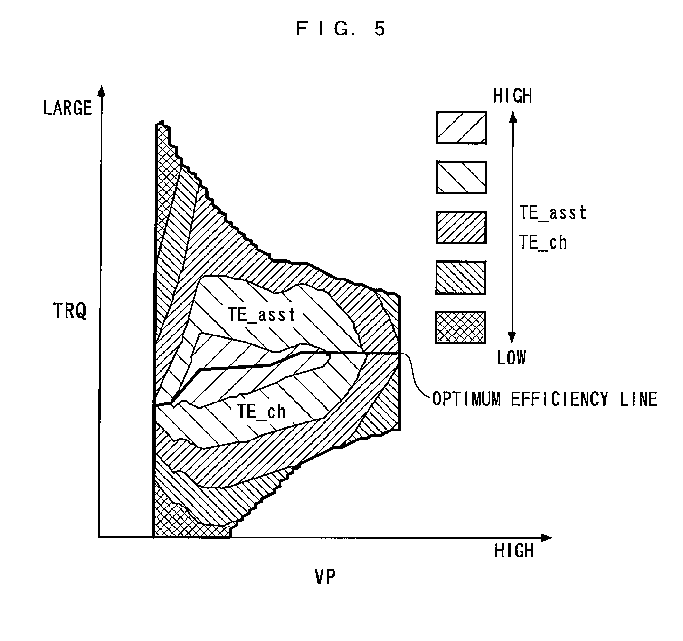

In this case, for example, the E3M3 calculation map is specifically shown in FIG. 5. As shown in the figure, in this map, a region upper than a line connecting between operation points at each of which a minimum net fuel consumption ratio BSFC can be obtained when torque generated by the engine 3 satisfies the required torque TRQ (in other words, an optimum efficiency line) forms a map for calculating the assist travel total efficiency TE_asst, and a region lower than the line forms a map for calculating the charge travel total efficiency TE_ch.

This map is created by creating an E3M3 calculation map for calculating only the assist travel total efficiency TE_asst and an E3M3 calculation map for calculating only the charge travel total efficiency TE_ch, and thereafter causing portions of the two maps where the efficiency is the higher of the two maps to remain. The E3M3 calculation map for the assist travel total efficiency TE_asst and the charge travel total efficiency TE_ch is configured as above. Although the other maps for calculating the assist travel total efficiency TE_asst and the charge travel total efficiency TE_ch are not specifically shown, they are created by the same method as the method of creating the E3M3 calculation map.

In the above-described step 2 in FIG. 3, by searching the above sixteen types of maps according to the required torque TRQ and the vehicle speed VP, there is calculated the assist travel total efficiency TE_asst or the charge travel total efficiency TE_ch in which the speed positions are represented by EjMi (j = 1 to 7, i = 1, 3, 5, 7). In this case, there are maps which have no map values of the two total efficiencies TE_asst and TE_ch, depending on the region of the required torque TRQ and the vehicle speed VP. In this case, the two total efficiencies TE_asst and TE_ch are not calculated.

Note that map values of the maps for calculating the assist travel total efficiency TE_asst and the charge travel total efficiency TE_ch are set to values calculated by the following calculation methods: First, a description will be given of the method of calculating the map values of the charge travel total efficiency TE_ch. The charge travel total efficiency TE_ch corresponds to a ratio between the sum of the traveling energy of the hybrid vehicle V and electric energy charged into the battery 52 in the charge travel mode, and the above-mentioned motive power source energy, and is defined by the following equation (4):

$$TE\_ch = \frac{ENE\_eng2 + ENE\_mot2}{ENE\_eng1 + ENE\_mot1} \qquad \cdots\cdots (4)$$

In this equation (4), ENE_mot1 represents motor charging/discharging energy, and ENE_mot2 represents driving/charging energy. The motor charging/discharging energy ENE_mot1 corresponds to a value obtained by converting fuel used for charging the battery 52 in the charge travel mode to energy, and is calculated, as described hereinafter.

Further, the driving/charging energy ENE_mot2 is electric energy (charging energy) which is charged into the battery 52 via the drive wheels DW and the motor 4 in the charge travel mode, and can be defined as expressed by the following equation (5):

$$ENE\_mot2 = ENE\_mot1 \cdot Eeng \cdot Etm\_c \cdot Emot\_c \cdot [Ebat\_cd \cdot Emot\_d \cdot Etm\_d] \qquad \cdots\cdots (5)$$

In this equation (5), Etm_c represents the charging efficiency of the transmission mechanisms, and is calculated according to the speed position. Further, Emot_c and Emot_d represent motor charging efficiency and motor driving efficiency, respectively, and are calculated according to the speed position, the vehicle speed VP, and the required torque TRQ. Furthermore, Ebat_cd represents the charging/discharging efficiency of the battery 52, and is calculated according to the state of charge SOC. Note that in the first embodiment, the motor charging efficiency Emot_c corresponds to the charging efficiency of the electric motor, the motor driving efficiency Emot_d corresponds to driving efficiency of the electric motor, and the charging/discharging efficiency Ebat_cd of the battery 52 corresponds to charging/discharging efficiency of the storage battery.

In the above equation (5), a value enclosed by [] on the right side corresponds to efficiency provided when electric power charged into the battery 52 is used for conversion to motive power by the motor 4 in the future. Therefore, by indicating the efficiency as predicted efficiency Ehat, there is obtained the following equation (6) :

$$Ehat = Ebat\_cd \cdot Emot\_d \cdot Etm\_d \qquad \cdots\cdots (6)$$

When the above equation (6) and the aforementioned equation (2) are substituted into the above equation (4), there is obtained the following equation (7).

$$TE\_ch = \frac{ENE\_eng1 \cdot Eeng \cdot Etm\_d + ENE\_mot1 \cdot Eeng \cdot Etm\_c \cdot Emot\_c \cdot Ehat}{ENE\_eng1 + ENE\_mot1} \qquad \cdots\cdots (7)$$

Therefore, by using this equation (7), it is possible to calculate the map values of the charge travel total efficiency TE_ch in the above-described sixteen types of maps (the E1M1 calculation map to the E7M7 calculation map). In this case, respective parameters in the equation (7) are specifically calculated in the following manner:

The engine fuel energy ENE_eng1 is calculated by calculating a fuel amount which generates such engine torque as will make it possible to obtain the minimum net fuel consumption ratio BSFC (hereinafter referred to as the "optimum fuel economy torque") according to the vehicle speed VP and the speed position, and converting the fuel amount to energy. Further, the motor charging/discharging energy ENE_mot1 is calculated by converting a value obtained by subtracting the required torque TRQ from the optimum fuel economy torque, to energy. Furthermore, the predicted efficiency Ehat is calculated by map search according to the vehicle speed VP, the speed position, and the required torque TRQ, and the efficiencies Eeng, Etm_d, Emot_c and Etm_c are calculated by the above-described methods.

According to the above method, each map value of the charge travel total efficiency TE_ch is calculated as the maximum efficiency of the whole hybrid vehicle V to be obtained when the difference between torque generated by the engine when the engine 3 is operated with a fuel amount that minimizes the net fuel consumption ratio BSFC and the required torque TRQ, that is, the surplus amount of the generated torque with respect to the required torque TRQ is absorbed by regeneration control of the motor 4.

Next, a description will be given of the above-mentioned method of calculating the map values of the assist travel total efficiency TE_asst. The assist travel total efficiency TE_asst corresponds to a ratio between the traveling energy of the hybrid vehicle V and the above-mentioned motive power source energy when in the assist travel mode, and is defined by the following equation (8):

$$TE\_asst = \frac{ENE\_eng2 + ENE\_mot2}{ENE\_eng1 + ENE\_mot1} \qquad \cdots\cdots (8)$$

In this equation (8), the motor charging/ discharging energy ENE_mot1 corresponds to the amount of electric power consumed for conversion to motive power by the motor 4. Further, in the assist travel mode, the driving/charging energy ENE_mot2 can be defined by the following equation (9):

$$ENE\_mot2 = [ENE\_mot1 \cdot Eeng \cdot Etm\_c \cdot Emot\_c] \cdot Ebat\_cd \cdot Emot\_d \cdot Etm\_d \qquad \cdots\cdots (9)$$

In the above equation (9), a value enclosed by [] on the right side corresponds to the amount of electric power charged into the battery 52. Therefore, by indicating the amount of electric power by a charge amount ENE_ch, there is obtained the following equation (10). Note that the charge amount ENE_ch is calculated at a predetermined control period during the charge travel mode, as described hereinafter.

$$ENE\_ch = ENE\_mot1 \cdot Eeng \cdot Etm\_c \cdot Emot\_c \qquad \cdots\cdots (10)$$

In this case, since the charge amount ENE_ch represents a calculated value obtained by a single calculation, to cause states of charge in the past to be reflected on the charge amount, an average value of charge amounts ENE_ch obtained by a predetermined number of times of calculations up to the present time point is calculated as a past average charge amount ENE_chave by the moving average calculation method, as described hereinafter. When the value enclosed by [] on the right side of the equation (9) is replaced by the past average charge amount ENE_chave, there is obtained the following equation (11):

$$ENE\_mot2 = ENE\_chave \cdot Ebat\_cd \cdot Emot\_d \cdot Etm\_d \qquad \cdots\cdots (11)$$

Then, when the above equation (11) and the aforementioned equation (2) are substituted into the above equation (8), there is obtained the following equation (12).

$$TE\_asst = \frac{ENE\_eng1 \cdot Eeng \cdot Etm\_d + ENE\_chave \cdot Ebat\_cd \cdot Emot\_d \cdot Etm\_d}{ENE\_eng1 + ENE\_mot1}$$

$$\cdots\cdots (12)$$

Therefore, by using this equation (12), it is possible to calculate the map values of the assist travel total efficiency TE_asst in the above-described sixteen types of maps (the E1M1 calculation map to the E7M7 calculation map). In this case, respective parameters in the equation (12) are specifically calculated in the following manner:

The engine fuel energy ENE_eng1 is calculated by calculating a fuel amount which generates the above-mentioned optimum fuel economy torque according to the vehicle speed VP and the speed position and converting the fuel amount to energy. Further, the motor charging/discharging energy ENE_mot1 is calculated by converting a value obtained by subtracting the optimum fuel economy torque from the required torque TRQ, to energy. Furthermore, the efficiencies Eeng, Etm_d, Emot_c, and Etm_c are calculated by the above-described methods. In addition to this, the past average charge amount ENE_chave is calculated during traveling of the hybrid vehicle V at a predetermined control period, as described hereinafter. Accordingly, the map values of the assist travel total efficiency TE_asst are updated at the predetermined control period, so that the regions in which the assist travel total efficiency TE_asst is higher or lower in the map in FIG. 5 are also changed.

According to the above method, each map value of the assist travel total efficiency TE_asst is calculated as the optimum efficiency of the whole hybrid vehicle V to be obtained when the difference between torque generated when the engine 3 is operated with the fuel amount that minimizes the net fuel consumption ratio BSFC and the required torque TRQ, that is, the insufficient amount of the generated torque with respect to the required torque TRQ is compensated for by powering control by the motor 4.

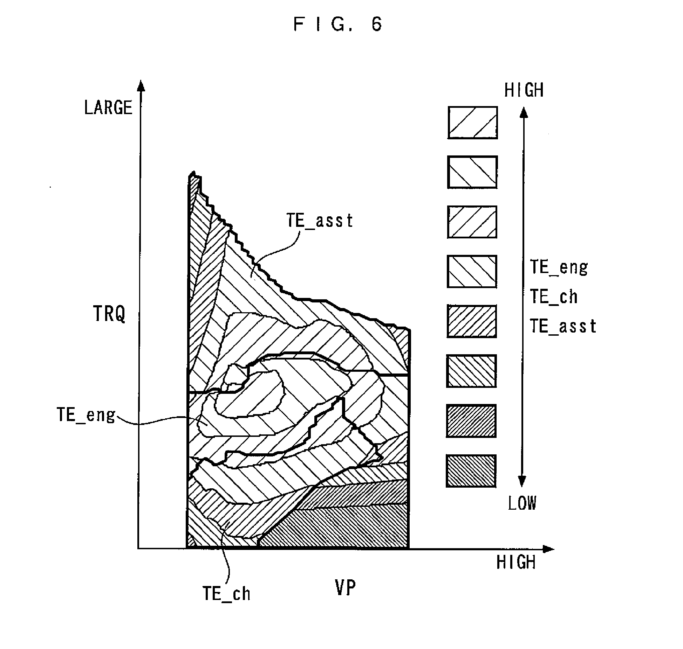

Note that the maps in FIGS. 4 and 5 may be replaced by a map shown in FIG. 6. The map shown in FIG. 6 is formed by combining FIGS. 4 and 5, and thereafter causing portions each indicating high efficiencies of the three total efficiencies TE_eng, TE_ch, and TE_asst in the third speed position to remain. Therefore, by searching this map according to the required torque TRQ and the vehicle speed VP, it is possible to calculate the highest value of the three total efficiencies TE_eng, TE_ch, and TE_asst for the third speed position. When this map is used as well, the map values of the assist travel total efficiency TE_asst are updated at the predetermined control period, as described above, so that the regions in which the assist travel total efficiency TE_asst is higher or lower in the map in FIG. 6 are also changed.

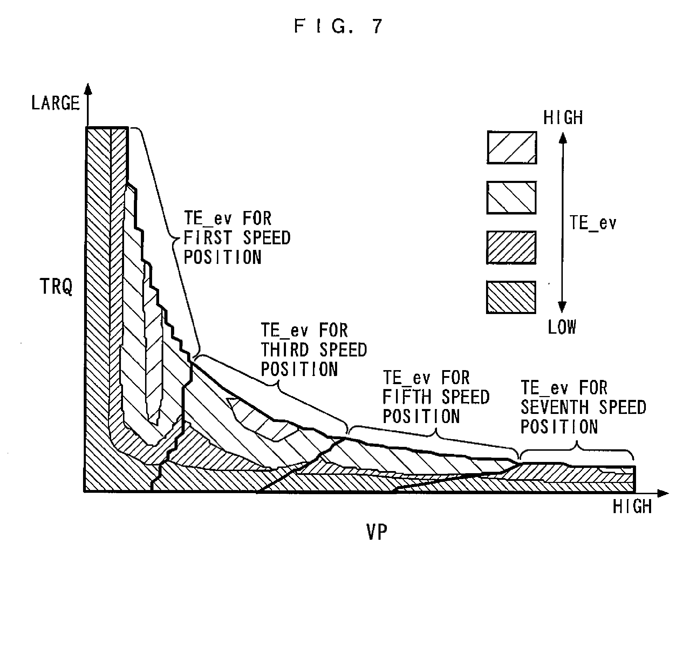

Next, a map for calculating the above-mentioned EV travel total efficiency TE_ev will be described with reference to FIG. 7. The map shown in the figure is formed by creating maps for calculating the EV travel total efficiency TE_ev for the first speed position, the third speed position, the fifth speed position, and the seventh speed position, based on the results of actual measurements, and then combining the four maps such that portions each indicating the high efficiency of the four maps are caused to remain.

In the above-described step 2 in FIG. 3, the maps in FIG. 7 are searched according to the required torque TRQ and the vehicle speed VP, whereby the EV travel total efficiency TE_ev for one of the first speed position, the third speed position, the fifth speed position, and the seventh speed position is calculated. In this case, there are regions which have no map values of the EV travel total efficiency TE_ev, depending on the region of the required torque TRQ and the vehicle speed VP. In this case, the EV travel total efficiency TE_ev is not calculated.

Note that the map values of the EV travel total efficiency TE_ev may be updated by calculating the EV travel total efficiency TE_ev at a predetermined control period using the following equation (13), and using the calculation result:

$$TE\_ev = \frac{ENE\_mot2}{ENE\_mot1}$$

$$= \frac{ENE\_chave \cdot Ebat\_cd \cdot Emot\_d \cdot Etm\_d}{ENE\_mot1} \qquad \cdots\cdots (13)$$

In this case, in the above equation (13), the motor charging/discharging energy ENE_mot1 is calculated by converting the required torque TRQ to energy.

Referring again to FIG. 3, in the step 2, after calculating the values of the four total efficiencies TE_eng, TE_asst, TE_ch, and TE_ev according to the vehicle speed VP and the required torque TRQ, as described above, the process proceeds to a step 3, wherein the highest value of the four total efficiencies TE_eng, TE_asst, TE_ch, and TE_ev is selected, and a speed position and a travel mode corresponding to the selected total efficiency are determined (selected) as the current speed position and travel mode.

Then, the process proceeds to a step 4, wherein the operations of the engine 3, the motor 4, and the transmission mechanisms 11 and 31 are controlled such that the speed position and the travel mode determined in the step 3 are put into effect. After that, the present process is terminated.

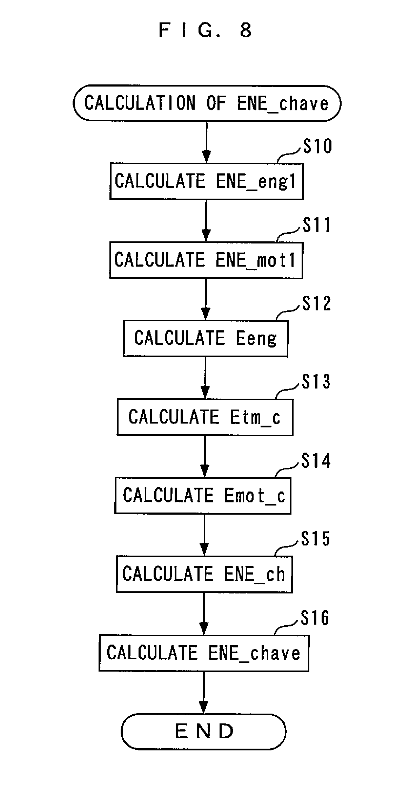

Next, a process for calculating the past average charge amount ENE_chave will be described with reference to FIG. 8. This calculation process is executed at a predetermined control period (e.g. 10 msec) during execution of the charge travel mode.

As shown in the figure, first, in a step 10, the engine fuel energy ENE_eng1 during the charge travel mode is calculated by calculating a fuel amount which generates the optimum fuel economy torque according to the vehicle speed VP and the speed position, and converting the fuel amount to energy, as described hereinabove. After that, the process proceeds to a step 11, wherein the motor charging/discharging energy ENE_mot1 is calculated by converting a value obtained by subtracting the required torque TRQ from the optimum fuel economy torque, to energy, as described above.

Next, in a step 12, the engine efficiency Eeng is calculated according to the engine operating conditions, such as the engine speed NE, as described above. After that, in a step 13, the charging efficiency Etm_c of the transmission mechanism is calculated according to the speed position, as described hereinabove.

Then, the process proceeds to a step 14, wherein the motor charging efficiency Emot_c is calculated according to the speed position, the vehicle speed VP, and the required torque TRQ, as described above. In a step 15 following the step 14, the charge amount ENE_ch is calculated by the aforementioned equation (10).

Next, in a step 16, the past average charge amount ENE_chave is calculated by calculating a moving average of a predetermined number of calculated values of the charge amounts ENE_ch, including the current calculated value of the charge amount ENE_ch, as described hereinabove. This past average charge amount ENE_chave is stored in the EEPROM. After that, the present process is terminated.

As described above, since the past average charge amount ENE_chave is calculated by calculating a moving average of the predetermined number of the charge amounts ENE_ch, the past average charge amount ENE_chave is calculated as a charge amount on which the charging efficiency of the battery 52 up to the current time is reflected. Note that in the above-described step 15, the past average charge amount ENE_chave may be calculated as an arithmetic mean value or a weighted average value of the predetermined number of the charge amounts ENE_ch.

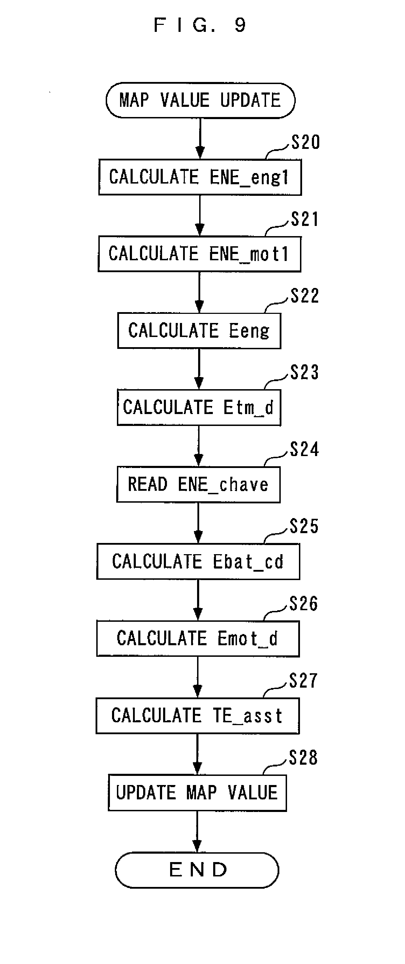

Next, a process for updating the above-described map values of the assist travel total efficiency TE_asst will be described with reference to FIG. 9. This updating process is executed at a predetermined control period (e.g. 10 msec) during the assist travel mode.

As shown in the figure, first, in a step 20, the engine fuel energy ENE_eng1 during the assist travel mode is calculated by calculating a fuel amount which generates the optimum fuel economy torque according to the vehicle speed VP and the speed position, and converting the fuel amount to energy, as described hereinabove. After that, the process proceeds to a step 21, wherein the motor charging/discharging energy ENE_mot1 is calculated by converting a value obtained by subtracting the optimum fuel economy torque from the required torque TRQ, to energy, as described above.

Next, in a step 22, the engine efficiency Eeng is calculated according to the engine operating conditions, such as the engine speed NE, as described above. After that, in a step 23, the driving efficiency Etm_d of the transmission mechanisms is calculated according to the speed position, as described hereinabove.

Then, the process proceeds to a step 24, wherein the past average charge amount ENE_chave stored in the EEPROM is read in therefrom. In a step 25 following the step 24, the charging/discharging efficiency Ebat_cd of the battery 52 is calculated according to the state of charge SOC, as described hereinabove.

Next, in a step 26, the motor driving efficiency Emot_d is calculated according to the speed position, the vehicle speed VP, and the required torque TRQ, as described above. In a step 27 following the step 26, the assist travel total efficiency TE_asst is calculated by the aforementioned equation (12).

Then, the process proceeds to a step 28, wherein a map value of the assist travel total efficiency TE_asst in the EEPROM, which is associated with the current speed position, the required torque TRQ, and the vehicle speed VP, is overwritten by the value calculated in the step 27. That is, the map value is updated. After that, the present process is terminated.

As described above, according to the control system 1 for the hybrid vehicle V of the first embodiment, the four total efficiencies TE_eng, TE_asst, TE_ch, and TE_ev are calculated for each speed position by searching the above-described various maps, and the operations of the engine 3, the motor 4, and the transmission mechanisms 11 and 31 are controlled such that the hybrid vehicle V is caused to travel in a speed position and a travel mode corresponding to the highest value of the results of calculation of the total efficiencies. Therefore, it is possible to cause the hybrid vehicle V to travel in the combination of the speed position and the travel mode which provides the highest efficiency, whereby it is possible to suppress the fuel consumption of the engine 3, and thereby improve fuel economy.

Further, since the four total efficiencies TE_eng, TE_asst, TE_ch, and TE_ev are calculated by taking into account the engine fuel energy ENE_eng1, the engine driving energy ENE_eng2, the motor charging/discharging energy ENE_mot1, and the driving/charging energy ENE_mot2, it is possible to calculate the above total efficiencies as values on which the total efficiency of the hybrid vehicle V in its entirety is accurately reflected. This makes it possible, compared with the conventional case where only the fuel consumption ratio of the engine is taken into account, to cause the hybrid vehicle V to efficiently travel, thereby making it possible to further improve fuel economy.

Further, since the charge travel total efficiency TE_ch is calculated using the predicted efficiency Ehat which is a value predicting the efficiency to be exhibited when electric power charged into the battery 52 is used as motive power in the future, it is possible to further improve accuracy of calculation of the charge travel total efficiency TE_ch. Furthermore, since the assist travel total efficiency TE_asst is calculated using the past average charge amount ENE_chave which is an average value of charge amounts up to the current time, it is possible to further improve accuracy of calculation of the assist travel total efficiency TE_asst.

Note that in a case where a motor temperature sensor for detecting the temperature of the motor 4 is provided in the hybrid vehicle V, and in the above-described step 3, the EV travel mode in a certain odd-number speed position is selected, if at least one of a condition that the battery temperature TB is equal to a first predetermined temperature, and a condition that the temperature of the motor 4 is not lower than a second predetermined temperature is satisfied, the control may be performed such that the output of the motor 4 being driven is limited. With this configuration, it is possible to prevent the battery 52 and/or the motor 4 from being overheated, and thereby prolong the service lives/life of the battery 52 and/or the motor 4. Note that in this case, the motor temperature sensor corresponds to electric motor temperature-detecting means, the battery temperature sensor 63 corresponds to the electric motor temperature-detecting means, and the ECU 2 corresponds to limiting means.

Further, the travel control process may be configured such that in the case where in the above-described steps 2 and 3, the four total efficiencies TE_eng, TE_asst, TE_ch, and TE_ev are calculated, and a speed position and a travel mode are determined, when the state of charge SOC of the battery 52 is not larger than the predetermined amount, the results of calculation of the four total efficiencies TE_eng, TE_asst, TE_ch, and TE_ev are corrected so as to lengthen a time period over which a battery charging operation by the motor 4 is executed, to thereby control the operations of the engine 3, the motor 4, and the transmission mechanisms 11 and 31. With this configuration, it is possible to quickly avoid shortage of the charge amount of the battery 52. Note that in this case, the ECU 2 corresponds to the charge amount-detecting means and correction means, and the current/voltage sensor 62 corresponds to the charge amount-detecting means.

Further, the travel control process may be configured such that when determining a speed position and a travel mode in the step 3, a traveling situation of the hybrid vehicle V is predicted based on data stored in the car navigation system 66, and the speed position and the travel mode are determined further according to the predicted traveling situation of the hybrid vehicle V. With this configuration, it is possible to select a speed position and a travel mode suitable for the traveling situation of the hybrid vehicle V. This makes it possible to further improve the total efficiency of the whole hybrid vehicle, and thereby further improve fuel economy. Note that in this case, the ECU 2 corresponds to the prediction means.

Note that although the first embodiment is an example which uses the four total efficiencies TE_eng, TE_ch, TE_asst, and TE_ev as the total efficiency parameters, the total efficiency parameters used in the present invention are not limited to these, but any suitable parameters may be employed insofar as they represent the total efficiency of the whole hybrid vehicle. For example, the fuel consumption ratio or the fuel consumption amount may be used as the total efficiency parameter. In this case, it is only required that in the above-described various maps used in the first embodiment, values obtained by converting the four total efficiencies TE_eng, TE_ch, TE_asst, and TE_ev to the fuel consumption ratios or the fuel consumption amounts are used as the map values, the fuel consumption ratio or the fuel consumption amount is calculated in the step 2, and the travel mode of a speed position corresponding to the minimum value of the fuel consumption ratio or the minimum value of the fuel consumption amount out of the calculation results may be selected in the step 3.

Further, although the first embodiment is an example in which the vehicle speed VP and the required torque TRQ are used as the traveling state parameters, the traveling state parameters of the present invention are not limited to these, but any suitable parameters may be employed insofar as they represent the traveling state of the hybrid vehicle. For example, the acceleration pedal opening AP and the engine speed NE may be employed as the traveling state parameters.

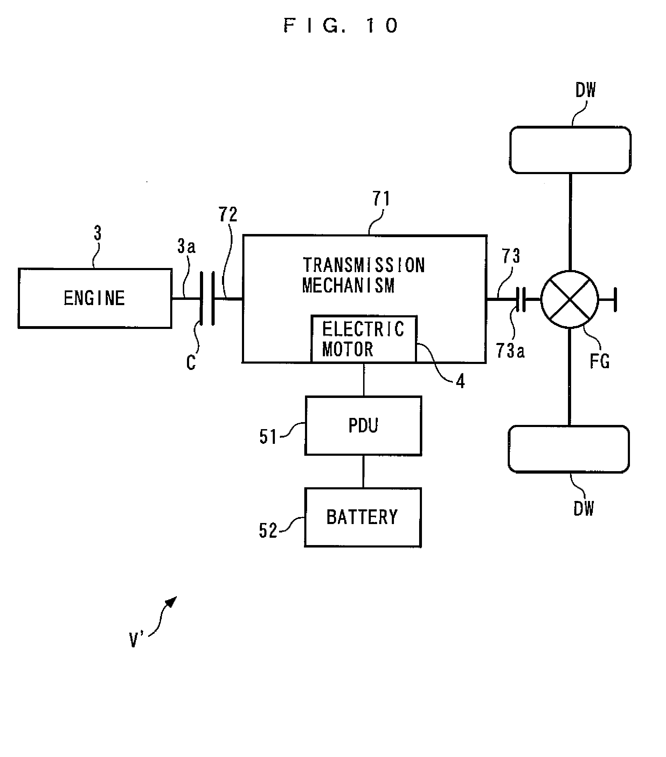

Furthermore, although the first embodiment is an example which applies the control system of the present invention to the hybrid vehicle V shown in FIG. 1, this is not limitative, but the present invention can also be applied to a hybrid vehicle V' shown in FIG. 10. In the figure, the same component elements as those of the hybrid vehicle V shown in FIG. 1 are denoted by the same reference numerals, and description thereof is omitted. The hybrid vehicle V' shown in FIG. 10 is distinguished from the hybrid vehicle V mainly in that it is provided with a transmission mechanism 71 in place of the dual clutch transmission formed by the above-described first and second transmission mechanisms 11 and 31.

The transmission mechanism 71 is a stepped automatic transmission, and includes an input shaft 72 and an output shaft 73. The input shaft 72 is connected to the crankshaft 3a via a clutch C, and the rotor 4b of the motor 4 is integrally mounted on the input shaft 72. The clutch C is a dry multiple-disc clutch, similarly to the first and second clutches C1 and C2.

A gear 73a is integrally mounted on the output shaft 73. The gear 73a is in mesh with the gear of the above-described final reduction gear box FG. The output shaft 73 is connected to the drive wheels DW via the gear 73a and the final reduction gear box FG. In the transmission mechanism 71 constructed as above, the engine motive power and the motor motive power are input to the input shaft 72, and the input motive power is transmitted to the drive wheels DW, while having the speed thereof changed in one of a plurality of speed positions (e.g. the first to seventh speed positions). Further, the operation of the transmission mechanism 71 is controlled by the ECU 2.

In a case where the hybrid vehicle V' is controlled by the control system of the present invention, although detailed description thereof is omitted, selection of the above-described travel mode and speed position is executed using the four total efficiencies according to the same control method as that used in the first embodiment. This makes it possible to obtain the same advantageous effects as provided by the above-described first embodiment.

Note that although the transmission mechanism 71 is configured to transmit both the engine motive power and the motor motive power to the drive wheels DW in a state having the speed thereof changed, the transmission mechanism 71 may be configured to transmit at least only the engine motive power to the drive wheels DW in a state having the speed thereof changed. Alternatively, a transmission mechanism which transmits the engine motive power to the drive wheels DW in a state having the speed thereof changed, and a transmission mechanism which transmits the motor motive power to the drive wheels DW in a state having the speed thereof changed may be provided separately from each other.

Next, a description will be given of a control system for a hybrid vehicle according to a second embodiment of the present invention with reference to FIGS. 11 to 13. The control system according to the second embodiment is applied to the hybrid vehicle V described in the first embodiment, and the arrangements of the ECU 2, the various sensors 60 to 66, etc. are the same as those of the first embodiment. The following description will be given mainly of different points from the first embodiment.

First, selection of the operation mode between the engine travel mode, the assist travel mode, and the charge travel mode, and selection of the speed position of the first and second transmission mechanisms 11 and 31 in each operation mode, in the second embodiment, will be described. Hereafter, the assist travel mode and the charge travel mode are collectively referred to as the HEV travel mode. First, it is determined according to the vehicle speed VP and the required torque TRQ whether to select the engine travel mode or one of the assist travel mode and the charge travel mode.

During the HEV travel mode, the engine torque is controlled to a BSFC bottom torque. The BSFC bottom torque is a torque at which the minimum fuel consumption ratio of the engine 3 can be obtained with respect to the engine speed NE determined by the relationship between a selected speed position and the vehicle speed VP, as described hereinafter. Therefore, in the above-mentioned determination, whether or not the required torque TRQ is approximately equal to the BSFC bottom torque is determined according to the vehicle speed VP and the required torque TRQ, and if the required torque TRQ is approximately equal to the BSFC bottom torque, the engine travel mode is selected as the operation mode, whereas if not, the assist travel mode, the charge travel mode, or the EV travel mode is selected.

When the engine travel mode is selected, the speed positions of the first and second transmission mechanisms 11 and 31 are selected based on a predetermined first total fuel consumption map shown in FIG. 11. The first total fuel consumption map defines the total fuel consumption ratio of the hybrid vehicle V in the engine travel mode with respect to the vehicle speed VP and the required torque TRQ for each speed position, and is divided into regions of each speed position. Here, the term "total fuel consumption ratio of the hybrid vehicle V" refers to a ratio of a fuel amount to final traveling energy, assuming that fuel as an energy source of the hybrid vehicle V is finally converted to the traveling energy of the hybrid vehicle V. In FIG. 11, the magnitude of the total fuel consumption ratio is represented by hatching. The first total fuel consumption map is created in the following manner:

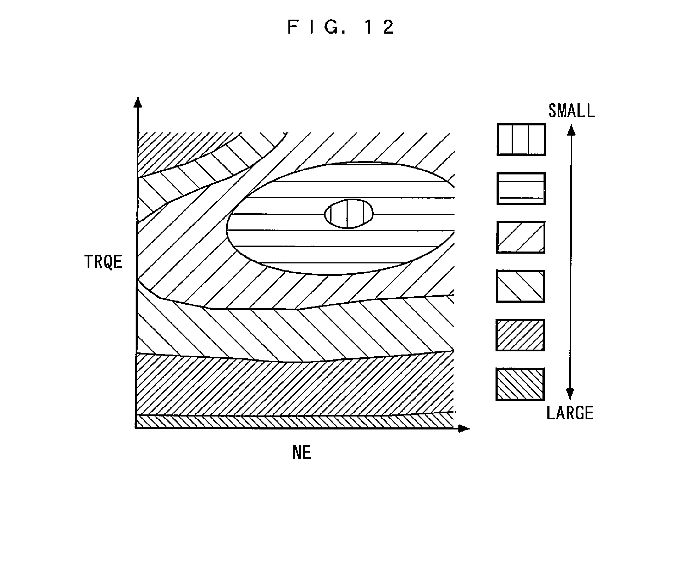

First, a base total fuel consumption map shown in FIG. 12 is created. The base total fuel consumption map defines the total fuel consumption ratio in the engine travel mode with respect to the engine speed NE and a required ENG torque TRQE for each speed position, assuming that no loss occurs in the first and second transmission mechanisms 11 and 31. The required ENG torque TRQE is a torque required of the engine 3. Further, the base total fuel consumption map is set in advance by experiment based on the efficiency of the engine 3. In FIG. 12, similarly to FIG. 11, the magnitude of the total fuel consumption ratio is represented by hatching. Further, the base total fuel consumption map is, in actuality, formed by a plurality of maps associated with the first to seventh speed positions, respectively. FIG. 12 shows an example of the third speed position.

Next, the plurality of the base total fuel consumption maps are corrected according to a difference in motive power transmission efficiency (input/output ratio) between the plurality of speed positions of the first and second transmission mechanisms 11 and 31. In this case, the motive power transmission efficiency is determined based on the number of meshes of gears, mesh efficiency, heat loss, and friction loss. Further, the corrected base total fuel consumption maps are further corrected according to predetermined electric power consumed by the motor 4 so as to cancel torque ripple (hereinafter referred to as the "torque ripple electric power"). In this case, the torque ripple electric power is determined based on the required ENG torque TRQE.

Then, the plurality of base total fuel consumption maps for each speed position as corrected as described above are overlaid on each other, whereby the first total fuel consumption map is set. When the base total fuel consumption maps are overlaid on each other, the regions of the respective speed positions are set in the first total fuel consumption map such that the minimum total fuel consumption ratio among the speed positions can be obtained.

During the engine travel mode, a speed position in which the total fuel consumption ratio is minimized with respect to the detected vehicle speed VP and the required torque TRQ is selected from the first to seventh speed positions of the first and second transmission mechanisms 11 and 31 based on the above-described first total fuel consumption map.

Further, although not shown, in the regions in the first total fuel consumption map for each speed position, hysteresis is provided between up-shift use and down-shift use.

Further, during the engine travel mode, the engine torque is controlled to the above-mentioned BSFC bottom torque by controlling the fuel injection amount, the fuel injection timing, and the ignition timing of the engine 3.

On the other hand, if it is determined by the above-described determination that one of the assist travel mode and the charge travel mode is to be selected, selection of the operation mode and speed position is performed based on a second total fuel consumption map shown in FIG. 13. The second total fuel consumption map defines the total fuel consumption ratio of the hybrid vehicle V with respect to the engine speed NE and the required ENG torque TRQE, for each of the cases of the assist travel mode and the charge travel mode, for each speed position of the first and second transmission mechanisms 11 and 31 (the upper regions in FIG. 13 are those for the assist travel mode, and the lower regions in the same are those for the charge travel mode). In FIG. 13, similarly to FIG. 11, the magnitude of the total fuel consumption ratio is represented by hatching.

Further, the second total fuel consumption map is, in actuality, formed by a plurality of maps associated with the first to seventh speed positions, respectively, and FIG. 13 shows an example of the third speed position. As described above, in a case where the engine motive power is transmitted to the drive wheels DW while having the speed thereof changed by the second transmission mechanism 31 in an even-number speed position, the transmission gear ratio of one of the first, third, fifth and seventh speed positions of the first transmission mechanism 11 can be selected as the transmission gear ratio between the motor 4 and the drive wheels DW. Therefore, although not shown, as the second total fuel consumption map, there are set maps for $3\times4 = 12$ combinations of cases where the speed of the engine motive power is changed in the second, fourth, or sixth speed position, and cases where the transmission gear ratio between the motor 4 and the drive wheels DW is equal to the transmission gear ratio of the first, third, fifth or seventh speed position.

Further, the second total fuel consumption map is set by the following method: The above-described base total fuel consumption map shown in FIG. 12 is corrected, and the base total fuel consumption maps for the assist travel mode and the charge travel mode, obtained by this correction, are overlaid on each other, whereby the second total fuel consumption map is set for each speed position. When the base total fuel consumption maps are overlaid, regions for the assist travel mode and the charge travel mode are set in the second total fuel consumption map such that a smaller total fuel consumption ratio can be obtained. In this case, the base total fuel consumption maps are corrected in the following manner:

Similarly to the case of the above-described first total fuel consumption map, first, the base total fuel consumption map is corrected according to a difference in predetermined motive power transmission efficiency between the plurality of speed positions of the first and second transmission mechanisms 11 and 31, and the torque ripple electric power. Next, as for the second total fuel consumption map for the assist travel mode, the base total fuel consumption map corrected as above is further corrected according to the driving efficiency of the motor 4, iron loss and copper loss in the motor 4, loss in the PDU 51, loss in three-phase coils of the stator 4a, discharging efficiency of the battery 52, and the past charging efficiency.

In this case, the driving efficiency of the motor 4 has a correlation with the rotational speed of the motor 4, and the iron loss and the copper loss in the motor 4, the loss in the PDU 51, and the loss in the three-phase coils of the stator 4a have a correlation with electric power supplied to the motor 4, i.e. the torque of the motor 4. Therefore, the driving efficiency of the motor 4, the iron loss and the copper loss in the motor 4, the loss in the PDU 51, and the loss in the three-phase coils of the stator 4a are determined according to the vehicle speed VP and the required torque TRQ. Further, in the above correction, the discharging efficiency of the battery 52 is regarded to be a predetermined value.

Further, the above-mentioned past charging efficiency is a past value, assuming that electric power used in the assist travel mode was charged using part of the engine motive power in the past charge travel mode, which is obtained by multiplying the efficiency of the engine 3 during the charging, the motive power transmission efficiencies of the first and second transmission mechanisms 11 and 31, and the power generation efficiency of the motor 4, and in the above correction, is regarded to be a predetermined value.

On the other hand, as for the second total fuel consumption map for the charge travel mode, the base total fuel consumption map corrected according to the above-mentioned difference in motive power transmission efficiency is further corrected according to the power generation efficiency of the motor 4, the iron loss and the copper loss in the motor 4, the loss in the PDU 51, the loss in the three-phase coils of the stator 4a, the charging efficiency of the battery 52, and EV predicted efficiency. In this case, the power generation efficiency of the motor 4 has a correlation with the rotational speed of the motor 4, and hence is determined according to the vehicle speed VP and the required torque TRQ. Further, as described above, the iron loss and the copper loss in the motor 4, the loss in the PDU 51, and the loss in the three-phase coils of the stator 4a are determined according to the vehicle speed VP and the required torque TRQ. Furthermore, the charging efficiency of the battery 52 is regarded to be a predetermined value in the above correction. Further, the above-mentioned EV predicted efficiency is a predicted value obtained by multiplying the driving efficiency of the motor 4, the discharging efficiency of the battery 52, and the motive power transmission efficiencies of the first and second transmission mechanisms 11 and 31, which are to be exhibited when electric power charged in the current charge travel mode is used thereafter in the assist travel mode, and in the above correction, is regarded to be a predetermined value (e.g. 80%).

If it is determined that the assist travel mode or the charge travel mode is to be selected, the above-described plurality of second total fuel consumption maps are searched according to the detected vehicle speed VP and the required torque TRQ to thereby calculate the total fuel consumption ratio in each speed position in the operation mode associated with the detected vehicle speed VP and the required torque TRQ. Then, the speed position at which the total fuel consumption ratio is minimized is selected from the calculated plurality of total fuel consumption ratios. Further, one of the assist travel mode and the charge travel mode is selected which is associated with the detected vehicle speed VP and the required torque TRQ in the second total fuel consumption map.

Further, although not shown, in the regions in the second total fuel consumption map for each speed position, hysteresis is provided between up-shift use and down-shift use. Note that in the second embodiment, the ROM of the ECU 2 stores not the base total fuel consumption map (FIG. 12), but only the first and second total fuel consumption maps (FIGS. 11 and 13), and the determination is performed by overlaying the two maps on each other.

Further, during the assist travel mode, basically, the engine torque is controlled to the BSFC bottom torque by controlling the fuel injection amount and so forth, and an insufficient amount of engine torque with respect to the required torque TRQ is compensated for by motor torque, whereby assistance of the engine 3 by the motor 4 is performed. On the other hand, during the charge travel mode, basically, the engine torque is controlled to the BSFC bottom torque by controlling the fuel injection amount and the like, and electric power is generated by the motor 4 using a surplus amount of the engine torque with respect to the required torque TRQ, whereby the generated electric power is charged into the battery 52 (regeneration).

Further, during the assist travel mode and the charge travel mode, in a case where the hybrid vehicle V is traveling by transmitting the engine motive power to the drive wheels DW in a state where the speed of the engine motive power is changed by the second transmission mechanism 31, when selecting a speed position of the first transmission mechanism 11, a speed position at which the total fuel consumption ratio is minimized is selected from the plurality of speed positions according to whether to perform assistance of the engine 3 or regeneration by the motor 4.

Further, when the state of charge SOC is not larger than the predetermined value, and is larger than a lower limit value which is slightly smaller than the predetermined value, an amount of electric power which can be supplied from the battery 52 to the motor 4 is relatively small, and hence the ECU 2 limits assistance of the engine 3 by the motor 4. An amount by which the assistance is limited becomes larger as the state of charge SOC is closer to the lower limit value. In this case, the engine torque is increased such that the amount by which the assistance is limited is compensated for.

Further, when the battery temperature TB which is detected becomes not lower than a predetermined temperature during the assist travel mode, the ECU 2 limits the output of the motor 4 to thereby limit assistance of the engine 3 by the motor 4. In this case, the engine torque is increased such that the amount by which the assistance is limited is compensated for. Further, when the battery temperature TB becomes not lower than the predetermined temperature during the EV travel mode, the ECU 2 inhibits the EV travel mode, and switches the operation mode to the engine travel mode, the charge travel mode, or the assist travel mode. In this switching of the operation mode, the engine 3 is started by the above-described ENG start mode. Further, when the operation mode is switched to the assist travel mode, the output of the motor 4 is limited, as mentioned above.

Further, when the state of charge SOC is not larger than a predetermined lower limit value, a forced regeneration mode is selected as the operation mode, whereby the regeneration is forcibly performed by the motor 4 using part of the engine motive power. During the forced regeneration mode, selection of the speed position is performed using a third total fuel consumption map (not shown) in place of the above-described second total fuel consumption map. This third total fuel consumption map defines the total fuel consumption ratio with respect to the vehicle speed VP and the required torque TRQ for each speed position for during the forced regeneration mode. Further, the third total fuel consumption map is set in advance by correcting the base total fuel consumption map shown in FIG. 12 based on the difference in motive power transmission efficiency between the plurality of speed positions, the torque ripple electric power, the power generation efficiency of the motor 4 during the forced regeneration mode, and so forth.

Further, the ECU 2 predicts a traveling situation of the hybrid vehicle V based on information on a road on which the hybrid vehicle V is traveling and neighborhood roads, stored in the above-mentioned car navigation system 66. The ECU 2 selects the speed position not only according to the first and second total fuel consumption maps but also according to the predicted traveling situation of the hybrid vehicle V. As a consequence, when the hybrid vehicle V is predicted to travel downhill, the above-described deceleration regeneration mode is selected, and a speed position in which the high power generation efficiency of the motor 4 can be obtained is selected, whereas when the hybrid vehicle V is predicted to travel uphill, the assist travel mode is selected, and a lower speed position which can output a larger torque is selected. Further, during the EV travel mode and also when the hybrid vehicle V is predicted to shift to cruising travel, a speed position which is suitable for using only the motor 4 as the motive power source is selected.

Further, the travel modes of the hybrid vehicle V include a paddle shift mode and a sport mode. The paddle shift mode is a travel mode in which the driver causes the vehicle to travel while freely selecting a speed position using a shift switch (not shown) provided on a steering wheel (not shown) of the hybrid vehicle V. The sport mode is a travel mode in which the driver causes the vehicle to travel while obtaining a larger acceleration feeling by setting the speed position to a lower speed position. Selection of the paddle shift mode and the sport mode is performed according to an operation of a shift lever (not shown) by the driver. Further, when one of the paddle shift mode and the sport mode has been selected as the travel mode, assistance of the engine 3 by the motor 4 is performed.

Further, the correspondence between various elements of the second embodiment and various elements of the invention is as follows: The crankshaft 3a, the PDU 51, and the battery 52 in the second embodiment correspond to an engine output shaft, an electric circuit, and a storage battery in the present invention, respectively. Further, the ECU 2 in the second embodiment corresponds to prediction means in the present invention.

Furthermore, the state of charge SOC and the battery temperature TB in the second embodiment correspond to a state of charge of a storage battery and temperature of a storage battery in the present invention, respectively, and the vehicle speed VP and the required torque TRQ in the second embodiment correspond to the traveling state of the hybrid vehicle in the present invention.

As described above, according to the second embodiment, when the crankshaft 3a of the engine 3 and the first input shaft 13 of the first transmission mechanism 11 are engaged with each other by the first clutch C1, and also engagement between the crankshaft 3a and the second input shaft 32 of the second transmission mechanism 31 is released by the second clutch C2, the engine motive power is transmitted to the drive wheels DW in a state in which the speed thereof is changed in one of the plurality of speed positions of the first transmission mechanism 11. Further, when engagement between the crankshaft 3a and the first input shaft 13 is released by the first clutch C1, and also the crankshaft 3a and the second input shaft 32 are engaged with each other by the second clutch C2, the engine motive power is transmitted to the drive wheels DW in a state in which the speed thereof is changed in one of the plurality of speed positions of the second transmission mechanism 31. Furthermore, the motor motive power is transmitted to the drive wheels DW in a state in which the speed thereof is changed in one of the plurality of speed positions of the first transmission mechanism 11.

Further, the first total fuel consumption map which defines the total fuel consumption ratio in the engine travel mode is set by correcting the base total fuel consumption maps which define the total fuel consumption ratio with respect to the engine speed NE and the required ENG torque TRQE for each speed position, based on a difference in motive power transmission efficiency between the plurality of speed positions of the first and second transmission mechanisms 11 and 31. Therefore, it is possible to properly define the total fuel consumption ratio in the engine travel mode according to the motive power transmission efficiency which is different depending on each speed position.

Further, the second total fuel consumption map for the assist travel mode is set by correcting the above-described base total fuel consumption maps based on a difference in motive power transmission efficiency between the plurality of speed positions, and the driving efficiency of the electric motor to be exhibited when assistance of the engine by the electric motor is performed. Further, the second total fuel consumption map for the charge travel mode is set by correcting the base total fuel consumption maps based on a difference in motive power transmission efficiency between the plurality of speed positions, and the power generation efficiency of the electric motor to be exhibited when regeneration is performed by the electric motor using part of the motive power from the engine. Therefore, it is possible to properly define the total fuel consumption ratio in the assist travel mode according to the motive power transmission efficiency which is different depending on each speed position and the driving efficiency of the electric motor. Similarly, it is possible to properly define the total fuel consumption ratio in the charge travel mode according to the motive power transmission efficiency which is different depending on each speed position and the charging efficiency of the electric motor.

Further, a speed position at which the total fuel consumption ratio is minimized is selected from the plurality of speed positions based on the first total fuel consumption map during the engine travel mode, and based on the second total fuel consumption map during the assist travel mode and the charge travel mode. Therefore, it is possible to properly select the speed position at which the total fuel consumption ratio is minimized from the plurality of speed positions according to the motive power transmission efficiency in each speed position, the power generation efficiency and the driving efficiency of the motor 4, which makes it possible to improve the fuel economy of the hybrid vehicle V.

Further, as to the first transmission mechanism 11 (odd-number speed position) and the second transmission mechanism 31 (even-number speed position), the latter suffers a larger loss since it has a larger number of meshes of gears, and further in the case of an even-number speed position, the reverse shaft 42 is rotated together via the idler gear 37. This loss is caused e.g. by a friction loss and stirring of lubricating oil in the gears, and normally amounts to approximately 3%. The friction loss is converted to a heat loss. Further, when the above-mentioned pre-shifting is performed, in addition to the second transmission mechanism 31 which transmits the engine motive power to the drive wheels DW, the first transmission mechanism 11 is rotated together in a state engaged with each other via the output shaft 21, which requires an extra motive power for causing the motor 4 to rotate. On the other hand, according to the second embodiment, selection of the speed position can be performed using the total fuel consumption ratios which are properly set according to the motive power transmission efficiency in each speed position of the first and second transmission mechanisms 11 and 31, which makes it possible to effectively obtain the advantageous effect that the fuel economy of the hybrid vehicle V can be improved.

Further, when an amount of electric power which can be supplied from the battery 52 to the motor 4 is small, the amount by which the assistance of the engine 3 by the motor 4 is limited is corrected, and hence it is possible to properly limit the assistance. Further, when the battery temperature TB which is detected is not lower than the predetermined temperature, the output of the motor 4 is limited. This makes it possible to suppress a rise in the battery temperature TB.

Further, when the state of charge SOC is not higher than the lower limit value, the forced regeneration mode is selected, whereby the regeneration is forcibly performed by the motor 4. Therefore, it is possible to avoid overdischarge of the battery 52. During the forced regeneration mode, selection of the speed position is performed using the third total fuel consumption map (not shown) in place of the above-described second total fuel consumption map. The third total fuel consumption map is set by correcting the base total fuel consumption maps shown in FIG. 12 according to the difference in motive power transmission efficiency between the plurality of speed positions, the power generation efficiency of the motor 4 in the forced regeneration mode, and the like. Therefore, it is possible to select a speed position using the third total fuel consumption map which is appropriate and suitable for the forced regeneration mode.

Further, the first and second total fuel consumption maps are divided into regions for each speed position, and these regions have a hysteresis between up-shift use and down-shift use. This makes it possible to prevent hunting between up-shift and down-shift.

Further, a traveling situation of the hybrid vehicle V is predicted based on the data indicative of information on a road on which the hybrid vehicle V is traveling and neighborhood roads, stored in the car navigation system 66, and selection of the speed position is performed according to the predicted traveling situation of the hybrid vehicle V. As a consequence, when the hybrid vehicle V is predicted to travel downhill, a speed position which makes it possible to obtain a high power generation efficiency of the motor 4 can be selected, whereas when the hybrid vehicle V is predicted to travel uphill, a lower speed position which makes it possible to output a larger torque can be selected. Further, during the EV travel mode and also when the hybrid vehicle V is predicted to shift to cruising travel, a speed position which is suitable for the EV travel mode can be selected.

Further, in a case where during the assist travel mode and the charge travel mode, the hybrid vehicle V is traveling by transmitting the engine motive power to the drive wheels DW in a state where the speed of the engine motive power is changed by the second transmission mechanism 31, when selecting a speed position of the first transmission mechanism 11, a speed position at which the total fuel consumption ratio is minimized is selected from the plurality of speed positions according to whether to perform assistance of the engine 3 or regeneration by the motor 4. This makes it possible to select speed positions of the first transmission mechanism 11 suitable for the engine assistance and regeneration by the motor 4. For example, when the speed position of the second transmission mechanism 31 is the fourth speed position, and if assistance by the motor 4 is to be performed, the fifth speed position can be selected, whereas if regeneration is to be performed, the third speed position can be selected.

Further, when one of the paddle shift mode and the sport mode is selected as the travel mode of the hybrid vehicle V, i.e. when it is estimated that the driver is driving the hybrid vehicle V with preference to a driving feeling or a feeling of acceleration, assistance of the engine 3 by the motor 4 is performed. This makes it possible to transmit torque larger than that corresponding to the selected travel mode to the drive wheels DW.

Further, the first and second total fuel consumption maps are set by correcting the base total fuel consumption maps further according to electric power consumed by the motor 4 so as to cancel torque ripple electric power, i.e. torque ripple, and hence it is possible to properly define the total fuel consumption ratio further according to the loss of the electric power.

Further, the second total fuel consumption map is set by correcting the base total fuel consumption maps further according to iron loss and copper loss in the motor 4, loss in the PDU 51, and loss in the three-phase coils of the motor 4, and hence it is possible to properly define the total fuel consumption ratio further according to these losses.

Further, during the assist travel mode and the charge travel mode, the speed positions of the first and second transmission mechanisms 11 and 31 are selected by searching the second total fuel consumption map (FIG. 13) according to the detected vehicle speed VP and the required torque TRQ. The second total fuel consumption map is set by correcting the base total fuel consumption maps according to the iron loss and the copper loss in the motor 4, the loss in the three-phase coils of the stator 4a, and the difference in motive power transmission efficiency between the plurality of speed positions. Further, the base total fuel consumption maps are set based on the efficiency of the engine 3, i.e. loss in the engine 3.

As is clear from the above, the second total fuel consumption map defines the total fuel consumption ratio according to the loss in the engine 3, the loss in the motor 4, and the loss in each speed position of the first and second transmission mechanisms 11 and 31 with respect to the vehicle speed VP and the required torque TRQ for each speed position. Further, as described above, the total fuel consumption ratio is a ratio of a fuel amount to the final traveling energy calculated assuming that fuel as an energy source of the hybrid vehicle V is finally converted to the traveling energy of the hybrid vehicle V, and corresponds to a reciprocal of the total conversion efficiency of the hybrid vehicle V from fuel to the traveling energy. Therefore, it is possible to properly define the total conversion efficiency of the hybrid vehicle V according to the loss in the engine 3, the loss in the motor 4, and the loss in each speed position of the first and second transmission mechanisms 11 and 31.

Further, the speed positions of the first and second transmission mechanisms 11 and 31 are selected by searching the second total fuel consumption map according to the detected vehicle speed VP and the required torque TRQ, and hence it is possible to properly select a speed position at which the total conversion efficiency is highest from the plurality of speed positions, which makes it possible to improve the fuel economy of the hybrid vehicle V.

Further, the present invention can be applied to the above-described hybrid vehicle V' shown in FIG. 10. Also when the present invention is applied to the above-described hybrid vehicle V', selection of the operation mode, the speed position, and the travel mode is performed similarly to the case of the control system according to the above-described second embodiment, and hence detailed description thereof is omitted. This makes it possible to obtain the same advantageous effects as provided by the above-described second embodiment.

Note that although the transmission mechanism 71 is configured to transmit both the engine motive power and the motor motive power to the drive wheels DW in a state having the speed thereof changed, the transmission mechanism 71 may be configured to transmit only the engine motive power to the drive wheels DW in a state having the speed thereof changed. Alternatively, a transmission mechanism which transmits the engine motive power to the drive wheels DW in a state having the speed thereof changed, and a transmission mechanism which transmits the motor motive power to the drive wheels DW in a state having the speed thereof changed may be provided separately from each other. Furthermore, although the transmission mechanism 71 is a stepped automatic transmission, it may be a stepless automatic transmission (CVT) which can change the speed position in a step-by-step manner.

Note that the present invention is by no means limited to the second embodiment described above, but can be practiced in various forms. For example, although in the second embodiment, correction of the amount by which the assistance of the engine 3 by the motor 4 is limited is performed according to an amount of electric power which can be supplied from the battery 52 to the motor 4, in place of or in combination with this, the correction may be performed according to the motive power which can be output by the motor 4. In this case, the motive power which can be output by the motor 4 is determined e.g. according to the state of charge SOC, and the temperature of the motor 4, detected by a sensor or the like. Further, although in the second embodiment, the motor motive power is limited when the battery temperature TB is not lower than the predetermined temperature, in place of or in combination with this, the motor motive power may be limited when the temperature of the motor 4, detected by a sensor or the like, is not lower than an associated predetermined temperature. This makes it possible to suppress a rise in the temperature of the motor 4.

Further, although in the second embodiment, the first and second total fuel consumption maps are set in advance by correcting the base total fuel consumption maps according to various parameters regarded to be predetermined values, the maps may be set in the following manner: The base total fuel consumption maps are stored in the memory means, such as the ROM, and the first and second total fuel consumption maps may be set (updated) by calculating these parameters on a real-time basis, and correcting the base total fuel consumption maps according to the calculated various parameters on a real-time basis. In this case, the charging efficiency and the discharging efficiency of the battery 52, which are the various parameters, are calculated e.g. by searching predetermined maps (not shown) according to the battery temperature TB. Note that in the calculation of the various parameters, predetermined equations may be used in place of the maps.

Further, although in the second embodiment, the second total fuel consumption map is formed by the plurality of maps associated with the combinations of the plurality of speed positions of the first and second transmission mechanisms 11 and 31, the second total fuel consumption map may be formed, for example, in the following manner: While the single second total fuel consumption map is formed by overlaying these plurality of maps on each other similarly to the first total fuel consumption map, when overlaying the maps on each other, regions of each speed position may be set in the second total fuel consumption map such that the minimum total fuel consumption ratio among the plurality of speed positions can be obtained.

Furthermore, although in the second embodiment, the total fuel consumption ratio is used as the parameter indicative of the total fuel consumption of the hybrid vehicle V, V', the total fuel consumption amount may be used. Further, although in the second embodiment, the engine speed NE and the required ENG torque TRQE are used as the parameters for defining the base total fuel consumption map (FIG. 12), the vehicle speed or the rotational speed of the drive wheels may be used in place of the engine speed NE, and the driving force (N · m/s) or load (horsepower) of the hybrid vehicle may be used in place of the required ENG torque TRQE.

Further, although in the second embodiment, correction according to the power generation efficiency of the motor 4 and correction according to the driving efficiency of the motor 4 are performed so as to obtain the second fuel consumption map for the charge travel mode and the assist travel mode, only one of these corrections may be performed. Further, although in the second embodiment, correction according to the difference in motive power transmission efficiency between the plurality of speed positions of the first and the second transmission mechanisms 11 and 31 is performed so as to obtain the first total fuel consumption map, correction according to the difference in motive power transmission efficiency between the plurality of speed positions of one of the first and the second transmission mechanisms 11 and 31 may be performed. Furthermore, although the second embodiment is an example which applies the present invention to the hybrid vehicles V and V' including both of the paddle shift mode and the sport mode as the travel modes, the present invention can be applied to a hybrid vehicle including one of the paddle shift mode and the sport mode.

Next, a description will be given of a control system for a hybrid vehicle according to a third embodiment of the present invention with reference to FIGS. 14 to 17. The control system according to the third embodiment is applied to the hybrid vehicle V described in the first embodiment, and the arrangements of the ECU 2, the various sensors 60 to 66, and so forth are the same as those of the first embodiment. The following description will be given mainly of different points from the first embodiment.

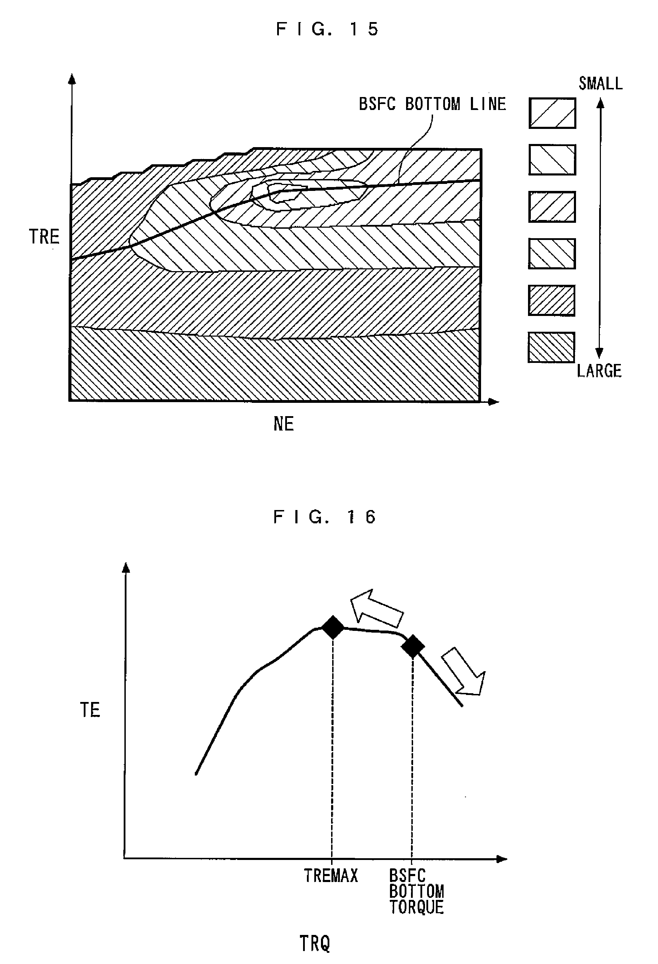

In the third embodiment, selection of the above-described engine travel mode, assist travel mode, or charge travel mode is performed in the following manner: In the engine travel mode, the engine torque is controlled to the BSFC bottom torque. FIG. 15 shows a fuel consumption ratio map which defines the fuel consumption ratio of the engine 3 with respect to the engine speed NE and an engine required torque TRE. As shown in the figure, the BSFC bottom torque is a torque which makes it possible to obtain the minimum fuel consumption ratio of the engine 3 with respect to the engine speed NE determined by the speed position of the engine 3 and the vehicle speed VP.

Therefore, selection of the travel mode is basically performed according to a magnitude relationship between the BSFC bottom torque and the required torque TRQ, and when the both are approximately equal to each other, the engine travel mode is selected. Further, when the BSFC bottom torque is smaller than the required torque TRQ, the assist travel mode is selected so as to compensate for an insufficient amount of engine torque, whereas when the BSFC bottom torque is larger than the required torque TRQ, the charge travel mode is selected so as to use a surplus amount of engine torque for regeneration.

Next, a process for controlling the engine 3 and the motor 4 according to the third embodiment of the present invention will be described with reference to FIG. 14. The present process is executed by the ECU 2 at predetermined time intervals when the assist travel mode or the charge travel mode is selected as the travel mode.

In the present process, first, in a step 101, the required torque TRQ is calculated according to the accelerator pedal opening AP. Next, the BSFC bottom torque is calculated by searching the fuel consumption ratio map shown in FIG. 15 according to the engine speed NE (step 102). Next, a target torque TRECMD of the engine 3 is set to the calculated BSFC bottom torque (optimum point) (step 103).

Next, the efficiency of the engine 3, the efficiency of the motor 4, the efficiencies of the first and second transmission mechanisms 11 and 31, and the efficiency of the battery 52 are calculated according to the selected travel mode, the vehicle speed VP, the speed position of the engine 3, the calculated BSFC bottom torque, and so forth (step 104). Next, a total efficiency TE of the hybrid vehicle V is calculated by a predetermined equation using these calculated efficiencies (step 105).

The total efficiency TE corresponds to total efficiency at which fuel as an energy source of the hybrid vehicle V is converted finally to traveling energy of the hybrid vehicle V. Note that in the charge travel mode, an EV predicted efficiency is added as an element used for calculating the total efficiency TE. The EV predicted efficiency is a predicted value obtained by multiplying the driving efficiency of the motor 4, the discharging efficiency of the battery 52, and the motive power transmission efficiencies of the first and second transmission mechanisms 11 and 31, which are to be exhibited when electric power charged in the charge travel mode is used e.g. in the assist travel mode in the future.

Next, a maximum efficiency engine torque TREMAX at which the total efficiency TE is maximized is calculated (step 106). This calculation is performed in the following manner: First, as shown in FIG. 16, while shifting the engine torque from the BSFC bottom torque in a vertical direction, a plurality of total efficiencies TE exhibited when other conditions than the engine torque are the same are calculated as described above. Then, a peak position of the total efficiency TE is determined from states of change of the plurality of calculated total efficiencies TE, e.g. using a gradient method, and an engine torque corresponding to the determined peak position is determined as the maximum efficiency engine torque TREMAX.

Next, the target torque TRECMD of the engine 3 is set to the calculated maximum efficiency engine torque TREMAX (step 107), and is moved from the BSFC bottom torque. Next, a difference between the required torque TRQ calculated in the step 101 and the target torque TRECMD of the engine 3 is set as a target torque TRMCMD of the motor 4 (step 108).

Next, the operation of the engine 3 is controlled such that the target torque TRECMD of the engine 3 set in the step 107 can be obtained (step 109). Further, the operation of the motor 4 is controlled based on the target torque TRMCMD of the motor 4 (step 110), followed by terminating the present process. In this case, when the travel mode is the assist travel mode, powering by the motor 4 is performed so as to absorb an insufficient amount of engine torque with respect to the required torque TRQ, and when the travel mode is the charge travel mode, regeneration by the motor 4 is performed so as to absorb a surplus amount of engine torque with respect to the required torque TRQ.

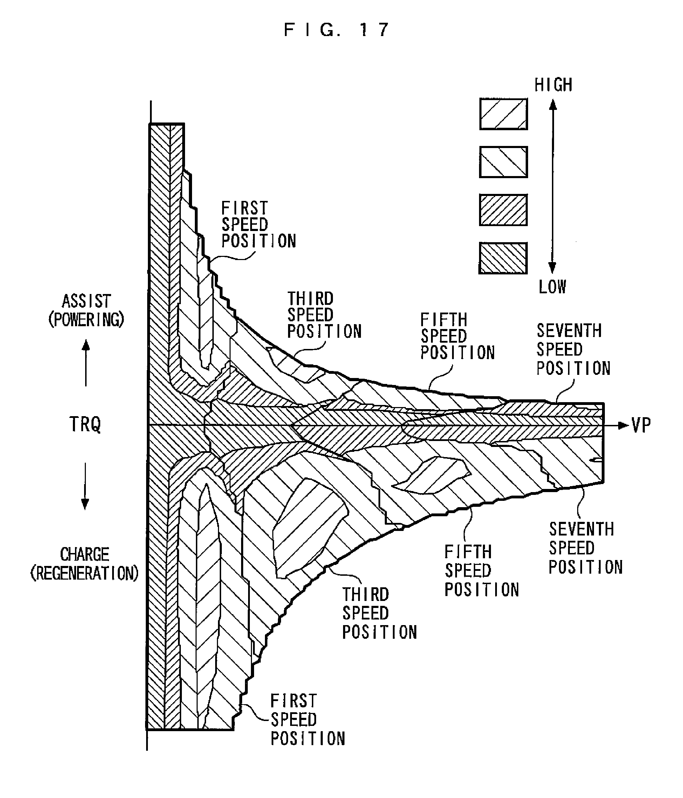

Note that in the above-described case where the operation of the motor 4 is controlled, when the speed of the engine motive power is changed by the second transmission mechanism 31, the speed position for the motor motive power is selected by searching a motor-side efficiency map shown in FIG. 17 according to the vehicle speed VP and the required torque TRQ. The motor-side efficiency includes the discharging efficiency of the battery 52, the driving efficiency of the motor 4, and the motive power transmission efficiency of the first transmission mechanism 11, in the case where powering is performed by the motor 4 in the assist travel mode, and includes the motive power transmission efficiency of the first transmission mechanism 11, the power generation efficiency of the motor 4, and the charging efficiency of the battery 52, in the case where regeneration is performed by the motor 4 in the charge travel mode. Upper regions in FIG. 17 are those for the assist travel mode (powering), and lower regions are those for the charge travel mode (regeneration).

The motor-side efficiency map is set in the following manner: First, a base map (not shown) which defines the motor-side efficiency with respect to the vehicle speed VP and the required torque TRQ is created for each speed position of the first transmission mechanism 11. Next, the motor-side efficiency map is set by overlaying all of these created base maps on each other, causing portions of the base maps, each indicating the maximum motor-side efficiency, to remain, and dividing between the regions for the respective speed positions using boundary lines.

Therefore, by searching the motor-side efficiency map, and determining a speed position corresponding to a combination of the vehicle speed VP and the required torque TRQ, it is possible to select a speed position which makes it possible to obtain the maximum motor-side efficiency as the speed position for the motor motive power, from the speed positions of the first transmission mechanism 11.

Further, when the detected state of charge SOC of the battery 52 is not higher than the predetermined value, the ECU 2 controls the operation of the motor 4 such that the amount of regeneration by the motor 4 is increased in the charge travel mode so as to restore the state of charge SOC. In this case, the engine torque is increased to compensate for an increased amount of the amount of regeneration.

Furthermore, when the detected battery temperature TB becomes not lower than the predetermined temperature during the assist travel mode, the output of the motor 4 is limited to thereby limit the assistance of the engine 3 by the motor 4. In this case, the engine torque is increased to compensate for an amount by which the assistance is limited.

Further, the ECU 2 predicts the traveling situation of the hybrid vehicle V based on information on a road on which the hybrid vehicle V is traveling and neighborhood roads, input from the above-mentioned car navigation system 66. Then, the ECU 2 selects a speed position according to the predicted traveling situation of the hybrid vehicle V.

As described above, according to the third embodiment, the BSFC bottom torque is calculated according to the vehicle speed VP and the speed position for the engine motive power (step 102 in FIG. 14), and the target torque TRECMD of the engine 3 is set to the BSFC bottom torque (step 103). Further, the maximum efficiency engine torque TREMAX at which the total efficiency TE of the hybrid vehicle V is maximized is calculated, and the target torque TRECMD of the engine 3 is shifted from the BSFC bottom torque to the maximum efficiency engine torque TREMAX (step 107).

Then, the operation of the engine 3 is controlled such that the shifted target torque TRECMD can be obtained, and the operation of the motor 4 is controlled such that a difference between the required torque TRQ and the shifted target torque TRECMD of the engine 3 (= the target torque TRMCMD of the motor 4) is compensated for or absorbed by powering or regeneration by the motor 4. As described above, by properly allocating the target torque TRECMD of the engine 3 and the target torque TRMCMD of the motor 4, it is possible to control the efficiency of the whole hybrid vehicle V to the maximum efficiency, while suppressing the fuel consumption ratio of the engine 3, which makes it possible to improve the fuel economy of the hybrid vehicle V to the greatest extent.

Further, also in a case where the first and second transmission mechanisms 11 and 31 are different in motive power transmission efficiency from each other, the difference in motive power transmission efficiency is reflected on the total efficiency TE of the hybrid vehicle V, and hence it is possible to effectively obtain the above-mentioned advantageous effects.

Furthermore, the efficiencies used for calculating the total efficiency TE of the hybrid vehicle V include the respective efficiencies of the engine 3, the first and second transmission mechanisms 11 and 31, the motor 4, and the battery 5, and hence it is possible to accurately calculate the total efficiency TE while causing losses in these component elements to be reflected thereon, and accordingly, it is possible to properly shift the target driving force of the engine, which makes it possible to further improve the fuel economy of the hybrid vehicle V.

Further, in a case where the operation of the motor 4 is controlled in the assist travel mode or the charge travel mode, when the speed of the engine motive power is changed by the second transmission mechanism 31, by searching the motor-side efficiency map shown in FIG. 17, a speed position which makes it possible to obtain the highest motor-side efficiency is selected from the speed positions of the first transmission mechanism 11 as the speed position of the motor motive power. Therefore, it is possible to more efficiently perform powering or regeneration by the motor 4 in a state in which the motor-side efficiency is highest.

Furthermore, when the state of charge SOC of the battery 52 is not higher than the predetermined value, the operation of the motor 4 is controlled such that the amount of regeneration by the motor 4 is increased in the charge travel mode, and hence it is possible to positively restore the state of charge SOC of the battery 52 which has been lowered. Further, when the battery temperature TB is not lower than the predetermined temperature, the output of the motor 4 is limited, which makes it possible to suppress a rise in the battery temperature TB.

Further, a traveling situation of the hybrid vehicle V is predicted based on data input from the car navigation system 66, and the speed position is selected according to the prediction result, and hence it is possible to select a speed position suitable for the predicted traveling situation of the hybrid vehicle V in advance. For example, when the hybrid vehicle V is predicted to travel downhill, a speed position which makes it possible to obtain a high power generation efficiency of the motor 4 can be selected, whereas when the hybrid vehicle V is predicted to travel uphill, a lower speed position which makes it possible to output a larger torque can be selected.

Next, a process for controlling the engine 3 and the motor 4 according to a fourth embodiment of the present invention will be described with reference to FIG. 18. Similarly to the control process in FIG. 14, the present process is executed by the ECU 2 at predetermined time intervals when the assist travel mode or the charge travel mode is selected as the travel mode.

In the present process, first, steps 111 to 113 are executed similarly to the steps 101 to 103 in FIG. 14, whereby the required torque TRQ and the BSFC bottom torque are calculated, and the target torque TRECMD of the engine 3 is set to the BSFC bottom torque (optimum point).

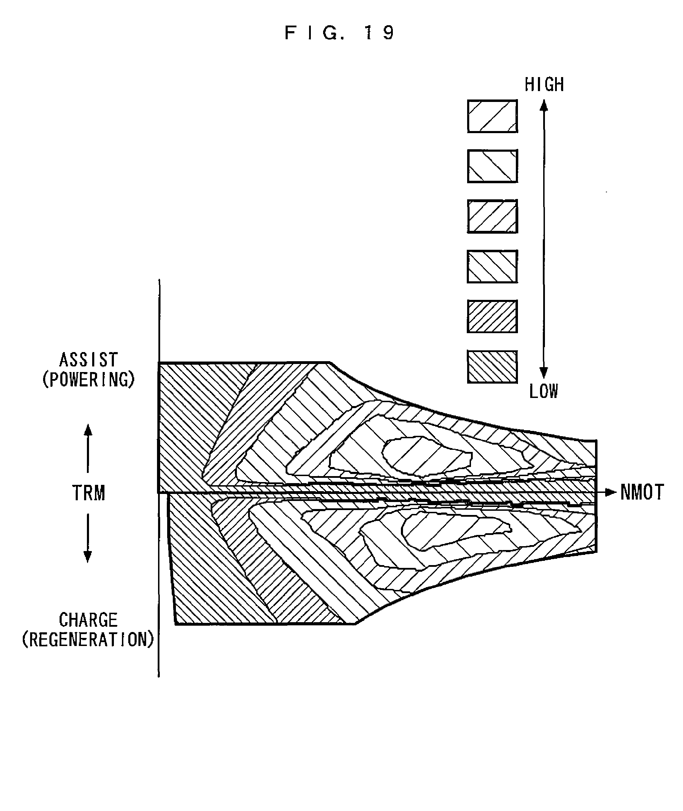

Next, a maximum efficiency motor torque TRMMAX is calculated by searching a motor efficiency map shown in FIG. 19 according to the detected motor speed NMOT (step 114). The motor efficiency map defines the efficiency of the motor 4 with respect to the motor speed NMOT and a motor required torque TRE. Further, the maximum efficiency motor torque TRMMAX is a torque (optimum point) which makes it possible to obtain the maximum efficiency of the motor 4 with respect to the motor speed NMOT, and corresponds to the BSFC bottom torque of the engine 3. Upper regions in the motor efficiency map are those for the assist travel mode (powering), and lower regions are those for the charge travel mode (regeneration).

Then, the target torque TRMCMD of the motor 4 is set to the calculated maximum efficiency motor torque TRMMAX (step 115). Further, the target torque TRECMD of the engine 3 is set to a difference between the required torque TRQ calculated in the step 111 and the maximum efficiency motor torque TRMMAX (= TRQ - TRMMAX) (step 116), whereby it is shifted from the BSFC bottom torque.

Next, the operation of the engine 3 is controlled such that the shifted target torque TRECMD of the engine 3, set in the step 116, can be obtained (step 117), and the operation of the motor 4 is controlled based on the target torque TRMCMD of the motor 4 (step 118), followed by terminating the present process.

As described above, according to the fourth embodiment, the maximum efficiency motor torque TRMMAX is calculated according to the motor speed NMOT (step 114), and the target torque TRMCMD of the motor 4 is set to the maximum efficiency motor torque TRMMAX (step 115). Further, the target torque TRECMD of the engine 3 is set to the difference between the required torque TRQ and the target torque TRMCM of the motor 4 (step 116), whereby it is shifted from the BSFC bottom torque.

Therefore, it is possible to properly allocate the target torque TQECMD of the engine 3 and the target torque TRMCMD of the motor 4 while causing not only the fuel consumption ratio of the engine 3 but also the efficiency of the motor 4 to be reflected thereon. As a consequence, it is possible to improve the fuel economy of the hybrid vehicle V while suppressing the fuel consumption ratio of the engine 3 and loss in the motor 4.

Note that although in the above-described example, the target torque TRMCMD of the motor 4 is preferentially set to the maximum efficiency motor torque TRMMAX (optimum point), and the target torque TRECMD of the engine 3 is shifted from the BSFC bottom torque (optimum point) according to the result, this is not limitative, but the torque may be weighted in advance with respect to the engine 3 and the motor 4, and the both target torques TRECMD and TRMCMD may be shifted from the respective optimum points according to the weighting.

Further, the present invention can also be applied to the above-described hybrid vehicle V' shown in FIG. 10. Also in a case where the control system according to the present invention is applied to the hybrid vehicle V', selection of the travel mode and the speed position is performed similarly to the case of the control system according to the above-described third or fourth embodiment, and hence detailed description thereof is omitted. This makes it possible to similarly obtain the advantageous effects provided by the third or fourth embodiment.

Note that although the transmission mechanism 71 is configured to transmit both the engine motive power and the motor motive power to the drive wheels DW in a state having the speed thereof changed, the transmission mechanism 71 may be configured to transmit only the engine motive power to the drive wheels DW in a state having the speed thereof changed. Alternatively, a transmission mechanism which transmits the engine motive power to the drive wheels DW in a state having the speed thereof changed, and a transmission mechanism which transmits the motor motive power to the drive wheels DW in a state having the speed thereof changed may be provided separately from each other.

Note that the present invention is by no means limited to the third and fourth embodiments described above, but can be practiced in various forms. For example, although in the third and fourth embodiments, the target torque TRECMD of the engine 3 before the shift is set to the BSFC bottom torque, i.e. a torque which makes it possible to obtain the minimum fuel consumption ratio of the engine 3, this is not limitative, but may be set to a torque which makes it possible to obtain the minimum fuel consumption amount of the engine 3. Further, although the output of the motor 4 is limited when the battery temperature TB is not lower than the predetermined temperature, in place of or in combination with this, the output of the motor 4 may be limited when the temperature of the motor 4, detected by a sensor or the like, is not lower than a predetermined temperature set for the motor 4. This makes it possible to suppress a rise in the temperature of the motor 4.

Next, a control system for a hybrid vehicle according to a fifth embodiment of the present invention will be described with reference to FIGS. 20 to 22. The control system according to the fifth embodiment is applied to the hybrid vehicle V described in the first embodiment, and the arrangements of the ECU 2, the various sensors 60 to 66, and so forth are the same as those of the first embodiment. The following description will be given mainly of different points from the first embodiment.

Selection of the speed positions for the engine motive power and the motor motive power and the operation mode will be described. First, the total fuel consumption ratio TSFC used for the selection will be described. The total fuel consumption ratio TSFC is a ratio of a fuel amount to the final traveling energy, assuming that fuel as an energy source of the hybrid vehicle V is converted finally to the traveling energy of the hybrid vehicle V, and therefore, as the value of the total fuel consumption ratio TSFC is smaller, it indicates better fuel economy of the hybrid vehicle V.

When the operation mode is the engine travel mode, the total fuel consumption ratio TSFC is calculated using the amount of fuel supplied to the engine 3 for traveling of the hybrid vehicle V, the efficiency of the engine 3, and the efficiencies of the first and second transmission mechanisms 11 and 31.

Further, when the operation mode is the assist travel mode, the total fuel consumption ratio TSFC is calculated using not only the above-mentioned three parameters but also the past amount of fuel supplied to the engine 3 in the past so as to charge the battery 52 with electric power for assist travel, the discharging efficiency of the battery 52, the driving efficiency of the motor 4, and the efficiencies of the first and second transmission mechanisms 11 and 31.

Furthermore, when the operation mode is the charge travel mode, the total fuel consumption ratio TSFC is calculated using not only the above-mentioned three parameters but also the amount of fuel supplied to the engine 3 for charging by the motor 4, the efficiency of the engine 3, the efficiencies of the first and second transmission mechanisms 11 and 31, the power generation efficiency of the motor 4, the charging efficiency of the battery 52, and a predicted efficiency which is an efficiency to be exhibited when electric power of the battery 52 is converted to the motive power of the motor 4 in the future.

The total fuel consumption ratio TSFC calculated as above reflects not only the fuel consumption ratio of the engine 3 but also the efficiencies of the first and second transmission mechanisms 11 and 31, and further, when the operation mode is the assist travel mode or the charge travel mode, reflects the driving efficiency and power generation efficiency of the motor 4 and the discharging efficiency and charging efficiency of the battery 52.

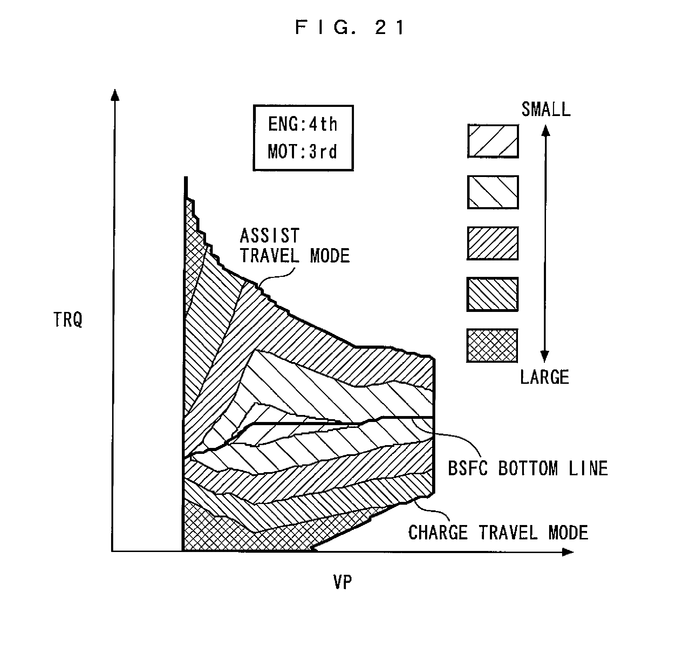

FIGS. 20 and 21 each show a total fuel consumption ratio map used for selection of the speed-changing pattern and the operation mode. The total fuel consumption ratio map shown in the figures is, in actuality, set for each of speed-changing patterns which are each a combination of a speed position for the engine motive power and a speed position for the motor motive power, and is stored in the ECU 2. Out of the speed-changing patterns, FIG. 20 shows an example in which the speed positions for the engine motive power and the motor motive power are both the third speed position, and FIG. 21 shows an example in which the speed position for the engine motive power is the fourth speed position and the speed position for the motor motive power is the third speed position.

As shown in these figures, each total fuel consumption ratio map defines the total fuel consumption ratio TSFC with respect to the vehicle speed VP and the required torque TRQ, and is formed by mapping the total fuel consumption ratio TSFC which is calculated by the above-described method, using parameters of the efficiencies of the engine 3, the motor 4, the first and second transmission mechanisms, and the battery 52, empirically determined in advance. In the total fuel consumption ratio map, a BSFC bottom line connecting values of the BSFC bottom torques is indicated, regions above the BSFC bottom line are those for the assist travel mode, and regions below the same are those for the charge travel mode.

FIG. 22 shows a process for selecting the speed-changing pattern and the operation mode using the above-described total fuel consumption ratio map. The present process is executed by the ECU 2 at predetermined time intervals.

In the present process, first, in a step 201, the total fuel consumption ratios TSFC1 to TSFCn are calculated by searching all of the total fuel consumption ratio maps according to the vehicle speed VP and the required torque TRQ. Next, in a step 202, the minimum value TSFCmin is picked up from the calculated total fuel consumption ratios TSFC1 to TSFCn.

Next, in a step 203, the speed-changing pattern is selected based on the minimum value TSFCmin. More specifically, a total fuel consumption ratio map which defines the minimum value TSFCmin is identified, and a speed-changing pattern associated with the identified total fuel consumption ratio map is selected as the speed-changing pattern.

Next, in a step 204, the operation mode is selected based on the minimum value TSFCmin, followed by terminating the present process. More specifically, when the minimum value TSFCmin is located substantially on the BSFC bottom line in the identified total fuel consumption ratio map, the engine travel mode is selected as the operation mode. Further, when the minimum value TSFCmin is located above the BSFC bottom line, the assist travel mode is selected, whereas when the minimum value TSFCmin is located below the BSFC bottom line, the charge travel mode is selected.

Further, when the required torque TRQ is not larger than the predetermined value during the charge travel mode, the speed positions for the engine motive power and the motor motive power are both set to an odd-number speed position of the first transmission mechanism 11.

Further, when the battery temperature TB which is detected becomes not lower than a predetermined temperature during the assist travel mode, the ECU 2 limits the output of the motor 4 to thereby limit assistance of the engine 3 by the motor 4. In this case, the engine torque is increased such that the amount by which the assistance is limited is compensated for. Further, when the battery temperature TB becomes not lower than the predetermined temperature during the EV travel mode, the ECU 2 inhibits the EV travel mode, and switches the travel mode to the engine travel mode, the charge travel mode, or the assist travel mode. Further, when the travel mode is switched to the assist travel mode, the output of the motor 4 is limited, as mentioned above.

Further, when the detected state of charge SOC of the battery 52 is not larger than the lower limit value SOCL, the operation of the motor 4 is controlled such that the amount of regeneration by the motor 4 is increased in the charge travel mode so as to restore the state of charge SOC. In this case, the engine torque is increased such that an amount by which the regeneration is increased is compensated for.

Further, the ECU 2 predicts a traveling situation of the hybrid vehicle V based on information on a road on which the hybrid vehicle V is traveling and neighborhood roads, stored in the above-mentioned car navigation system 66. Then, the speed-changing pattern is selected according to the predicted traveling situation of the hybrid vehicle V. More specifically, when the hybrid vehicle V is predicted to travel downhill, a speed-changing pattern which makes it possible to obtain the maximum engine torque is selected, whereas when the hybrid vehicle V is predicted to travel uphill, a speed-changing pattern which makes it possible to obtain the maximum charge amount is selected.

As described above, according to the fifth embodiment, a speed-changing pattern which minimizes the total fuel consumption ratio TSFC is selected from all of the speed-changing patterns based on the total fuel consumption ratio map according to the vehicle speed VP and the required torque TRQ. Therefore, it is possible to obtain the minimum total fuel consumption ratio by driving the hybrid vehicle V using the selected speed-changing pattern, which makes it possible to improve the fuel economy of the hybrid vehicle V.

Further, when the operation mode is the charge travel mode, the total fuel consumption ratio TSFC is calculated using the amount of fuel supplied to the engine 3 for charging by the motor 4, the efficiency of the engine 3, the efficiencies of the first and second transmission mechanisms 11 and 31, the power generation efficiency of the motor 4, the charging efficiency of the battery 52, the predicted efficiency to be exhibited when electric power of the battery 52 is converted to the motive power of the motor 4 in the future. Therefore, it is possible to accurately calculate the total fuel consumption ratio TSFC of the hybrid vehicle V while causing these efficiencies to be reflected thereon.

Further, during the charge travel mode, when the required torque TRQ is not larger than a predetermined value TRQL, the speed positions for the engine motive power and the motor motive power are both set to an odd-number speed position of the first transmission mechanism 11, and hence it is possible to reduce the loss of the motive power on the motive power transmission path from the engine 3 to the motor 4 to thereby reduce the influence of the loss of the motive power, which makes it possible to improve the charging efficiency of the battery 52.

Further, since when the detected battery temperature TB is not lower than the predetermined temperature, the output of the motor 4 is limited, it is possible to suppress a rise in the battery temperature TB. Further, when the detected state of charge SOC of the battery 52 is not larger than the lower limit value SOCL, the operation of the motor 4 is controlled such that the amount of regeneration by the motor 4 is increased, which makes it possible to positively restore the state of charge of the storage battery which has become lower than the lower limit value.

Furthermore, since the speed-changing pattern is selected according to the traveling situation of the hybrid vehicle V predicted using the car navigation system 66, when the hybrid vehicle V is predicted to travel downhill, it is possible to select a speed-changing pattern which maximizes the engine torque, whereas when the hybrid vehicle V is predicted to travel uphill, it is possible to select a speed-changing pattern which maximizes the charge amount.

Note that the present invention is by no means limited to the fifth embodiment described above, but can be practiced in various forms. For example, although in the fifth embodiment, the total fuel consumption ratio maps corresponding in number to all of the speed-changing patterns are set, the maps may be integrated by overlaying the maps on each other to thereby reduce the number of maps. Further, the total fuel consumption ratio maps may be corrected according to the torque ripple electric power (predetermined electric power consumed by the motor 4 to cancel torque ripple), the iron loss and the copper loss in the motor 4, the loss in the PDU 51, the loss of the three-phase coils of the stator 4a, and so on, similarly to the second embodiment.

Further, although in the above-described embodiments, the plurality of speed positions of the respective first and second transmission mechanisms 11 and 31 are set to odd-number speed positions and even-number speed positions, this is not limitative, but inversely, they may be set to even-number speed positions and odd-number speed positions. Further, although in the above-described embodiments, as the first and second transmission mechanisms 11 and 31, there are used transmission mechanisms of a type which shares the output shaft 21 for transmitting motive power changed in speed to the drive wheels DW, this is not limitative, but there may be used transmission mechanisms of a type in which output shafts are separately provided. In this case, the first to fourth synchronizing clutches SC1 to SC4 may be provided not on the first input shaft 13 and the second input intermediate shaft 33 but on the output shafts. Furthermore, although in the above-described embodiments, the clutch C and the first and second clutches C1 and C2 are dry multiple-disc clutches, they may be wet multiple-disc clutches or electromagnetic clutches.

Further, although in the above-described embodiments, as the electric motor in the present invention, there is used the motor 4, which is a brushless DC motor, there may be used a suitable electric motor other than this, such as an AC motor, insofar as it is capable of generating electric power. Further, although in the above-described embodiments, the storage battery in the present invention is the battery 52, there may be a suitable storage battery other than this, such as a capacitor, which is capable of being charged and discharged. Further, although in the embodiments, the engine 3, which is a gasoline engine, is employed as an internal combustion engine in the present invention, a diesel engine or an LPG engine may be employed. Further, it is possible to modify details of the construction of the embodiments as required within the spirit and scope of the present invention.

[Industrial Applicability]

The present invention is very useful to cause a hybrid vehicle to efficiently travel to thereby improve fuel economy.

[Reference Signs List]

| V | hybrid vehicle |
| V' | hybrid vehicle |
| DW | drive wheel |
| 1 | control system |
| 2 | ECU |
| 3 | internal combustion engine |
| 3a | crankshaft |
| 4 | electric motor |
| 11 | first transmission mechanism |
| C1 | first clutch |
| 13 | first input shaft |

| 31 | second transmission mechanism |
|---|---|
| 32 | second input shaft |
| C2 | second clutch |
| 51 | PDU |
| 52 | battery |
| 62 | current/voltage sensor |
| 63 | battery temperature sensor |
| 66 | car navigation system |
| 71 | transmission mechanism |
| ENE_eng1 | engine fuel energy |
| ENE_eng2 | engine driving energy |
| Eeng | engine efficiency |
| Etm_d | driving efficiency of transmission mechanism |
| Etm_c | charging efficiency of transmission mechanism |
| Emot_d | motor driving efficiency |
| Emot_c | motor charging efficiency |
| Ebat_cd | charging/discharging efficiency of battery |
| Ehat | predicted efficiency |
| ENE_mot1 | motor charging/discharging energy |
| ENE_mot2 | driving charging energy |
| ENE_chave | past average charge amount |
| TE_eng | engine travel total efficiency |
| TE_ch | charge travel total efficiency |
| TE_asst | assist travel total efficiency |
| TE_ev | EV travel total efficiency |
| TRQ | required torque |
| VP | vehicle speed |
| SOC | state of charge |
| TB | battery temperature |

TRECMD      target torque of engine

TE      total efficiency of hybrid vehicle

TREMAX      maximum efficiency engine torque

TRMCMD      target torque of motor

TRMMAX      maximum efficiency motor torque

TSFC      total fuel consumption ratio

**Claims**

1. A control system for a hybrid vehicle including an internal combustion engine and an electric motor capable of generating electric power, as motive power sources, a storage battery capable of supplying and receiving electric power to and from the electric motor, and a transmission mechanism capable of transmitting motive power of the engine and the electric motor to drive wheels while changing a speed of the motive power, the control system comprising:

> engine driving energy-calculating means for calculating engine driving energy which is energy transmitted from the engine to the drive wheels, using engine efficiency and driving efficiency of the transmission mechanism;
> electric motor driving energy-calculating means for calculating electric motor driving energy which is energy transmitted from the electric motor to the drive wheels, using a past charge amount on which charging efficiency of the storage battery up to the current time point is reflected, charging/discharging efficiency of the storage battery, driving efficiency of the electric motor, and driving efficiency of the transmission mechanism;
> charging energy-calculating means for calculating charging energy which is electric energy charged when charging of the storage battery is executed by converting the motive power of the engine to electric power by the electric motor, using the engine efficiency, charging efficiency of the transmission mechanism, charging efficiency of the electric motor, and predicted efficiency, which is an efficiency to be exhibited when it is predicted that electric power in the storage battery is to be used;
> total efficiency parameter-calculating means for calculating a plurality of total efficiency parameters each indicative of total efficiency of the whole hybrid vehicle using the engine driving energy, the electric motor driving energy, and the charging energy; and
> travel mode-selecting means for selecting a travel mode in which a traveling state parameter indicative of a traveling state of the hybrid vehicle is high, from the plurality of travel modes.

2. The control system according to claim 1, wherein the transmission mechanism has a plurality of speed positions, wherein the plurality of total efficiency parameters are calculated for each of the speed positions of the transmission mechanism,
wherein the plurality of travel modes include an engine travel mode in which the hybrid vehicle is caused to travel by only the motive power of the engine, an EV travel mode in which the hybrid vehicle is caused to travel by only the motive power of the electric motor, an assist travel mode in which the hybrid vehicle is caused to travel by the motive power of the engine and the motive power of the electric motor, and a charge travel mode in which driving of the drive wheels and charging of the storage battery by the electric motor are simultaneously executed by the motive power of the engine, and
wherein said travel mode-selecting means selects one of the engine travel mode, the EV travel mode, the assist travel mode, and the charge travel mode, as the travel mode, according to the traveling state parameter such that the highest value of a plurality of total efficiencies represented respectively by the plurality of total efficiency parameters calculated for each of the speed positions, can be obtained.

3. The control system according to claim 1, wherein the past charge amount is an averaged value of charge amounts calculated up to the current time point using a value obtained by converting an amount of fuel used for charging the storage battery to an amount of electric power, the engine efficiency, the charging efficiency of the transmission mechanism, and the charging efficiency of the electric motor.

4. The control system according to claim 1, wherein the predicted efficiency is calculated using the charging/discharging efficiency of the storage battery, the driving efficiency of the electric motor, and the driving efficiency of the transmission mechanism.

5. A control system for a hybrid vehicle including an internal combustion engine and an electric motor capable of generating electric power, as motive power sources, a storage battery capable of supplying and receiving electric power to and from the electric motor, and a transmission mechanism capable of transmitting motive power of the engine and the electric motor to drive wheels while changing a speed of the motive power using a plurality of speed positions, the control system comprising:

past charge amount memory means for memorizing an averaged value of values each obtained by converting an amount of fuel used, when charging of the storage battery by the electric motor was executed by the motive power of the engine, for the charging of the storage battery, to an amount of electric power, as a past charge amount;
total efficiency parameter-calculating means for calculating a plurality of total efficiency parameters each indicative of total efficiency of the whole hybrid vehicle for each of the speed positions, and calculating a total efficiency parameter of a travel mode in which the drive wheels are driven by the motive power of the electric motor, using the stored past charge amount; and
travel mode-selecting means for selecting a travel mode in a speed position indicating the highest value of a plurality of total efficiencies represented respectively by the plurality of total efficiency parameters calculated for each of the speed positions, according to a traveling state parameter indicative of a traveling state of the hybrid vehicle.

6. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to the drive wheels in a state in which a speed of the motive power is changed in one of a plurality of speed positions, a second transmission mechanism that is capable of receiving motive power from the engine output shaft by a second input shaft, and transmitting the motive power to drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:

past charge amount memory means for memorizing an averaged value of values each obtained by converting an amount of fuel used, when charging of the storage battery by the electric motor was executed by the motive power of the engine, for the charging of the storage battery, to an amount of electric power, as a past charge amount;
total efficiency parameter-calculating means for calculating a plurality of total efficiency parameters each indicative of total efficiency of the whole hybrid vehicle for each of the speed positions of the first transmission mechanism and the second transmission mechanism, and calculating a total efficiency parameter of a travel mode in which the drive wheels are driven by the motive power of the electric motor, using the stored past charge amount; and
travel mode-selecting means for selecting a travel mode in a speed position indicating the highest value of a plurality of total efficiencies represented respectively by the plurality of total efficiency parameters calculated for each of the speed positions, according to a traveling state parameter indicative of a traveling state of the hybrid vehicle.

7. The control system according to any one of claims 1 to 5, further comprising charge amount-detecting means for detecting a charge amount of the storage battery; and
correction means for correcting, when the charge amount is not larger than a predetermined amount, operations of the engine, the electric motor, and the transmission mechanism, such that a time period over which an operation of charging the storage battery by the electric motor is executed is made longer.

8. A method of controlling a hybrid vehicle including an internal combustion engine and an electric motor capable of generating electric power, as motive power sources, a storage battery capable of supplying and receiving electric power to and from the electric motor, and a transmission mechanism capable of transmitting -motive power of the engine and the electric motor to drive wheels while changing a speed of the motive power, the method comprising:

calculating engine driving energy which is energy transmitted from the engine to the drive wheels, using engine efficiency and driving efficiency of the transmission mechanism;

calculating electric motor driving energy which is energy transmitted from the electric motor to the drive wheels, using a past charge amount which is a charge amount on which charging efficiency of the storage battery up to the current time point is reflected, charging/ discharging efficiency of the storage battery, driving efficiency of the electric motor, and driving efficiency of the transmission mechanism;

calculating charging energy which is electric energy charged when charging of the storage battery is executed by converting the motive power of the engine to electric power by the electric motor, using the engine efficiency, charging efficiency of the transmission mechanism, charging efficiency of the electric motor, and predicted efficiency, which is an efficiency to be exhibited when it is predicted that electric power in the storage battery is to be used;

calculating a plurality of total efficiency parameters each indicative of total efficiency of the whole hybrid vehicle using the engine driving energy, the electric motor driving energy, and the charging energy; and

selecting, according to a traveling state parameter indicative of a traveling state of the hybrid vehicle, a travel mode which makes it possible to obtain the highest value of a plurality of total efficiencies represented respectively by the plurality of total efficiency parameters, from the plurality of travel modes.

9. A control system for a hybrid vehicle including an internal combustion engine, an electric motor capable of generating electric power, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:

memory means for memorizing a total fuel consumption map which defines total fuel consumption of the hybrid vehicle for each of the speed positions;

first correction means for correcting the total fuel consumption map according to a difference in motive power transmission efficiency between the plurality of speed positions in at least one of the first and second transmission mechanisms;

second correction means for correcting the total fuel consumption map according to at least one of power generation efficiency of the electric motor to be exhibited when regeneration of electric power by the electric motor, using part of motive power of the engine, is performed, and driving efficiency of the electric motor to be exhibited when assisting of the engine by the electric motor is performed,

wherein a speed position at which the total fuel consumption is minimized is selected from the plurality of speed positions based on the corrected total fuel consumption map.

10. The control system according to claim 9, wherein the electric motor is driven by supplying electric power from a storage battery,

wherein an amount by which assistance of the engine by the electric motor is limited is corrected according to at least one of an amount of electric power which can be supplied from the storage battery to the electric motor and motive power which can be output of the electric motor.

11. The control system according to claim 9, wherein the corrected total fuel consumption map is divided into regions for each speed position, and hysteresis is provided between up-shit use and down-shift use in each of the regions.

12. The control system according to claim 9, wherein in a case where the hybrid vehicle is traveling in a state in which the speed of the motive power of the engine is changed by the second transmission mechanism, when selecting a speed position of the first transmission mechanism, a speed position at which the total fuel consumption is minimized is selected from the plurality of speed positions according to whether or not assistance or regeneration by the electric motor should be performed.

13. The control system according to claim 9, wherein the travel modes of the hybrid vehicle include at least one of a paddle shift mode and a sport mode, and

wherein when at least one of the paddle shift mode and the sport mode is selected as the travel mode, assistance of the engine by the electric motor is performed.

43

**14.** A control system for a hybrid vehicle including an internal combustion engine, an electric motor capable of generating electric power, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism,

wherein speed positions/a speed position of the first and/or second transmission mechanism(s) are/is selected by searching a predetermined map in which total conversion efficiency of the hybrid vehicle from fuel to traveling energy is defined for each of the speed positions, with respect to the traveling state of the hybrid vehicle according to loss in the engine, loss in the electric motor, loss in each speed position of the first and second transmission mechanisms, according to a traveling state of the hybrid vehicle.

**15.** A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:

target driving force-setting means for setting a target driving force of the engine to an optimum point at which fuel consumption of the engine is minimized, based on a speed of the hybrid vehicle and the speed position;
target driving force-shifting means for shifting the target driving force of the engine from the optimum point according to efficiency of the electric motor;
engine control means for controlling an operation of the engine such that the shifted target driving force of the engine can be obtained; and
electric motor control means for controlling an operation of the electric motor to supplement/absorb a difference between a required driving force required for the drive wheels and the shifted target driving force of the engine, by powering/regeneration by the electric motor.

**16.** The control system according to claim 15, wherein when motive power of the engine is being changed by the second transmission mechanism, one of the speed positions of the first transmission mechanism which makes it possible to obtain a highest electric motor-side efficiency is selected as the speed position for the motive power of the electric motor.

**17.** A method of controlling a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the method comprising:

setting a target driving force of the engine to an optimum point at which fuel consumption of the engine is minimized, based on a speed of the hybrid vehicle and a speed position for the engine;
setting a target driving force of the electric motor to an optimum point at which efficiency of the electric motor is maximized, based on the speed of the hybrid vehicle and the speed position of the electric motor;
shifting the target driving force of the engine from the optimum point, based on a required driving force required for the drive wheels and the set target driving force of the electric motor;

controlling an operation of the engine such that the shifted target driving force of the engine can be obtained; and
controlling an operation of the electric motor to supplement/absorb the target driving force of the electric motor by powering/regeneration.

18. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:

memory means for memorizing a total fuel consumption map in which total fuel consumption of the hybrid vehicle is defined for each speed-changing pattern which is a combination of a speed position for motive power of the engine and a speed position for motive power of the electric motor, with respect to a speed of the hybrid vehicle and a required driving force required for the drive wheels; and
speed-changing pattern-selecting means for selecting, based on the total fuel consumption map, a speed-changing pattern which minimizes the total fuel consumption from the plurality of speed-changing patterns, according to the speed of the hybrid vehicle and the required driving force.

19. The control system according to claim 18, wherein the total fuel consumption is calculated using efficiency to be exhibited when the storage battery is charged by regeneration performed by the electric motor using part of the motive power of the engine, and predicted efficiency to be exhibited when electric power charged in the storage battery is converted to the motive power of the electric motor.

20. The control system according to claim 18, wherein in a state in which the first clutch is disengaged, and the second clutch is engaged, the motive power of the second input shaft is transmitted to the first input shaft via the second transmission mechanism and the first transmission mechanism, and
wherein in a state in which the storage battery is being charged by regeneration performed by the electric motor using part of the motive power of the engine, when the required driving force is not larger than a predetermined value, said speed-changing pattern-selecting means selects a speed-changing pattern in which a speed position for the motive power of the engine is a speed position of the first transmission mechanism, from the plurality of speed-changing patterns.

21. A method of controlling a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the method comprising:

memorizing a total fuel consumption map in which total fuel consumption of the hybrid vehicle is defined for each speed-changing pattern which is a combination of a speed position for motive power of the engine and a speed position for motive power of the electric motor, with respect to a speed of the hybrid vehicle and a required driving force required for the drive wheels; and
selecting, based on the total fuel consumption map, a speed-changing pattern which minimizes the total fuel consumption of the hybrid vehicle from the plurality of speed-changing patterns, according to the speed of the hybrid vehicle and the required driving force,
wherein the total fuel consumption memorized in the total fuel consumption map is calculated using efficiency to be exhibited when the storage battery is charged by regeneration performed by the electric motor using part of the motive power of the engine, and efficiency to be exhibited when electric power charged in the storage battery is converted to the motive power of the electric motor,
wherein in a state in which the first clutch is disengaged and also the second clutch is engaged, motive power of the second input shaft is transmitted to the first input shaft via the second transmission mechanism and the first transmission mechanism, and
wherein in a state in which the storage battery is being charged by regeneration performed by the electric motor, when an output of the engine is not larger than a predetermined value, a speed-changing pattern in which the speed of motive power of the engine is changed by the first transmission mechanism is selected from the plurality of speed-changing patterns.

**22.** The control system according to any one of claims 1 to 7, 9, 15, 18, and 19, further comprising:

storage battery temperature-detecting means for detecting a storage battery temperature as a temperature of the storage battery;
electric motor temperature-detecting means for detecting an electric motor temperature as a temperature of the electric motor; and
limiting means for limiting an output of the electric motor being driven when at least one of a condition that the storage battery temperature is not lower than a first predetermined temperature, and a condition that the electric motor temperature is not lower than a second predetermined temperature is satisfied.

**23.** The control system according to any one of claims 1, 2, 5, 6, 9, 15, 18, and 19 wherein the hybrid vehicle is provided with a car navigation system which stores data indicative of information on a road on which the hybrid vehicle is traveling and neighborhood roads,
the control system further comprising prediction means for predicting a traveling situation of the hybrid vehicle, based on data stored in the car navigation system, and
wherein the speed position or the travel mode is selected further according to a predicted traveling situation of the hybrid vehicle.

**24.** The control system according to any one of claims 10, 16, and 20, wherein when a state of charge of the storage battery is not larger than a predetermined value, a forced regeneration mode in which regeneration by the electric motor is forcibly performed is selected.

**25.** The control system according to any one of claims 9, 18, and 21, wherein the total fuel consumption map is further corrected according to electric power consumed by the electric motor in order to cancel torque ripple.

**26.** The control system according to any one of claims 9, 18, and 21, wherein the electric motor has three-phase coils and is driven by electric power supplied from the storage battery connected via an electric circuit, and
wherein the total fuel consumption map is corrected further according to iron loss and copper loss in the electric motor, loss in the electric circuit, and loss in the three-phase coils.

F I G. 1

FIG. 2

F I G. 3

```
              ( TRAVEL CONTROL )
                      │
                      │          S1
                      ▼
              ┌─────────────────┐
              │  CALCULATE TRQ  │
              └─────────────────┘
                      │
                      │          S2
                      ▼
              ┌─────────────────┐
              │ CALCULATE OVERALL│
              │ EFFICIENCY      │
              └─────────────────┘
                      │
                      │          S3
                      ▼
          ┌─────────────────────────┐
          │ DETERMINE SPEED POSITION &│
          │ TRAVEL MODE             │
          └─────────────────────────┘
                      │
                      │          S4
                      ▼
          ┌─────────────────────────┐
          │ EXECUTE OPERATION CONTROL│
          └─────────────────────────┘
                      │
                      ▼
                ( E N D )
```

# F I G. 4

F I G. 5

LARGE

TRQ

TE_asst

TE_ch

OPTIMUM EFFICIENCY LINE

HIGH

VP

HIGH

TE_asst
TE_ch

LOW

F I G. 6

F I G. 7

F I G. 8

```
         ( CALCULATION OF ENE_chave )
                        │
                        ▼            ⌐S10
              ┌──────────────────┐
              │ CALCULATE ENE_eng1│
              └──────────────────┘
                        │
                        ▼            ⌐S11
              ┌──────────────────┐
              │ CALCULATE ENE_mot1│
              └──────────────────┘
                        │
                        ▼            ⌐S12
              ┌──────────────────┐
              │  CALCULATE Eeng   │
              └──────────────────┘
                        │
                        ▼            ⌐S13
              ┌──────────────────┐
              │  CALCULATE Etm_c  │
              └──────────────────┘
                        │
                        ▼            ⌐S14
              ┌──────────────────┐
              │  CALCULATE Emot_c │
              └──────────────────┘
                        │
                        ▼            ⌐S15
              ┌──────────────────┐
              │  CALCULATE ENE_ch │
              └──────────────────┘
                        │
                        ▼            ⌐S16
              ┌──────────────────┐
              │CALCULATE ENE_chave│
              └──────────────────┘
                        │
                        ▼
                  (   E N D   )
```

F I G. 9

```
        ( MAP VALUE UPDATE )
                 │
                 ▼          ⟋S20
        ┌──────────────────────┐
        │ CALCULATE ENE_eng1   │
        └──────────────────────┘
                 │
                 ▼          ⟋S21
        ┌──────────────────────┐
        │ CALCULATE ENE_mot1   │
        └──────────────────────┘
                 │
                 ▼          ⟋S22
         ┌────────────────────┐
         │ CALCULATE Eeng     │
         └────────────────────┘
                 │
                 ▼          ⟋S23
         ┌────────────────────┐
         │ CALCULATE Etm_d    │
         └────────────────────┘
                 │
                 ▼          ⟋S24
         ┌────────────────────┐
         │ READ ENE_chave     │
         └────────────────────┘
                 │
                 ▼          ⟋S25
        ┌──────────────────────┐
        │ CALCULATE Ebat_cd    │
        └──────────────────────┘
                 │
                 ▼          ⟋S26
        ┌──────────────────────┐
        │ CALCULATE Emot_d     │
        └──────────────────────┘
                 │
                 ▼          ⟋S27
        ┌──────────────────────┐
        │ CALCULATE TE_asst    │
        └──────────────────────┘
                 │
                 ▼          ⟋S28
        ┌──────────────────────┐
        │ UPDATE MAP VALUE     │
        └──────────────────────┘
                 │
                 ▼
            (  E N D  )
```

FIG. 10

F I G. 1 1

F I G. 1 2

EP 2 754 596 A1

F I G. 1 3

F I G.   1 4

```
        ( ENGINE/MOTOR CONTROL )
                    |
                    v
        +----------------------+  S101
        |    CALCULATE TRQ     |
        +----------------------+
                    |
                    v
    +--------------------------------+  S102
    |  CALCULATE BSFC BOTTOM TORQUE  |
    +--------------------------------+
                    |
                    v
        +----------------------+  S103
        |   TRECMD←BSFC        |
        |   BOTTOM TORQUE      |
        +----------------------+
                    |
                    v
  +------------------------------------------+  S104
  | CALCULATE ENGINE EFFICIENCY,             |
  | MOTOR EFFICIENCY,                        |
  | TRANSMISSION MECHANISM EFFICIENCIES,     |
  | BATTERY EFFICIENCY                       |
  +------------------------------------------+
                    |
                    v
    +--------------------------------+  S105
    | CALCULATE OVERALL EFFICIENCY TE|
    +--------------------------------+
                    |
                    v
        +----------------------+  S106
        |   CALCULATE TREMAX   |
        +----------------------+
                    |
                    v
        +----------------------+  S107
        |      TRECMD          |
        |    ← TREMAX          |
        +----------------------+
                    |
                    v
        +----------------------+  S108
        |      TRMCMD          |
        |   ← TRQ - TRECMD     |
        +----------------------+
                    |
                    v
    +--------------------------------+  S109
    |   EXECUTE ENGINE CONTROL       |
    +--------------------------------+
                    |
                    v
    +--------------------------------+  S110
    |   EXECUTE MOTOR CONTROL        |
    +--------------------------------+
                    |
                    v
            (  RETURN  )
```

FIG. 15

BSFC BOTTOM LINE

TRE

NE

SMALL

LARGE

FIG. 16

TE

TREMAX   BSFC
         BOTTOM
         TORQUE

TRQ

F I G. 1 7

## FIG. 18

```
        ENGINE/MOTOR  CONTROL

              │
              ▼
      ┌──────────────────┐
      │  CALCULATE  TRQ  │─── S111
      └──────────────────┘
              │
              ▼
      ┌──────────────────┐
      │ CALCULATE  BSFC  │─── S112
      │  BOTTOM  TORQUE  │
      └──────────────────┘
              │
              ▼
      ┌──────────────────┐
      │ TRECMD←BSFC      │─── S113
      │  BOTTOM  TORQUE  │
      └──────────────────┘
              │
              ▼
      ┌──────────────────┐
      │ CALCULATE TRMMAX │─── S114
      └──────────────────┘
              │
              ▼
      ┌──────────────────┐
      │    TRMCMD        │─── S115
      │   ←TRMMAX        │
      └──────────────────┘
              │
              ▼
      ┌──────────────────┐
      │    TRECMD        │─── S116
      │ ←TRQ−TRMCMD      │
      └──────────────────┘
              │
              ▼
   ┌─────────────────────────┐
   │ EXECUTE ENGINE CONTROL  │─── S117
   └─────────────────────────┘
              │
              ▼
   ┌─────────────────────────┐
   │ EXECUTE MOTOR CONTROL   │─── S118
   └─────────────────────────┘
              │
              ▼
          RETURN
```

F I G. 1 9

F I G. 2 0

ENG:3rd
MOT:3rd

SMALL

ASSIST
TRAVEL MODE

TRQ

LARGE

BSFC BOTTOM LINE

CHARGE TRAVEL MODE

VP

F I G. 2 1

F I G.  2 2

```
┌──────────────────────────────────────────────┐
│      SPEED-CHANGING PATTERN SELECTION         │
└──────────────────────────────────────────────┘
                        │
                        ▼                    ╭─S201
┌──────────────────────────────────────────────┐
│  SEARCH ALL TOTAL FUEL                         │
│  CONSUMPTION RATIO MAPS FOR                    │
│  TSFC1 TO TSFCn ACCORDING TO                   │
│  TRQ & VP                                      │
└──────────────────────────────────────────────┘
                        │
                        ▼                    ╭─S202
┌──────────────────────────────────────────────┐
│  TSFCmin←min(TSFC1~TSFCn)                      │
└──────────────────────────────────────────────┘
                        │
                        ▼                    ╭─S203
┌──────────────────────────────────────────────┐
│  SELECT SPEED-CHANGING PATTERN                 │
└──────────────────────────────────────────────┘
                        │
                        ▼                    ╭─S204
┌──────────────────────────────────────────────┐
│  SELECT OPERATION MODE                         │
└──────────────────────────────────────────────┘
                        │
                        ▼
┌──────────────────────────────────────────────┐
│               E N D                            │
└──────────────────────────────────────────────┘
```

**INTERNATIONAL SEARCH REPORT**

| International application No. |
|---|
| PCT/JP2012/072577 |

A. CLASSIFICATION OF SUBJECT MATTER
*B60W10/10*(2012.01)i, *B60K6/48*(2007.10)i, *B60K6/547*(2007.10)i, *B60L11/14*
(2006.01)i, *B60W10/08*(2006.01)i, *B60W20/00*(2006.01)i, *F02D29/02*(2006.01)i

According to International Patent Classification (IPC) or to both national classification and IPC

B. FIELDS SEARCHED

Minimum documentation searched (classification system followed by classification symbols)
B60W10/10, B60K6/48, B60K6/547, B60L11/14, B60W10/08, B60W20/00,
F02D29/02

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-286872 A (Honda Motor Co., Ltd.), 10 October 2003 (10.10.2003), paragraphs [0015] to [0084] (Family: none) | 5-7,19-26 |
| Y | JP 2007-269255 A (Fuji Heavy Industries Ltd.), 18 October 2007 (18.10.2007), paragraphs [0100] to [0101] (Family: none) | 5-7,9-11, 13-26 |
| Y | WO 2011/070848 A1 (Honda Motor Co., Ltd.), 16 June 2011 (16.06.2011), paragraphs [0042] to [0099], [0109]; fig. 1 & JP 2011-121413 A      & JP 2011-121415 A & JP 2011-121414 A | 6,9-11,13-26 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 November, 2012 (26.11.12) | 04 December, 2012 (04.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2012/072577

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-152914 A  (Honda Motor Co., Ltd.), 11 August 2011 (11.08.2011), paragraphs [0086] to [0088] & US 2010/0125020 A1    & EP 2189318 A1 | 20-21,24-26 |
| A | JP 9-98516 A  (Toyota Motor Corp.), 08 April 1997 (08.04.1997), entire text; all drawings & US 5789882 A         & EP 759370 A2 | 1-26 |
| A | JP 2002-135909 A  (Honda Motor Co., Ltd.), 10 May 2002 (10.05.2002), entire text; all drawings (Family: none) | 1-26 |
| A | JP 11-229916 A  (Toyota Motor Corp.), 24 August 1999 (24.08.1999), entire text; all drawings & US 6201312 B1 | 1-26 |

Form PCT/ISA/210 (continuation of second sheet) (July 2009)

## INTERNATIONAL SEARCH REPORT

International application No.

PCT/JP2012/072577

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
See extra sheet.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

International application No.

PCT/JP2012/072577

Continuation of Box No.III of continuation of first sheet(2)

The technical feature common to the invention of claims 1-8 and 22-23, the invention of claims 9-13, 18-21, and 24-26, the invention of claim 14, and the invention of claims 15-17 is "a hybrid vehicle control device comprising: an electric motor capable of generating electric power and an internal combustion engine as a power source; a condenser capable of swapping the electric power with the electric motor; and a speed change mechanism capable of transmitting the power of the internal combustion engine and the electric motor to a drive wheel while changing speed".

However, the above-said technical feature cannot be considered to be a special technical feature, since the technical feature does not make a contribution over the prior art in the light of the contents disclosed in the document 1 (JP 2003-286872 A (Honda Motor Co., Ltd.), 10 October 2003 (10.10.2003), paragraphs [0015] to [0084]) and the document 3 (WO 2011/070848 A1 (Honda Motor Co., Ltd.), 16 June 2011 (16.06.2011), paragraphs [0042] to [0099], fig. 1).

Further, there is no other same or corresponding special technical feature between these inventions.

The following four invention groups are involved in claims.

(Invention 1) the inventions of claims 1-8 and 22-23

The invention related to the use of an overall efficiency parameter.

(Invention 2) the inventions of claims 9-13, 18-21 and 24-26

The invention related to the use of an overall fuel consumption map.

(Invention 3) the invention of claim 14

The invention related to the use of a map in which an overall conversion efficiency is defined for each a change speed level.

(Invention 4) the inventions of claims 15-17

The invention related to replenishment/absorption of a difference between a requested driving force and a shifted target driving force of an internal combustion engine by an electric motor.

Form PCT/ISA/210 (extra sheet) (July 2009)

**EP 2 754 596 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010100251 A
- JP 2009173196 A